# EUROPEAN PATENT APPLICATION

(11) **EP 4 827 092 A1**
(43) Date of publication of application: **21.10.2026**
(21) Application number: 25741642.0
(22) Date of filing: 17.01.2025
(51) Int. Cl.: H04N 19/44

(54) **IMAGE DECODING METHOD AND APPARATUS, AND DEVICE**

(30) Priority: 18.01.2024 CN 202410078143
(71) Applicant: Hangzhou Hikvision Digital Technology Co., Ltd., Hangzhou, Zhejiang 310051 (CN)
(72) Inventor: YE, Zongmiao, Hangzhou, Zhejiang 310051 (CN); CHEN, Fangdong, Hangzhou, Zhejiang 310051 (CN); WU, Xiaoyang, Hangzhou, Zhejiang 310051 (CN)
(74) Representative: Goddar, Heinz J.
(86) International application number: PCT/CN2025/073103
(87) International publication number: WO 2025/153080

(57) **Abstract**

The present application provides an image decoding method and apparatus, and a device. The method comprises: decoding a first code stream corresponding to the current image block to obtain a coefficient hyperparameter feature; determining a probability distribution parameter on the basis of the coefficient hyperparameter feature, and determining a target mean feature on the basis of the coefficient hyperparameter feature; on the basis of the probability distribution parameter, decoding a second code stream corresponding to the current image block to obtain a residual feature; determining a reconstruction feature on the basis of the target mean feature and the residual feature; and inputting the reconstruction feature into a synthetic transformation network to obtain a reconstructed image block corresponding to the current image block, wherein the synthetic transformation network comprises a nonlinear residual network layer, and the nonlinear residual network layer comprises an activation layer and a skip connection structure. The technical solution of the present application can improve the decoding performance.

## Description

### TECHNICAL FIELD

This disclosure relates to the field of encoding and decoding technologies, and in particular, to picture decoding methods and apparatus, and devices.

### BACKGROUND

In order to save space, video pictures are encoded before transmission. Complete video encoding can include prediction, transform, quantization, entropy encoding, filtering, and other processes. The prediction process can include intra prediction and inter prediction. The inter prediction utilizes a temporal correlation of a video to predict pixels of a current picture by using pixels of an adjacent encoded picture, to effectively remove temporal redundancy in the video. The intra prediction utilizes a spatial correlation of a video to predict a current pixel by using pixels of encoded blocks in a current frame picture, to remove spatial redundancy in the video.

With the rapid development of deep learning, deep learning has achieved success in many high-level computer vision problems, such as picture classification, object detection, etc. Deep learning is also gradually being applied in the field of encoding and decoding, that is, a neural network can be used to encode and decode pictures. Although encoding and decoding methods based on neural networks have shown great performance potential, the encoding and decoding methods based on neural networks still have problems such as poor decoding performance and high complexity.

### SUMMARY

In view of this, the present disclosure provides picture decoding methods, decoding apparatus, and decoding device, to improve decoding performance and reduce complexity.

A picture decoding method is provided in this disclosure, which is performed by a decoder. The method includes: decoding a first bitstream corresponding to a current picture block, to obtain a coefficient hyperparameter feature corresponding to the current picture block; determining a probability distribution parameter based on the coefficient hyperparameter feature, and determining a target mean feature corresponding to the current picture block based on the coefficient hyperparameter feature; decoding a second bitstream corresponding to the current picture block based on the probability distribution parameter, to obtain a residual feature corresponding to the current picture block; determining a reconstructed feature corresponding to the current picture block based on the target mean feature and the residual feature; and inputting the reconstructed feature into a synthesis transformation network, to obtain a reconstructed picture block corresponding to the current picture block; where the synthesis transformation network includes a non-linear residual network layer, and the non-linear residual network layer includes at least an activation layer and a skip connection structure. An output feature of the activation layer is less than or equal to an upper threshold, and/or the output feature of the activation layer is greater than or equal to a lower threshold.

In an embodiment, the activation layer performs non-linear adjustment on features by using a target activation function clamped up and down, the target activation function corresponds to the upper threshold and the lower threshold, and the output feature of the activation layer is less than or equal to the upper threshold and greater than or equal to the lower threshold; or the activation layer performs the non-linear adjustment on the features by using a Relu activation function, where the Relu activation function corresponds to the lower threshold, and the output feature of the activation layer is greater than or equal to the lower threshold.

In an embodiment, the non-linear residual network layer sequentially includes the activation layer, a processing layer, and the skip connection structure, and the processing layer includes at least one of: one or more common convolution layers, one or more transposed convolution layers, one or more deformable convolution layers, one or more depthwise separable convolution layers, one or more group convolution layers, one or more dilated convolution layers, and one or more global processing unit layers.

In an embodiment, the determining the target mean feature corresponding to the current picture block based on the coefficient hyperparameter feature includes: inputting the coefficient hyperparameter feature into a mean hyperparameter decoding network to obtain an initial mean feature corresponding to the current picture block, and determining the target mean feature based on the initial mean feature; where the mean hyperparameter decoding network includes an activation layer, and the activation layer performs non-linear adjustment on features by using a target activation function clamped up and down; where the target activation function corresponds to an upper threshold and a lower threshold, and an output feature of the activation layer is less than or equal to the upper threshold and greater than or equal to the lower threshold.

In an embodiment, the determining the target mean feature based on the initial mean feature includes: using the initial mean feature as the target mean feature; or inputting the initial mean feature and an obtained reconstructed feature of the current picture block into a context model to obtain the target mean feature; where the context model includes an activation layer, and the activation layer performs non-linear adjustment on features by using a target activation function clamped down, where the target activation function corresponds to a lower threshold, and an output feature of the activation layer is greater than or equal to the lower threshold.

In an embodiment, the determining the probability distribution parameter and the target mean feature corresponding to the current picture block based on the coefficient hyperparameter feature includes: inputting the coefficient hyperparameter feature into a hyperparameter decoding network to obtain a reference feature corresponding to the current picture block; and inputting the reference feature and an obtained reconstructed feature of the current picture block into a context model, to obtain the probability distribution parameter and the target mean feature corresponding to the current picture block; where the hyperparameter decoding network includes an activation layer, and the activation layer performs non-linear adjustment on features by using a target activation function clamped up and down, where the target activation function corresponds to an upper threshold and a lower threshold, and an output feature of the activation layer is less than or equal to the upper threshold and greater than or equal to the lower threshold; and/or the context model includes an activation layer, and the activation layer performs non-linear adjustment on features by using a target activation function clamped up and down, where the target activation function corresponds to an upper threshold and a lower threshold, and an output feature of the activation layer is less than or equal to the upper threshold and greater than or equal to the lower threshold.

In an embodiment, the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold.

In an embodiment, in response to the upper threshold being learned adaptively, a same upper threshold is learned for all channels of the activation layer, or an upper threshold is separately learned for each channel of the activation layer, where different channels correspond to the same upper threshold or different upper thresholds; and in response to the lower threshold being learned adaptively, a same lower threshold is learned for all channels of the activation layer, or a lower threshold is separately learned for each channel of the activation layer, where different channels correspond to the same lower threshold or different lower thresholds.

A picture decoding method is provided in this disclosure, which is performed by a decoder. The method includes: decoding a first bitstream corresponding to a current picture block, to obtain a coefficient hyperparameter feature corresponding to the current picture block; inputting the coefficient hyperparameter feature into a probability hyperparameter decoding network to obtain a probability distribution parameter, and decoding a second bitstream corresponding to the current picture block based on the probability distribution parameter, to obtain a residual feature corresponding to the current picture block; inputting the coefficient hyperparameter feature into a mean hyperparameter decoding network to obtain an initial mean feature corresponding to the current picture block, and determining a target mean feature corresponding to the current picture block based on the initial mean feature; determining a reconstructed feature corresponding to the current picture block based on the target mean feature and the residual feature; and determining a reconstructed picture block corresponding to the current picture block based on the reconstructed feature; where the probability hyperparameter decoding network includes an activation layer, and an output feature of the activation layer is less than or equal to an upper threshold, and/or the output feature of the activation layer is greater than or equal to a lower threshold; and/or the mean hyperparameter decoding network includes an activation layer, and an output feature of the activation layer is less than or equal to an upper threshold, and/or the output feature of the activation layer is greater than or equal to a lower threshold.

In an embodiment, the activation layer of the probability hyperparameter decoding network and/or the activation layer of the mean hyperparameter decoding network perform non-linear adjustment on features by using a target activation function clamped up and down; the target activation function corresponds to an upper threshold and a lower threshold, the output feature of the activation layer is less than or equal to the upper threshold and greater than or equal to the lower threshold; where the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold; where in response to the upper threshold being learned adaptively, a same upper threshold is learned for all channels of the activation layer, or an upper threshold is separately learned for each channel of the activation layer, where different channels correspond to the same upper threshold or different upper thresholds; and in response to the lower threshold being learned adaptively, a same lower threshold is learned for all channels of the activation layer, or a lower threshold is separately learned for each channel of the activation layer, where different channels correspond to the same lower threshold or different lower thresholds.

A picture decoding method performed by a decoder is provided in this disclosure. The method includes: decoding a first bitstream corresponding to a current picture block, to obtain a coefficient hyperparameter feature corresponding to the current picture block; inputting the coefficient hyperparameter feature into a hyperparameter decoding network to obtain a reference feature corresponding to the current picture block; inputting the reference feature and the obtained reconstructed feature of the current picture block into a context model to obtain a probability distribution parameter and a target mean feature corresponding to the current picture block; decoding a second bitstream corresponding to the current picture block based on the probability distribution parameter, to obtain a residual feature corresponding to the current picture block; determining the reconstructed feature based on the target mean feature and the residual feature; determining a reconstructed picture block corresponding to the current picture block based on the reconstructed feature; where the hyperparameter decoding network includes an activation layer; an output feature of the activation layer is less than or equal to an upper threshold, and/or the output feature of the activation layer is greater than or equal to a lower threshold; and/or the context model includes an activation layer, an output feature of the activation layer is less than or equal to an upper threshold, and/or the output feature of the activation layer is greater than or equal to a lower threshold.

A picture decoding method performed by a decoder is provided in this disclosure. The method includes: decoding a first bitstream corresponding to a current picture block, to obtain a coefficient hyperparameter feature corresponding to the current picture block; determining a probability distribution parameter based on the coefficient hyperparameter feature, and decoding a second bitstream corresponding to the current picture block based on the probability distribution parameter, to obtain a residual feature corresponding to the current picture block; inputting the coefficient hyperparameter feature into a mean hyperparameter decoding network, to obtain an initial mean feature corresponding to the current picture block, and determining a target mean feature corresponding to the current picture block based on the initial mean feature, where the mean hyperparameter decoding network sequentially includes: a first processing layer, an upsampling layer configured to perform an upsampling operation, a clipping layer, and a second processing layer, where an output feature of the second processing layer is used as the initial mean feature; determining a reconstructed feature corresponding to the current picture block based on the target mean feature and the residual feature; and determining a reconstructed picture block corresponding to the current picture block based on the reconstructed feature.

In an embodiment, the first processing layer does not include an upsampling layer configured to perform an upsampling operation, and the first processing layer includes at least one of: one or more common convolution layers, one or more transposed convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, and one or more activation layers using a LeakyRelu activation function; where any skip connections exist between layers of the first processing layer.

In an embodiment, the second processing layer includes at least one of: one or more common convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, and one or more activation layers using a LeakyRelu activation function; where any skip connections exist between layers of the second processing layer.

A picture decoding method is provided in this disclosure. The method includes: obtaining a coefficient hyperparameter feature corresponding to a current picture block; determining a target mean feature corresponding to the current picture block based on the coefficient hyperparameter feature; determining a reconstructed feature corresponding to the current picture block based on the target mean feature and the residual feature corresponding to the current picture block; and inputting the reconstructed feature into a synthesis transformation network, to obtain a reconstructed picture block corresponding to the current picture block; where an activation layer included in the synthesis transformation network performs non-linear adjustment on features by using a target activation function clamped up and down, where the target activation function corresponds to a fixed upper threshold and a fixed lower threshold, and an output feature of the activation layer is less than or equal to the fixed upper threshold, and the output feature of the activation layer is greater than or equal to the fixed lower threshold.

In an embodiment, the synthesis transformation network includes a non-linear residual network layer, and the non-linear residual network layer includes at least an activation layer and a skip connection structure.

In an embodiment, the non-linear residual network layer sequentially includes the activation layer, a processing layer and the skip connection structure; where in response to one activation layer existing and the processing layer including a plurality of network layers, all the network layers are located behind the activation layer.

In an embodiment, the fixed upper threshold is 6, and the fixed lower threshold is 0.

In an embodiment, the synthesis transformation network includes a residual ResAU layer, and the ResAU layer is used as the non-linear residual network layer; where the ResAU layer sequentially includes: an activation layer, a group convolution layer, and a convolution layer; where an input feature of the ResAU layer is connected to an output feature of the convolution layer; where the input feature of the ResAU layer sequentially passes through the activation layer, the group convolution layer, and the convolution layer, to obtain a convolved feature; and a feature multiplication operation and a feature addition operation are sequentially performed on the input feature of the ResAU layer and the convolved feature, to obtain an output feature of the ResAU layer.

In an embodiment, in response to the synthesis transformation network including a low-complexity synthesis transformation network, the low-complexity synthesis transformation network sequentially includes: a Lightweight Residual Block (LRB) layer, a convolution layer, an upsampling Pixshuffle layer, a ResAU layer, a clipping Crop layer, a convolution layer, a Pixshuffle layer, a Crop layer, a ResAU layer, a convolution layer, a ResAU layer, a convolution layer, a Pixshuffle layer, and a Crop layer; in response to the synthesis transformation network including a medium-complexity synthesis transformation network, the medium-complexity synthesis transformation network sequentially includes: an LRB layer, a transposed convolution layer, an ResAU layer, a Crop layer, a transposed convolution layer, a Crop layer, an ResAU layer, a convolution layer, an ResAU layer, a convolution layer, a Pixshuffle layer, and a Crop layer; in response to the synthesis transformation network including a high-complexity synthesis transformation network, the high-complexity synthesis transformation network sequentially includes: a Residual Block (RB) layer, a transposed convolution layer, a ResAU layer, a Crop layer, a transposed convolution layer, a Convolution-base Attention Block (CAB) layer, a Crop layer, a ResAU layer, a convolution layer, a Pixshuffle layer, a Transformer-based attention block (TAM) layer, a Crop layer, a ResAU layer, a transposed convolution layer, and a Crop layer.

A picture decoding method is provided in this disclosure. The method includes: obtaining a coefficient hyperparameter feature corresponding to a current picture block; inputting the coefficient hyperparameter feature into a mean hyperparameter decoding network to obtain an initial mean feature corresponding to the current picture block, and determining a target mean feature corresponding to the current picture block based on the initial mean feature; determining a reconstructed feature corresponding to the current picture block based on the target mean feature and a residual feature corresponding to the current picture block; and determining a reconstructed picture block corresponding to the current picture block based on the reconstructed feature; where an activation layer included in the mean hyperparameter decoding network performs non-linear adjustment on features by using a target activation function clamped up and down, where the target activation function corresponds to a fixed upper threshold and a fixed lower threshold, and an output feature of the activation layer is less than or equal to the fixed upper threshold, and the output feature of the activation layer is greater than or equal to the fixed lower threshold.

In an embodiment, the obtaining the coefficient hyperparameter feature corresponding to the current picture block includes: decoding a first bitstream corresponding to the current picture block, to obtain a coefficient hyperparameter feature corresponding to the current picture block; before the determining the reconstructed feature corresponding to the current picture block based on the target mean feature and the residual feature corresponding to the current picture block, the method further includes: determining a probability distribution parameter based on the coefficient hyperparameter feature, and decoding a second bitstream corresponding to the current picture block based on the probability distribution parameter, to obtain the residual feature corresponding to the current picture block.

In an embodiment, the fixed upper threshold is 6, and the fixed lower threshold is 0.

In an embodiment, the mean hyperparameter decoding network includes: at least one convolution layer, at least one activation layer, a transposed convolution layer, and a clipping Crop layer.

In an embodiment, the mean hyperparameter decoding network sequentially includes: a convolution layer, a transposed convolution layer, a Crop layer, an activation layer, a convolution layer, an activation layer, and a convolution layer.

In an embodiment, the target activation function is a Relu6 activation function.

A picture decoding method is provided in this disclosure. The method includes: obtaining a coefficient hyperparameter feature corresponding to a current picture block; inputting the coefficient hyperparameter feature into a mean hyperparameter decoding network to obtain an initial mean feature corresponding to the current picture block, and determining a target mean feature corresponding to the current picture block based on the initial mean feature; determining a reconstructed feature corresponding to the current picture block based on the target mean feature and a residual feature corresponding to the current picture block; and inputting the reconstructed feature into a synthesis transformation network, to obtain a reconstructed picture block corresponding to the current picture block; where an activation layer included in the mean hyperparameter decoding network and an activation layer included in the synthesis transformation network perform non-linear adjustment on features by using a target activation function clamped up and down, where the target activation function corresponds to a fixed upper threshold and a fixed lower threshold, and an output feature of the activation layer is less than or equal to the fixed upper threshold, and the output feature of the activation layer is greater than or equal to the fixed lower threshold.

In an embodiment, the synthesis transformation network includes a non-linear residual network layer, and the non-linear residual network layer sequentially includes an activation layer, a processing layer and a skip connection structure; where in response to one activation layer existing and the processing layer including a plurality of network layers, all the network layers are located behind the activation layer.

In an embodiment, the synthesis transformation network includes a residual ResAU layer, and the ResAU layer is used as the non-linear residual network layer; where the ResAU layer sequentially includes: an activation layer, a group convolution layer, and a convolution layer; where an input feature of the ResAU layer is connected to an output feature of the convolution layer; where the input feature of the ResAU layer sequentially passes through the activation layer, the group convolution layer, and the convolution layer, to obtain a convolved feature; and a feature multiplication operation and a feature addition operation are sequentially performed on the input feature of the ResAU layer and the convolved feature, to obtain an output feature of the ResAU layer.

In an embodiment, in response to the synthesis transformation network including a low-complexity synthesis transformation network, the low-complexity synthesis transformation network sequentially includes: a Lightweight Residual Block (LRB) layer, a convolution layer, an upsampling Pixshuffle layer, a ResAU layer, a clipping Crop layer, a convolution layer, a Pixshuffle layer, a Crop layer, a ResAU layer, a convolution layer, a ResAU layer, a convolution layer, a Pixshuffle layer, and a Crop layer; in response to the synthesis transformation network including a medium-complexity synthesis transformation network, the medium-complexity synthesis transformation network sequentially includes: an LRB layer, a transposed convolution layer, an ResAU layer, a Crop layer, a transposed convolution layer, a Crop layer, an ResAU layer, a convolution layer, an ResAU layer, a convolution layer, a Pixshuffle layer, and a Crop layer; in response to the synthesis transformation network including a high-complexity synthesis transformation network, the high-complexity synthesis transformation network sequentially includes: a Residual Block (RB) layer, a transposed convolution layer, a ResAU layer, a Crop layer, a transposed convolution layer, a Convolution-base Attention Block (CAB) layer, a Crop layer, a ResAU layer, a convolution layer, a Pixshuffle layer, a Transformer-based attention block (TAM) layer, a Crop layer, a ResAU layer, a transposed convolution layer, and a Crop layer.

In an embodiment, the mean hyperparameter decoding network includes: at least one convolution layer, at least one activation layer, a transposed convolution layer, and a clipping Crop layer.

In an embodiment, the mean hyperparameter decoding network sequentially includes: a convolution layer, a transposed convolution layer, a Crop layer, an activation layer, a convolution layer, an activation layer, and a convolution layer.

A picture decoding apparatus, applied to a decoder, is provided in this disclosure. The apparatus includes: a decoding module, configured to decode a first bitstream corresponding to a current picture block, to obtain a coefficient hyperparameter feature corresponding to the current picture block; determine a probability distribution parameter based on the coefficient hyperparameter feature, and decode a second bitstream corresponding to the current picture block based on the probability distribution parameter, to obtain a residual feature corresponding to the current picture block; a determining module, configured to determine a target mean feature corresponding to the current picture block based on the coefficient hyperparameter feature; determine a reconstructed feature corresponding to the current picture block based on the target mean feature and the residual feature; and an obtaining module, configured to input the reconstructed feature into a synthesis transformation network to obtain a reconstructed picture block corresponding to the current picture block, where the synthesis transformation network includes a non-linear residual network layer, the non-linear residual network layer includes at least an activation layer and a skip connection structure, and an output feature of the activation layer is less than or equal to an upper threshold, and/or the output feature of the activation layer is greater than or equal to a lower threshold.

A picture decoding apparatus, applied to a decoder, is provided in this disclosure. The apparatus includes: a decoding module, configured to decode a first bitstream corresponding to a current picture block, to obtain a coefficient hyperparameter feature corresponding to the current picture block; input the coefficient hyperparameter feature into a probability hyperparameter decoding network to obtain a probability distribution parameter, and decode a second bitstream corresponding to the current picture block based on the probability distribution parameter, to obtain a residual feature corresponding to the current picture block; a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and the residual feature; and an obtaining module, configured to determine a reconstructed picture block corresponding to the current picture block based on the reconstructed feature; where the probability hyperparameter decoding network includes an activation layer, and an output feature of the activation layer is less than or equal to an upper threshold, and/or the output feature of the activation layer is greater than or equal to a lower threshold; and/or the mean hyperparameter decoding network includes an activation layer, and an output feature of the activation layer is less than or equal to an upper threshold, and/or the output feature of the activation layer is greater than or equal to a lower threshold.

A picture decoding apparatus, applied to a decoder, is provided in this disclosure. The apparatus includes: a decoding module, configured to decode a first bitstream corresponding to a current picture block, to obtain a coefficient hyperparameter feature corresponding to the current picture block; and a determining module, configured to input the coefficient hyperparameter feature into a hyperparameter decoding network to obtain a reference feature corresponding to the current picture block; and input the reference feature and the obtained reconstructed feature of the current picture block into a context model to obtain a probability distribution parameter and a target mean feature corresponding to the current picture block; where the decoding module is further configured to decode a second bitstream corresponding to the current picture block based on the probability distribution parameter, to obtain a residual feature corresponding to the current picture block; the determining module is further configured to determine the reconstructed feature based on the target mean feature and the residual feature; The apparatus further includes an obtaining module, configured to determine a reconstructed picture block corresponding to the current picture block based on the reconstructed feature; where the hyperparameter decoding network includes an activation layer; an output feature of the activation layer is less than or equal to an upper threshold, and/or the output feature of the activation layer is greater than or equal to a lower threshold; and/or the context model includes an activation layer, an output feature of the activation layer is less than or equal to an upper threshold, and/or the output feature of the activation layer is greater than or equal to a lower threshold.

A picture decoding apparatus, applied to a decoder, is provided in this disclosure. The apparatus includes: a decoding module, configured to decode a first bitstream corresponding to a current picture block, to obtain a coefficient hyperparameter feature corresponding to the current picture block; determine a probability distribution parameter based on the coefficient hyperparameter feature, and decode a second bitstream corresponding to the current picture block based on the probability distribution parameter, to obtain a residual feature corresponding to the current picture block; a determining module, configured to input the coefficient hyperparameter feature into a mean hyperparameter decoding network, to obtain an initial mean feature corresponding to the current picture block, and determine a target mean feature corresponding to the current picture block based on the initial mean feature, where the mean hyperparameter decoding network sequentially includes: a first processing layer, an upsampling layer configured to perform an upsampling operation, a clipping layer, and a second processing layer, where an output feature of the second processing layer is used as the initial mean feature; and determine a reconstructed feature corresponding to the current picture block based on the target mean feature and the residual feature; and an obtaining module, configured to determine a reconstructed picture block corresponding to the current picture block based on the reconstructed feature.

A picture decoding apparatus is provided in this disclosure. The apparatus includes: a decoding module, configured to obtain a coefficient hyperparameter feature corresponding to a current picture block; a determining module, configured to determine a target mean feature corresponding to the current picture block based on the coefficient hyperparameter feature; and determine a reconstructed feature corresponding to the current picture block based on the target mean feature and a residual feature corresponding to the current picture block; and an obtaining module, configured to input the reconstructed feature into a synthesis transformation network, to obtain a reconstructed picture block corresponding to the current picture block; where an activation layer included in the synthesis transformation network performs non-linear adjustment on features by using a target activation function clamped up and down, where the target activation function corresponds to a fixed upper threshold and a fixed lower threshold, and an output feature of the activation layer is less than or equal to the fixed upper threshold, and the output feature of the activation layer is greater than or equal to the fixed lower threshold.

A picture decoding apparatus is provided in this disclosure. The apparatus includes: a decoding module, configured to obtain a coefficient hyperparameter feature corresponding to a current picture block; a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and a residual feature corresponding to the current picture block; and an obtaining module, configured to determine a reconstructed picture block corresponding to the current picture block based on the reconstructed feature; where an activation layer included in the mean hyperparameter decoding network performs non-linear adjustment on features by using a target activation function clamped up and down, where the target activation function corresponds to a fixed upper threshold and a fixed lower threshold, and an output feature of the activation layer is less than or equal to the fixed upper threshold, and the output feature of the activation layer is greater than or equal to the fixed lower threshold.

A picture decoding apparatus is provided in this disclosure. The apparatus includes: a decoding module, configured to obtain a coefficient hyperparameter feature corresponding to a current picture block; a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and a residual feature corresponding to the current picture block; and an obtaining module, configured to input the reconstructed feature into a synthesis transformation network, to obtain a reconstructed picture block corresponding to the current picture block; where an activation layer included in the mean hyperparameter decoding network and an activation layer included in the synthesis transformation network perform non-linear adjustment on features by using a target activation function clamped up and down, where the target activation function corresponds to a fixed upper threshold and a fixed lower threshold, and an output feature of the activation layer is less than or equal to the fixed upper threshold, and the output feature of the activation layer is greater than or equal to the fixed lower threshold.

The present disclosure provides a decoding device, including one or more processors and a machine-readable storage medium, where the machine-readable storage medium stores machine-executable instructions executable by the one or more processors; the one or more processors are configured to execute the machine-executable instructions to implement the above mentioned decoding methods.

The present disclosure provides an electronic device, including one or more processors and a machine-readable storage medium, where the machine-readable storage medium stores machine-executable instructions executable by the one or more processors; the one or more processors are configured to execute the machine-executable instructions to implement the above mentioned decoding methods.

The present disclosure provides a machine-readable storage medium, storing a plurality of computer instructions, and when the computer instructions are executed by one or more processors, the above mentioned decoding methods are implemented.

The present disclosure provides a computer program, where the computer program, when executed by one or more processors, implements the above mentioned decoding methods.

It can be learned from the above technical solutions that, in embodiments of this disclosure, an end-to-end video picture compression method is provided, to implement video picture decoding based on a neural network. The activation function is optimized, and the non-linear adjustment is performed on features by using the target activation function clamped up and down, thereby reducing complexity of the activation function, and further reducing complexity of the neural network. The target activation function can improve the robustness of the neural network and reduce the phenomenon of decoding artifacts of the neural network on high-frequency pictures. Therefore, while maintaining low complexity, the neural network effectively ensures the quality of the reconstructed picture block, improves the quality of the reconstructed picture, achieves the purpose of improving the decoding performance, and reduces the complexity. By optimizing the mean hyperparameter decoding network, the complexity of the neural network is greatly reduced, and the performance of the neural network is kept unchanged, thereby achieving the purpose of improving the decoding performance and reducing the complexity.

### BRIEF DESCRIPTION OF DRAWINGS

FIG. 1 is a schematic diagram of a three-dimensional feature matrix according to an implementation of this disclosure.
FIG. 2 is a schematic flowchart of a decoding method according to an implementation of this disclosure.
FIG. 3 is a schematic flowchart of an encoding method according to an implementation of this disclosure.
FIG. 4A to FIG. 4D are schematic diagrams of an encoding and decoding framework according to an implementation of this disclosure.
FIG. 5A is a schematic diagram of a probability hyperparameter decoding network according to an implementation of this disclosure.
FIG. 5B is a schematic diagram of a Relu activation function according to an implementation of this disclosure.
FIG. 5C is a schematic diagram of a probability hyperparameter decoding network according to an implementation of this disclosure.
FIG. 5D is a schematic diagram of a Relu6 activation function according to an implementation of this disclosure.
FIG. 5E is a schematic diagram of an activation function according to an implementation of this disclosure.
FIG. 6A and FIG. 6B are schematic diagrams of a mean hyperparameter decoding network according to an implementation of this disclosure.
FIG. 6C and FIG. 6D are schematic diagrams of a context model according to an implementation of this disclosure.
FIG. 7A to FIG. 7I are schematic diagrams of a synthesis transformation network according to an implementation of this disclosure.
FIG. 8A is a schematic diagram of a ResAU layer according to an implementation of this disclosure.
FIG. 8B is a schematic diagram of a LeakyRelu activation function according to an implementation of this disclosure.
FIG. 8C to FIG. 8H are schematic diagrams of a ResAU layer according to an implementation of this disclosure.
FIG. 9A to FIG.9C are schematic diagrams of an upsampling operation according to an implementation of this disclosure.
FIG. 9D is a schematic diagram of a mean hyperparameter decoding network according to an implementation of this disclosure.
FIG. 10A to FIG. 10F are schematic diagrams of a convolution operation according to an implementation of this disclosure.
FIG. 11A is a diagram of a hardware structure of a decoding device according to an implementation of this disclosure.
FIG. 11B is a diagram of a hardware structure of an encoding device according to an implementation of this disclosure.

### DETAILED DESCRIPTION

Terms used in embodiments of this disclosure are merely intended to describe specific embodiments, but are not intended to limit this disclosure. The singular forms "a", "said", and "the" used in the embodiments and claims of this disclosure are also intended to include plural forms, unless the context clearly indicates other meanings. It should also be understood that the term "and/or" used herein refers to any or all possible combinations including one or more associated listed items. It should be understood that, although the terms first, second, third, and the like may be used in the embodiments of this disclosure to describe various information, the information should not be limited to these terms. These terms are only used to distinguish the same type of information from each other. For example, without departing from the scope of the embodiments of this disclosure, first information may also be referred to as second information, and similarly, second information may also be referred to as first information, depending on the context. In addition, the word "if" used may be interpreted as "when ...", or "upon ...", or "in response to determining".

Embodiments of this disclosure provide decoding methods, apparatus, and device thereof, which may involve the following concepts.

Entropy encoding: Entropy encoding refers to encoding that, according to the principles of entropy, does not lose any information during a coding process, and information entropy represents an average amount of information (a measure of uncertainty) of a source. The encoding manner of the entropy encoding may include but is not limited to Shannon coding, Huffman coding, and arithmetic coding.

Neural Network (NN): the neural network refers to an artificial neural network, and the neural network is an operation model and includes a large quantity of nodes (or referred to as neurons) connected to each other. In a neural network, neurons (often referred to as processing units) may represent different objects, such as features, letters, concepts, or some meaningful abstract patterns. Types of processing units in a neural network may be classified into three types: an input unit, an output unit, and a hidden unit. The input unit receives signals and data of the external world; the output unit outputs a processing result; and the hidden unit is a unit that is located between the input unit and the output unit and cannot be observed from outside the system. The connection weights between neurons reflect the connection strength between units, and the representation and processing of information are embodied in the connection relationship of these processing units. A neural network is a non-programmed and brain-like style information processing method, and the essence of the neural network is to obtain a parallel distributed information processing function through the transform and dynamic behavior of the neural network, and imitate the information processing function of the human brain nervous system to different degrees and layers. In the field of video processing, common neural networks may include but are not limited to: a Convolutional Neural Network (CNN), a Recurrent Neural Network (RNN), a fully connected network, and the like.

Convolutional Neural Network (CNN): Convolutional neural network is a feedforward neural network, which is one of the extremely representative network structures in the deep learning technology, and the artificial neurons of the CNN can respond to surrounding units within a part of the coverage range, and has excellent performance for large-scale picture processing. A basic structure of the convolutional neural network includes two layers. One layer is a feature extraction layer (also referred to as a convolution layer), where an input of each neuron is connected to a local receptive field of a previous layer, and a local feature is extracted. Once the local feature is extracted, the positional relationship between the local feature and other features is also determined. The second layer is a feature mapping layer (also referred to as an activation layer), where each computation layer of the neural network includes a plurality of feature maps, each feature map is a plane, and weights of all neurons on the plane are equal. The feature mapping structure may use a Sigmoid function, a Rectified Linear Unit (ReLU) function, a Leake-ReLU function, a Parametric Rectified Linear Unit (PReLU) function, a Generalized Divisive Normalization (GDN) function, and the like as the activation function of the convolutional neural network. In addition, since neurons on one mapping plane share weights, the number of network free parameters is reduced.

Exemplarily, one of the advantages of the convolutional neural network compared with picture processing algorithms is that the complex early preprocessing procedure (extracting artificial features, etc.) of pictures is avoided, raw pictures can be directly input for end-to-end learning. One of the advantages of the convolutional neural network compared with a common neural network is that the common neural network is fully connected, that is, the neurons from the input layer to the hidden layer are all connected, which will lead to a huge number of parameters, making the network training time-consuming and even difficult to train, while the convolutional neural network avoids this difficulty through local connection, weight sharing and other methods.

Deconvolution layer: the deconvolution layer is also referred to as a transposed convolution layer, and working processes of the deconvolution layer and the convolution layer are similar, and a main difference lies in that the deconvolution layer is capable of performing padding, so that the output is greater than the input (or may remain the same). If stride is 1, it indicates that the output size is equal to the input size; if stride is N, it indicates that the width of the output feature is N times the width of the input feature, and the height of the output feature is N times the height of the input feature.

Generalization Ability: generalization ability refers to the adaptability of machine learning algorithms to fresh samples, and the purpose of learning is to learn a rule hidden behind data, so that for data other than a learning set with the same rule, a trained network can also give an appropriate output, and this ability can be called the generalization ability.

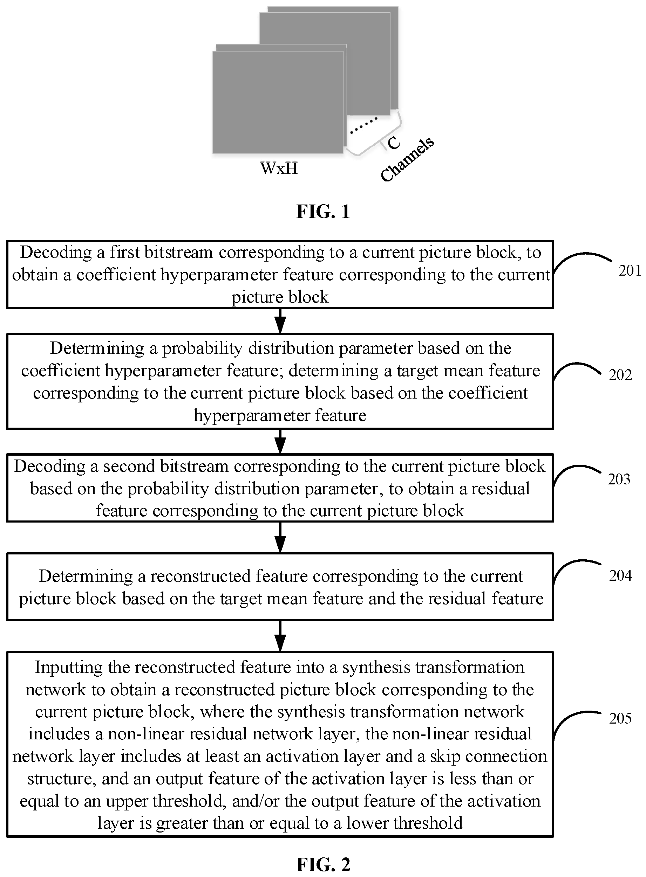

Feature: feature in this disclosure is a three-dimensional feature matrix or tensor of C*W*H. Referring to FIG. 1, which is a schematic diagram of a three-dimensional feature matrix, where in the three-dimensional feature matrix, C represents a quantity of channels, H represents a feature height, and W represents a feature width. The three-dimensional feature matrix may be an input of the neural network, or may be an output of the neural network.

Rate-Distortion Optimized: there are two indexes for evaluating encoding efficiency: a bit rate and a Peak Signal to Noise Ratio (PSNR), where a smaller bit stream indicates a higher compression rate, and a larger PSNR indicates better quality of a reconstructed picture. During mode selection, the discrimination formula is essentially a comprehensive evaluation of the two. For example, the cost corresponding to the mode: J(mode)=D+λ*R, where D represents a Distortion, and may be usually measured by using a sum-square error (SSE) indicator, where the SSE indicates a mean square sum of differences between a reconstructed picture block and a raw picture, and in order to implement cost consideration, the D may also be measured by using a Sum of absolute Difference (SAD) indicator, where the SAD indicates a sum of absolute values of differences between the reconstructed picture block and the raw picture; λ indicates a Lagrange multiplier, and R is an actual quantity of bits required for picture block encoding in this mode, including a sum of bits required for encoding mode information, motion information, a residual, and the like. During mode selection, if a comparison decision is made on an encoding mode by using the rate-distortion optimized, optimal encoding performance can usually be ensured.

For each module of the encoder, a very large number of encoding tools are provided, and each tool often has multiple modes. For different video sequences, encoding tools that can obtain optimal encoding performance are often different. Therefore, during the encoding process, the Rate-Distortion Optimize (RDO) is usually used to compare the encoding performance of different tools or modes to select the best mode. After the optimal tool or mode is determined, the decision information of the tool or mode is transmitted by encoding the flag information in the bitstream. Although this method brings high encoding complexity, an optimal mode combination may be adaptively selected for different content, to obtain optimal encoding performance. The decoder may obtain the related mode information by directly parsing the flag information, which has little impact on complexity.

The general framework of end-to-end picture encoding and decoding mainly includes a feature main information part and a hyper prior side information part, where the feature main information part includes an analysis network, quantization, normal entropy encoding, normal entropy decoding, and a synthesis network, and the hyper prior side information part includes a hyper prior analysis network, quantization, factored entropy encoding, factored entropy decoding, and a hyper prior synthesis network. A picture component is respectively compressed and encoded and reconstructed by the analysis network and the synthesis network of the feature main information part; the hyper prior side information part is mainly used to model the probability of the feature main information and guide the entropy encoding and decoding of the feature main information. In the general framework of end-to-end picture encoding and decoding, there are problems that a mean hyperparameter decoding network performs upsampling first and then performs convolution processing, resulting in relatively high complexity, and hardware complexity of a LeakyRelu function of a non-linear residual network layer in a synthesis transformation network is relatively high.

In view of the above findings, embodiments of the present disclosure provide a feature cropping and network simplification technology for video picture decoding. For the non-linear residual network layer of the synthesis transformation network, an activation function clamped up and down (used to replace the LeakyRelu function) can be used to perform non-linear adjustment on features, thereby solving the problem of high hardware complexity of the LeakyRelu function. For the mean hyperparameter decoding network, convolution processing may be performed first and then upsampling is performed, to solve the problem of relatively high complexity.

The decoding method and the encoding method in the embodiments of this disclosure are described in detail below with reference to specific embodiments.

A decoding method is provided in an embodiment of this disclosure, as shown in FIG. 2, which is a schematic flowchart of the decoding method, the method may be applied to a decoder (also referred to as a video decoder), and the method may include the follows.

Step 201, a first bitstream corresponding to a current picture block is decoded, to obtain a coefficient hyperparameter feature corresponding to the current picture block.

Step 202, a probability distribution parameter is determined based on the coefficient hyperparameter feature, and a target mean feature corresponding to the current picture block is determined based on the coefficient hyperparameter feature.

Step 203, a second bitstream corresponding to the current picture block is decoded based on the probability distribution parameter, to obtain a residual feature corresponding to the current picture block.

Step 204, a reconstructed feature corresponding to the current picture block is determined based on the target mean feature and the residual feature.

Step 205, the reconstructed feature is input into a synthesis transformation network, to obtain a reconstructed picture block corresponding to the current picture block. Exemplarily, the synthesis transformation network includes a non-linear residual network layer, and the non-linear residual network layer may include at least an activation layer and a skip connection structure. An output feature of the activation layer is less than or equal to an upper threshold, and/or the output feature of the activation layer is greater than or equal to a lower threshold.

Exemplarily, the non-linear residual network layer may be a residual activation unit (ResAU) network layer, or may be another type of network layer, which is not limited, as long as non-linear residual processing can be implemented, and the ResAU network layer is used as an example for description subsequently.

Exemplarily, the output feature of the activation layer of the non-linear residual network layer may be less than or equal to the upper threshold, and the output feature of the activation layer is greater than or equal to the lower threshold, that is, both the upper threshold and the lower threshold of the activation layer are limited. In this case, the activation layer may perform non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold.

In an embodiment, the output feature of the activation layer of the non-linear residual network layer may be greater than or equal to the lower threshold, that is, only the lower threshold of the activation layer is limited, but not the upper threshold of the activation layer. In this case, the activation layer may perform non-linear adjustment on features by using a Relu activation function. And the Relu activation function corresponds to the lower threshold, and the output feature of the activation layer is greater than or equal to the lower threshold.

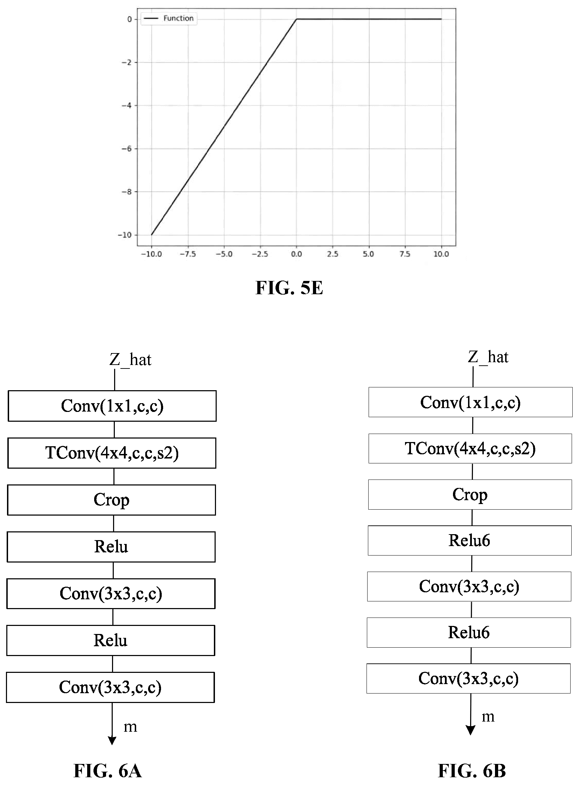

In an embodiment, the output feature of the activation layer of the non-linear residual network layer may be less than or equal to the upper threshold, that is, only the upper threshold of the activation layer is limited, but not the lower threshold of the activation layer. In this case, the activation layer may perform non-linear adjustment on features by using, for example, an activation function as shown in FIG. 5E. The activation function corresponds to an upper threshold, and the output feature of the activation layer is less than or equal to the upper threshold.

Exemplarily, the non-linear residual network layer may further include a processing layer, for example, the non-linear residual network layer sequentially includes an activation layer, a processing layer and a skip connection structure. The processing layer may include, but is not limited to, at least one of: one or more common convolution layers, one or more transposed convolution layers, one or more deformable convolution layers, one or more depthwise separable convolution layers, one or more group convolution layers, one or more dilated convolution layers, and one or more global processing unit layers. The global processing unit layer is configured to implement a global processing function, and may be a transformer layer or another type of network layer, as long as the global processing function can be implemented. The transformer layer is used as an example for description subsequently.

For example, when there is one activation layer and the processing layer includes one network layer, the network layer may be located in front of the activation layer, or the network layer may be located behind the activation layer. When there is one activation layer and the processing layer includes a plurality of network layers, all the network layers may be located in front of the activation layer, or all the network layers may be located behind the activation layer, or a part of the network layers are located in front of the activation layer, and the remaining network layers are located behind the activation layer.

For another example, when there are a plurality of activation layers (using a first activation layer and a second activation layer as an example), and the processing layer includes one network layer, the network layer may be located in front of the first activation layer, or the network layer may also be located between the first activation layer and the second activation layer, or the network layer may also be located behind the second activation layer. If the processing layer includes a plurality of network layers, all the network layers may be located in front of the first activation layer, or all the network layers may be located between the first activation layer and the second activation layer, or all the network layers may be located behind the second activation layer. In an embodiment, a part of the network layers are located in front of the first activation layer, and the remaining network layers are located between the first activation layer and the second activation layer. In an embodiment, a part of the network layers are located in front of the first activation layer, and the remaining network layers are located behind the second activation layer. In an embodiment, a part of the network layers are located in front of the first activation layer, a part of the network layers are located between the first activation layer and the second activation layer, and the remaining network layers are located behind the second activation layer. In an embodiment, a part of the network layers are located between the first activation layer and the second activation layer, and the remaining network layers are located behind the second activation layer.

Exemplarily, the determining the probability distribution parameter based on the coefficient hyperparameter feature may include but is not limited to: inputting the coefficient hyperparameter feature into the probability hyperparameter decoding network, to obtain the probability distribution parameter. Exemplarily, the probability hyperparameter decoding network may include at least an activation layer, and the activation layer performs non-linear adjustment on features by using a target activation function (for example, a Relu6 activation function) clamped up and down. The target activation function may correspond to an upper threshold and a lower threshold, and the output feature of the activation layer is less than or equal to the upper threshold, and the output feature of the activation layer is greater than or equal to the lower threshold.

Exemplarily, the determining the target mean feature corresponding to the current picture block based on the coefficient hyperparameter feature may include but is not limited to: inputting the coefficient hyperparameter feature into a mean hyperparameter decoding network to obtain an initial mean feature corresponding to the current picture block, and determining the target mean feature based on the initial mean feature. Exemplarily, the mean hyperparameter decoding network includes an activation layer, and the activation layer performs non-linear adjustment on features by using a target activation function clamped up and down. The target activation function corresponds to an upper threshold and a lower threshold, the output feature of the activation layer is less than or equal to the upper threshold, and the output feature of the activation layer is greater than or equal to the lower threshold.

Exemplarily, the determining the target mean feature based on the initial mean feature may include but is not limited to: using the initial mean feature as the target mean feature; or inputting the initial mean feature and an obtained reconstructed feature of the current picture block into a context model to obtain the target mean feature. Exemplarily, the context model includes an activation layer, and the activation layer performs non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold.

Exemplarily, the determining the target mean feature based on the initial mean feature may include but is not limited to: using the initial mean feature as the target mean feature; or inputting the initial mean feature and an obtained reconstructed feature of the current picture block into a context model to obtain the target mean feature. Exemplarily, the context model includes an activation layer, and the activation layer performs non-linear adjustment on features by using a target activation function (such as a Relu function) clamped down, where the target activation function corresponds to a lower threshold, and an output feature of the activation layer is greater than or equal to the lower threshold.

Exemplarily, the determining the probability distribution parameter based on the coefficient hyperparameter feature, and determining the target mean feature corresponding to the current picture block based on the coefficient hyperparameter feature may include but is not limited to: inputting the coefficient hyperparameter feature into a hyperparameter decoding network, to obtain a reference feature corresponding to the current picture block; and inputting the reference feature and the obtained reconstructed feature of the current picture block into the context model, to obtain the probability distribution parameter and the target mean feature corresponding to the current picture block. Exemplarily, the probability hyperparameter decoding network includes an activation layer, and the activation layer performs non-linear adjustment on features by using a target activation function clamped up and down, where the target activation function corresponds to an upper threshold and a lower threshold, and an output feature of the activation layer is less than or equal to the upper threshold and greater than or equal to the lower threshold; and/or the context model includes an activation layer, and the activation layer performs non-linear adjustment on features by using a target activation function clamped up and down, where the target activation function corresponds to an upper threshold and a lower threshold, and an output feature of the activation layer is less than or equal to the upper threshold and greater than or equal to the lower threshold.

Exemplarily, the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold.

Exemplarily, when the upper threshold is learned adaptively, a same upper threshold is learned for all channels of the activation layer, or an upper threshold is separately learned for each channel of the activation layer, where different channels correspond to the same upper threshold or different upper thresholds.

Exemplarily, when the lower threshold is learned adaptively, a same lower threshold is learned for all channels of the activation layer, or a lower threshold is separately learned for each channel of the activation layer, where different channels correspond to the same lower threshold or different lower thresholds.

A decoding method is provided in an embodiment of this disclosure, the method may be applied to a decoder, and the method may include the follows.

Step S11, a first bitstream corresponding to a current picture block is decoded, to obtain a coefficient hyperparameter feature corresponding to the current picture block.

Step S12, the coefficient hyperparameter feature is input into a probability hyperparameter decoding network to obtain a probability distribution parameter, and a second bitstream corresponding to the current picture block is decoded based on the probability distribution parameter, to obtain a residual feature corresponding to the current picture block.

Step S13, the coefficient hyperparameter feature is input into a mean hyperparameter decoding network to obtain an initial mean feature corresponding to the current picture block, and a target mean feature corresponding to the current picture block is determined based on the initial mean feature.

Step S14, a reconstructed feature corresponding to the current picture block is determined based on the target mean feature and the residual feature.

Step S15, a reconstructed picture block corresponding to the current picture block is determined based on the reconstructed feature.

In a possible implementation, the probability hyperparameter decoding network may include an activation layer, and an output feature of the activation layer is less than or equal to an upper threshold, and/or the output feature of the activation layer is greater than or equal to a lower threshold. For example, the output feature of the activation layer may be less than or equal to the upper threshold, and the output feature of the activation layer is greater than or equal to the lower threshold, that is, both the upper threshold and the lower threshold of the activation layer are limited. In this case, the activation layer may perform non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold. In an embodiment, the output feature of the activation layer may be greater than or equal to the lower threshold, that is, only the lower threshold of the activation layer is limited, but not the upper threshold of the activation layer. In this case, the activation layer may perform non-linear adjustment on features by using a Relu activation function. And the Relu activation function corresponds to the lower threshold, and the output feature of the activation layer is greater than or equal to the lower threshold. In an embodiment, the output feature of the activation layer may be less than or equal to the upper threshold, that is, only the upper threshold of the activation layer is limited, but not the lower threshold of the activation layer. In this case, the activation layer may perform non-linear adjustment on features by using, for example, an activation function as shown in FIG. 5E. The activation function corresponds to an upper threshold, and the output feature of the activation layer is less than or equal to the upper threshold.

In a possible implementation, the mean hyperparameter decoding network may include an activation layer, and an output feature of the activation layer is less than or equal to an upper threshold, and/or the output feature of the activation layer is greater than or equal to a lower threshold. For example, the output feature of the activation layer may be less than or equal to the upper threshold, and the output feature of the activation layer is greater than or equal to the lower threshold, that is, both the upper threshold and the lower threshold of the activation layer are limited. In this case, the activation layer may perform non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold. In an embodiment, the output feature of the activation layer may be greater than or equal to the lower threshold, that is, only the lower threshold of the activation layer is limited, but not the upper threshold of the activation layer. In this case, the activation layer may perform non-linear adjustment on features by using a Relu activation function. And the Relu activation function corresponds to a lower threshold, and the output feature of the activation layer is greater than or equal to the lower threshold. In an embodiment, the output feature of the activation layer may be less than or equal to the upper threshold, that is, only the upper threshold of the activation layer is limited, but not the lower threshold of the activation layer. In this case, the activation layer may perform non-linear adjustment on features by using, for example, an activation function as shown in FIG. 5E. The activation function corresponds to an upper threshold, and the output feature of the activation layer is less than or equal to the upper threshold.

Exemplarily, the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold.

Exemplarily, when the upper threshold is learned adaptively, a same upper threshold is learned for all channels of the activation layer, or an upper threshold is separately learned for each channel of the activation layer, where different channels correspond to the same upper threshold or different upper thresholds.

Exemplarily, when the lower threshold is learned adaptively, a same lower threshold is learned for all channels of the activation layer, or a lower threshold is separately learned for each channel of the activation layer, where different channels correspond to the same lower threshold or different lower thresholds.

A decoding method is provided in an embodiment of this disclosure, the method may be applied to a decoder, and the method may include the follows.

Step S21, a first bitstream corresponding to a current picture block is decoded, to obtain a coefficient hyperparameter feature corresponding to the current picture block.

Step S22, the coefficient hyperparameter feature is input into a hyperparameter decoding network to obtain a reference feature corresponding to the current picture block.

Step S23, the reference feature and an obtained reconstructed feature of the current picture block are input into a context model, to obtain the probability distribution parameter and the target mean feature corresponding to the current picture block.

Step S24, a second bitstream corresponding to the current picture block is decoded based on the probability distribution parameter, to obtain a residual feature corresponding to the current picture block; and a reconstructed feature is determined based on the target mean feature and the residual feature.

Step S25, a reconstructed picture block corresponding to the current picture block is determined based on the reconstructed feature.

In a possible implementation, the hyperparameter decoding network may include an activation layer, and an output feature of the activation layer is less than or equal to an upper threshold, and/or the output feature of the activation layer is greater than or equal to a lower threshold. For example, the output feature of the activation layer may be less than or equal to the upper threshold, and the output feature of the activation layer is greater than or equal to the lower threshold, that is, both the upper threshold and the lower threshold of the activation layer are limited. In this case, the activation layer may perform non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold. In an embodiment, the output feature of the activation layer may be greater than or equal to the lower threshold, that is, only the lower threshold of the activation layer is limited, but not the upper threshold of the activation layer. In this case, the activation layer may perform non-linear adjustment on features by using a Relu activation function. And the Relu activation function corresponds to a lower threshold, and the output feature of the activation layer is greater than or equal to the lower threshold. In an embodiment, the output feature of the activation layer may be less than or equal to the upper threshold, that is, only the upper threshold of the activation layer is limited, but not the lower threshold of the activation layer. In this case, the activation layer may perform non-linear adjustment on features by using an activation function, where the activation function corresponds to an upper threshold, and the output feature of the activation layer is less than or equal to the upper threshold.

In a possible implementation, the context model may include an activation layer, and an output feature of the activation layer is less than or equal to an upper threshold, and/or the output feature of the activation layer is greater than or equal to a lower threshold. For example, the output feature of the activation layer may be less than or equal to the upper threshold, and the output feature of the activation layer is greater than or equal to the lower threshold, that is, both the upper threshold and the lower threshold of the activation layer are limited. In this case, the activation layer may perform non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold. In an embodiment, the output feature of the activation layer may be greater than or equal to the lower threshold, that is, only the lower threshold of the activation layer is limited, but not the upper threshold of the activation layer. In this case, the activation layer may perform non-linear adjustment on features by using a Relu activation function. And the Relu activation function corresponds to a lower threshold, and the output feature of the activation layer is greater than or equal to the lower threshold. In an embodiment, the output feature of the activation layer may be less than or equal to the upper threshold, that is, only the upper threshold of the activation layer is limited, but not the lower threshold of the activation layer. In this case, the activation layer may perform non-linear adjustment on features by using an activation function. And the activation function corresponds to an upper threshold, and the output feature of the activation layer is less than or equal to the upper threshold.

Exemplarily, the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold.

Exemplarily, when the upper threshold is learned adaptively, a same upper threshold is learned for all channels of the activation layer, or an upper threshold is separately learned for each channel of the activation layer, where different channels correspond to the same upper threshold or different upper thresholds.

Exemplarily, when the lower threshold is learned adaptively, a same lower threshold is learned for all channels of the activation layer, or a lower threshold is separately learned for each channel of the activation layer, where different channels correspond to the same lower threshold or different lower thresholds.

A decoding method is provided in an embodiment of this disclosure, the method may be applied to a decoder, and the method may include the follows.

Step S31, a first bitstream corresponding to a current picture block is decoded, to obtain a coefficient hyperparameter feature corresponding to the current picture block.

Step S32, a probability distribution parameter is determined based on the coefficient hyperparameter feature, and a second bitstream corresponding to the current picture block is decoded based on the probability distribution parameter, to obtain the residual feature corresponding to the current picture block.

Step S33, the coefficient hyperparameter feature is input into a mean hyperparameter decoding network to obtain an initial mean feature corresponding to the current picture block, and a target mean feature corresponding to the current picture block is determined based on the initial mean feature. Exemplarily, the mean hyperparameter decoding network may sequentially include: a first processing layer, an upsampling layer configured to perform an upsampling operation, a clipping layer, and a second processing layer. The feature output by the second processing layer is used as the initial mean feature, that is, the second processing layer is located at the end of the mean hyperparameter decoding network, and the feature output by the upsampling layer passes through the clipping layer and the second processing layer to obtain the output feature of the mean hyperparameter decoding network.

Exemplarily, the clipping layer is used to crop and align the upsampled pixel positions, and the clipping layer may be a Crop layer or another network layer, as long as the cropping and alignment function can be implemented. The Crop layer is used as an example for description subsequently.

Step S34, a reconstructed feature corresponding to the current picture block is determined based on the target mean feature and the residual feature.

Step S35, a reconstructed picture block corresponding to the current picture block is determined based on the reconstructed feature.

Exemplarily, a first processing layer of the mean hyperparameter decoding network does not include an upsampling layer configured to perform an upsampling operation, that is, the upsampling layer configured to perform the upsampling operation is deployed behind the first processing layer, so that the first processing layer does not perform the upsampling operation. The upsampling layer may be located behind the first processing layer, the feature output by the upsampling layer passes through the Crop layer and the second processing layer to obtain the output feature of the mean hyperparameter decoding network. In an embodiment, an additional convolution layer (for example, a convolution layer of 1× 1 or a convolution layer of 3× 3, where the convolution layer performs only a simple convolution operation) may be deployed between the upsampling layer and the Crop layer, and the feature output by the upsampling layer passes through the convolution layer, the Crop layer and the second processing layer to obtain the output feature (initial mean feature) of the mean hyperparameter decoding network. For ease of description, in subsequent embodiments, an example in which the mean hyperparameter decoding network may sequentially include: a first processing layer, an upsampling layer configured to perform an upsampling operation, a Crop layer, and a second processing layer.

Exemplarily, based on the mean hyperparameter decoding network, the coefficient hyperparameter feature may be processed by the first processing layer to obtain a processed feature; the processed feature may be upsampled by the upsampling layer to obtain an upsampled feature; the upsampled feature may be cropped and aligned by the Crop layer to obtain a cropped feature; and the cropped feature may be processed by the second processing layer to obtain the initial mean feature.

Exemplarily, the performing upsampling processing on the processed feature by the upsampling layer, to obtain the upsampled feature may include, but is not limited to: performing the upsampling processing on the processed feature in a pixel rearrangement manner, to obtain the upsampled feature; or performing the upsampling processing on the processed feature in a transposed convolution manner, to obtain the upsampled feature; or performing the upsampling processing on the processed feature in a nearest neighbor interpolation manner, to obtain the upsampled feature.

Exemplarily, the first processing layer may include, but is not limited to, at least one of: one or more common convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, or one or more activation layers using a LeakyRelu activation function; and there is any skip connection between various layers of the first processing layer.

Exemplarily, the second processing layer may include, but is not limited to, at least one of: one or more common convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, or one or more activation layers using a LeakyRelu activation function; and there is any skip connection between various layers of the second processing layer.

Exemplarily, the foregoing execution sequence is merely an example provided for ease of description, and in actual application, the execution sequence between steps may be changed, and the execution sequence is not limited. Moreover, in other embodiments, the steps of the corresponding method are not necessarily performed in the order shown and described in the present disclosure, and the method may include more or fewer steps than those described in the present disclosure. In addition, a single step described in this specification may be decomposed into a plurality of steps for description in other embodiments; the plurality of steps described in this specification may also be combined into a single step for description in other embodiments.

It can be learned from the above technical solutions that, in embodiments of this disclosure, an end-to-end video picture compression method is provided, to implement video picture decoding based on a neural network. The activation function is optimized, and the non-linear adjustment is performed on features by using the target activation function clamped up and down, thereby reducing complexity of the activation function, and further reducing complexity of the neural network. The target activation function can improve the robustness of the neural network and reduce the phenomenon of decoding artifacts of the neural network on high-frequency pictures. Therefore, while maintaining low complexity, the neural network effectively ensures the quality of the reconstructed picture block, improves the quality of the reconstructed picture, achieves the purpose of improving the decoding performance, and reduces the complexity. By optimizing the mean hyperparameter decoding network, the complexity of the neural network is greatly reduced, and the performance of the neural network is kept unchanged, thereby achieving the purpose of improving the decoding performance and reducing the complexity.

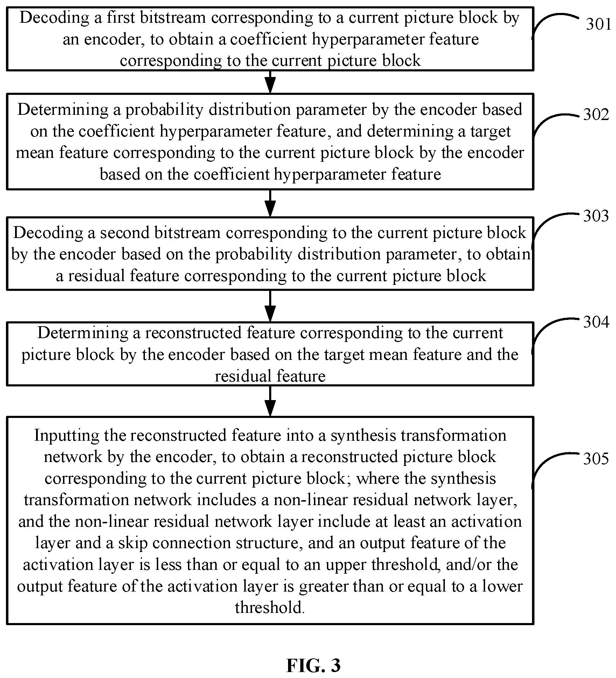

An encoding method is provided in an embodiment of this disclosure, as shown in FIG. 3, which is a schematic flowchart of the encoding method, the method may be applied to an encoder (also referred to as a video encoder), and the method may include the follows.

Step 301, a first bitstream corresponding to a current picture block is decoded by the encoder, to obtain a coefficient hyperparameter feature corresponding to the current picture block.

Step 302, a probability distribution parameter is determined by the encoder based on the coefficient hyperparameter feature, and a target mean feature corresponding to the current picture block is determined by the encoder based on the coefficient hyperparameter feature.

Step 303, a second bitstream corresponding to the current picture block is decoded by the encoder based on the probability distribution parameter, to obtain a residual feature corresponding to the current picture block.

Step 304, a reconstructed feature corresponding to the current picture block is determined by the encoder based on the target mean feature and the residual feature.

Step 305, the reconstructed feature is input into a synthesis transformation network by the encoder, to obtain a reconstructed picture block corresponding to the current picture block. The synthesis transformation network includes a non-linear residual network layer, and the non-linear residual network layer may include at least an activation layer and a skip connection structure, and an output feature of the activation layer is less than or equal to an upper threshold, and/or the output feature of the activation layer is greater than or equal to a lower threshold.

Exemplarily, the output feature of the activation layer of the non-linear residual network layer may be less than or equal to the upper threshold, and the output feature of the activation layer is greater than or equal to the lower threshold, that is, both the upper threshold and the lower threshold of the activation layer are limited. In this case, the activation layer may perform non-linear adjustment on features by using a target activation function clamped up and down. The target activation function corresponds to an upper threshold and a lower threshold, and the output feature of the activation layer is less than or equal to the upper threshold, and the output feature of the activation layer is greater than or equal to the lower threshold.

In an embodiment, the output feature of the activation layer of the non-linear residual network layer may be greater than or equal to the lower threshold, that is, only the lower threshold of the activation layer is limited, but not the upper threshold of the activation layer. In this case, the activation layer may perform non-linear adjustment on features by using a Relu activation function. And the Relu activation function corresponds to the lower threshold, and the output feature of the activation layer is greater than or equal to the lower threshold.

In an embodiment, the output feature of the activation layer of the non-linear residual network layer may be less than or equal to the upper threshold, that is, only the upper threshold of the activation layer is limited, but not the lower threshold of the activation layer. In this case, the activation layer may perform non-linear adjustment on features by using, for example, an activation function as shown in FIG. 5E. The activation function corresponds to an upper threshold, and the output feature of the activation layer is less than or equal to the upper threshold.

An encoding method is provided in an embodiment of this disclosure, which is applied to an encoder and includes the follows. A first bitstream corresponding to a current picture block is decoded, to obtain a coefficient hyperparameter feature corresponding to the current picture block. The coefficient hyperparameter feature is input into a probability hyperparameter decoding network to obtain a probability distribution parameter, and a second bitstream corresponding to the current picture block is decoded based on the probability distribution parameter, to obtain a residual feature corresponding to the current picture block. The coefficient hyperparameter feature is input into a mean hyperparameter decoding network to obtain an initial mean feature corresponding to the current picture block, and a target mean feature corresponding to the current picture block is determined based on the initial mean feature. A reconstructed feature corresponding to the current picture block is determined based on the target mean feature and the residual feature. A reconstructed picture block corresponding to the current picture block is determined based on the reconstructed feature.

In a possible implementation, the probability hyperparameter decoding network may include an activation layer, and an output feature of the activation layer is less than or equal to an upper threshold, and/or the output feature of the activation layer is greater than or equal to a lower threshold. And/or the mean hyperparameter decoding network may include an activation layer, and an output feature of the activation layer is less than or equal to an upper threshold, and/or the output feature of the activation layer is greater than or equal to a lower threshold.

An encoding method is provided in an embodiment of this disclosure, which is applied to an encoder and includes the follows. A first bitstream corresponding to a current picture block is decoded, to obtain a coefficient hyperparameter feature corresponding to the current picture block. The coefficient hyperparameter feature is input into a hyperparameter decoding network to obtain a reference feature corresponding to the current picture block. The reference feature and an obtained reconstructed feature of the current picture block are input into a context model, to obtain the probability distribution parameter and the target mean feature corresponding to the current picture block. A second bitstream corresponding to the current picture block is decoded based on the probability distribution parameter, to obtain a residual feature corresponding to the current picture block; and a reconstructed feature is determined based on the target mean feature and the residual feature. A reconstructed picture block corresponding to the current picture block is determined based on the reconstructed feature.

In a possible implementation, the hyperparameter decoding network may include an activation layer, and an output feature of the activation layer is less than or equal to an upper threshold, and/or the output feature of the activation layer is greater than or equal to a lower threshold. And/or, the context model may include an activation layer, and an output feature of the activation layer is less than or equal to an upper threshold, and/or the output feature of the activation layer is greater than or equal to a lower threshold.

An encoding method is provided in an embodiment of this disclosure, which may be applied to an encoder and include the follows. A first bitstream corresponding to a current picture block is decoded, to obtain a coefficient hyperparameter feature corresponding to the current picture block. A probability distribution parameter is determined based on the coefficient hyperparameter feature, and a second bitstream corresponding to the current picture block is decoded based on the probability distribution parameter, to obtain the residual feature corresponding to the current picture block. The coefficient hyperparameter feature is input into a mean hyperparameter decoding network, to obtain an initial mean feature corresponding to the current picture block, and a target mean feature corresponding to the current picture block is determined based on the initial mean feature, where the mean hyperparameter decoding network sequentially includes: a processing layer, an upsampling layer configured to perform an upsampling operation, and a clipping layer. A reconstructed feature corresponding to the current picture block is determined based on the target mean feature and the residual feature. A reconstructed picture block corresponding to the current picture block is determined based on the reconstructed feature. For the hyperparameter decoding network, the feature output by the upsampling layer passes through the clipping layer to obtain the initial mean feature. That is, the upsampling layer is located at the end of the mean hyperparameter decoding network. In this case, the feature output by the upsampling layer passes through the clipping layer to obtain the output feature (i.e., the initial mean feature) of the mean hyperparameter decoding network.

Exemplarily, a processing procedure of the encoder is similar to a processing procedure of the decoder, and similarities are not repeatedly described. The processing procedure of the decoder may be applied to the encoder, that is, the encoder uses the same processing manner as the decoder.

Exemplarily, the foregoing execution sequence is merely an example provided for ease of description, and in actual application, the execution sequence between steps may be changed, and the execution sequence is not limited. Moreover, in other embodiments, the steps of the corresponding method are not necessarily performed in the order shown and described in the present disclosure, and the method may include more or fewer steps than those described in the present disclosure. In addition, a single step described in this specification may be decomposed into a plurality of steps for description in other embodiments; the plurality of steps described in this specification may also be combined into a single step for description in other embodiments.

It can be learned from the above technical solutions that, in embodiments of this disclosure, an end-to-end video picture compression method is provided, to implement video picture encoding based on a neural network. The activation function is optimized, and the non-linear adjustment is performed on features by using the target activation function clamped up and down, thereby reducing complexity of the activation function, and further reducing complexity of the neural network. The target activation function can improve the robustness of the neural network and reduce the phenomenon of encoding artifacts of the neural network on high-frequency pictures. Therefore, while maintaining low complexity, the neural network effectively ensures the quality of the reconstructed picture block, improves the quality of the reconstructed picture, achieves the purpose of improving the encoding performance, and reduces the complexity. By optimizing the mean hyperparameter encoding network, the complexity of the neural network is greatly reduced, and the performance of the neural network is kept unchanged, thereby achieving the purpose of improving the encoding performance and reducing the complexity.

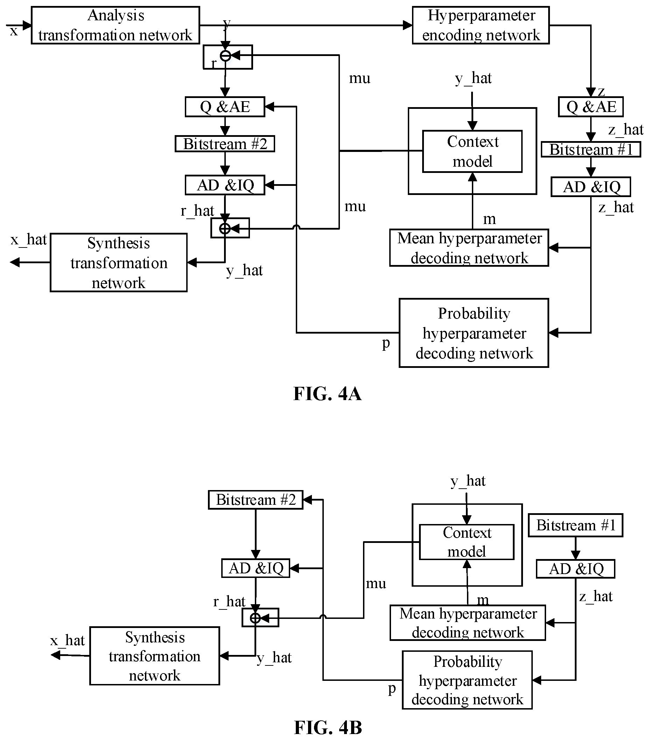

In the methods described in the above embodiments, a processing procedure of the encoder is shown in FIG. 4A, and certainly, FIG. 4A is merely an example of the processing procedure of the encoder, and the processing procedure of the encoder is not limited.

As shown in FIG. 4A, after obtaining the current picture block x (the current picture block x may be an original picture block x, that is, an input picture block), the encoder may perform analysis transformation on the current picture block x by an analysis transformation network (that is, a neural network), to obtain a picture feature y corresponding to the current picture block x. Performing feature transformation on the current picture block x by the analysis transformation network refers to: transforming the current picture block x to the picture feature y in the latent domain, thereby facilitating all subsequent processes to operate in the latent domain.

Exemplarily, the picture may be divided into one picture block, or may be divided into a plurality of picture blocks. And if the picture is divided into one picture block, the current picture block x may also be the picture, that is, an encoding process and a decoding process of the picture block may also be directly used for the picture.

After obtaining the picture feature y, the encoder performs coefficient hyperparameter feature transformation on the picture feature y to obtain the coefficient hyperparameter feature z. For example, the picture feature y may be input into a hyperparameter encoding network (i.e., a neural network), and the coefficient hyperparameter feature transformation is performed by the hyperparameter encoding network on the picture feature y to obtain the coefficient hyperparameter feature z. The hyperparameter encoding network may be a trained neural network, and a training process of the hyperparameter encoding network is not limited, as long as coefficient hyperparameter feature transformation can be performed on the picture feature y. The picture feature y in the latent domain passes through the hyperparameter encoding network to obtain hyper prior latent information z.

After obtaining the coefficient hyperparameter feature z, the encoder may quantize the coefficient hyperparameter feature z to obtain a hyperparameter quantization feature corresponding to the coefficient hyperparameter feature z, that is, a Q operation in FIG. 4A is a quantization process. After the hyperparameter quantization feature corresponding to the coefficient hyperparameter feature z is obtained, the hyperparameter quantization feature is encoded to obtain the Bitstream#1 (that is, the first bitstream) corresponding to the current picture block, that is, the AE operation in FIG. 4A represents an encoding process, for example, an entropy encoding process. In an embodiment, the encoder may also directly encode the coefficient hyperparameter feature z to obtain the Bitstream#1 corresponding to the current picture block. The hyperparameter quantization feature or the coefficient hyperparameter feature z carried in the Bitstream#1 is mainly used to obtain a mean value and a parameter of the probability distribution model. That is, the first bitstream is a bitstream encoded with the coefficient hyperparameter feature z corresponding to the current picture block x.

After obtaining the Bitstream#1 corresponding to the current picture block, the encoder may send the Bitstream#1 corresponding to the current picture block to the decoder. For a processing procedure performed by the decoder on the Bitstream#1 corresponding to the current picture block, refer to subsequent embodiments.

After obtaining the Bitstream#1 corresponding to the current picture block, the encoder may further decode the Bitstream#1 to obtain a hyperparameter quantization feature, that is, AD in FIG. 4A represents a decoding process, and then the encoder may perform dequantization on the hyperparameter quantization feature to obtain a coefficient hyperparameter feature z_hat, where the coefficient hyperparameter feature z_hat may be the same as or different from the coefficient hyperparameter feature z, and an IQ operation in FIG. 4A is a dequantization process. In an embodiment, after obtaining the Bitstream#1 corresponding to the current picture block, the encoder may decode the Bitstream#1 to obtain the coefficient hyperparameter feature z_hat, without involving the dequantization process of the hyperparameter quantization feature.

For the encoding process of the Bitstream#1, an encoding method of a fixed probability density model may be used, and for the decoding process of the Bitstream#1, a decoding method of a fixed probability density model may be used. This encoding and decoding processes are not limited.

After obtaining the coefficient hyperparameter feature z_hat, the encoder may input the coefficient hyperparameter feature z_hat into the mean hyperparameter decoding network, and the mean hyperparameter decoding network performs processing based on the coefficient hyperparameter feature z_hat, to obtain an initial mean feature m (the initial mean feature m is an intermediate parameter for the mean feature).

After obtaining the initial mean feature m, the encoder may use the initial mean feature m as the target mean feature mu (i.e., the predicted value mu). In an embodiment, the encoder may input the initial mean feature m and the decoded reconstructed feature y_hat (that is, the obtained reconstructed feature of the current picture block, and for a process of determining the reconstructed feature y_hat, refer to subsequent embodiments) into a context model, and the context model performs a context-based prediction process, to obtain the target mean feature mu (i.e., the mean value mu) corresponding to the current picture block. For example, for the prediction process of the context model, the input data of the context model includes the initial mean feature m and the decoded reconstructed feature y_hat, and a more accurate target mean feature mu is obtained by jointly inputting the initial mean feature m and the decoded reconstructed feature y_hat. The target mean feature mu is subtracted from the original feature to obtain a residual r_hat, and the target mean feature mu is added to the decoded residual to obtain the reconstructed feature y_hat.

The mean hyperparameter decoding network and the context model are optional neural networks, that is, there may be no mean hyperparameter decoding network and context model, that is, the target mean feature mu does not need to be determined by using the mean hyperparameter decoding network and the context model.

After obtaining the picture feature y, the encoder may determine the residual feature r based on the picture feature y and the target mean feature mu, for example, use a difference between the picture feature y and the target mean feature mu as the residual feature r. Then, feature processing is performed on the residual feature r to obtain the picture feature s, which is not limited and may be any feature processing method. In this case, the mean hyperparameter decoding network and the context model need to be deployed, to provide the target mean feature mu. In an embodiment, after obtaining the picture feature y, the encoder may perform feature processing on the picture feature y to obtain the picture feature s, which is not limited and may be any feature processing method. In this case, the mean hyperparameter decoding network and the context model do not need to be deployed.

After obtaining the picture feature s, the encoder may quantize the picture feature s to obtain a picture quantization feature corresponding to the picture feature s, that is, the Q operation in FIG. 4A is a quantization process. After obtaining the picture quantization feature corresponding to the picture feature s, the encoder may encode the picture quantization feature to obtain a Bitstream#2 (i.e. a second bitstream) corresponding to the current picture block, that is, the AE operation in FIG. 4A represents an encoding process, for example, an entropy encoding process. In an embodiment, the encoder may also directly encode the picture feature s to obtain the Bitstream#2 corresponding to the current picture block, without involving the quantization process of the picture feature s.

In an embodiment, after obtaining the residual feature r, the encoder may not perform feature processing on the residual feature r, but directly quantize the residual feature r to obtain a picture quantization feature corresponding to the residual feature r, and the encoder encodes the picture quantization feature to obtain the Bitstream#2 (i.e., the second bitstream) corresponding to the current picture block. In an embodiment, after obtaining the residual feature r, the encoder directly encodes the residual feature r to obtain the Bitstream#2 corresponding to the current picture block, without involving a quantization process. That is, the second bitstream is a bitstream encoded with the residual feature r corresponding to the current picture block x.

After obtaining the Bitstream#2 corresponding to the current picture block, the encoder may send the Bitstream#2 corresponding to the current picture block to the decoder. For a processing procedure performed by the decoder on the Bitstream#2 corresponding to the current picture block, refer to subsequent embodiments.

After obtaining the Bitstream#2 corresponding to the current picture block, the encoder may further decode the Bitstream#2 to obtain a picture quantization feature, that is, AD in FIG. 4A represents a decoding process, and then the encoder may perform dequantization on the picture quantization feature to obtain a picture feature s', where the picture feature s' may be the same as or different from the picture feature s, and an IQ operation in FIG. 4A is a dequantization process. In an embodiment, after obtaining the Bitstream#2 corresponding to the current picture block, the encoder may further decode the Bitstream#2 to obtain the picture feature s', without involving the dequantization process of the picture quantization feature. After obtaining the picture feature s', the encoder may perform feature recovery (that is, an inverse process of feature processing) on the picture feature s', where the feature recovery is not limited, and may be any feature recovery manner, to obtain the residual feature r_hat, where the residual feature r_hat is the same as or different from the residual feature r.

In an embodiment, after obtaining the Bitstream#2 corresponding to the current picture block, the encoder may further decode the Bitstream#2 to obtain the picture quantization feature, and then the encoder may perform dequantization on the picture quantization feature to obtain the residual feature r_hat. In an embodiment, after obtaining the Bitstream#2 corresponding to the current picture block, the encoder may further decode the Bitstream#2 to obtain the residual feature r_hat, without involving the dequantization of the picture quantization feature.

After obtaining the residual feature r_hat, the encoder determines a picture feature y_hat (that is, a reconstructed feature) based on the residual feature r_hat and the target mean feature mu, where the picture feature y_hat is the same as or different from the picture feature y, for example, a sum of the residual feature r_hat and the target mean feature mu may be used as the reconstructed feature y_hat. In this case, the mean hyperparameter decoding network and the context model need to be deployed, and the target mean feature mu is provided by the mean hyperparameter decoding network and the context model. In an embodiment, after obtaining the Bitstream#2 corresponding to the current picture block, and after performing operations such as decoding and dequantization, the encoder may directly obtain the reconstructed feature y_hat, and in this case, the mean hyperparameter decoding network and the context model do not need to be deployed.

After obtaining the reconstructed feature y_hat, the encoder may perform synthesis transformation on the reconstructed feature y_hat to obtain the reconstructed picture block x_hat corresponding to the current picture block x. For example, the reconstructed feature y_hat is input into a synthesis transformation network, and the synthesis transformation is performed by the synthesis transformation network on the reconstructed feature y_hat to obtain the reconstructed picture block x_hat. So far, the picture reconstruction process is completed.

Exemplarily, when encoding the feature to obtain the Bitstream#2 corresponding to the current picture block, the encoder needs to first determine the probability distribution model, and then encode the feature based on the probability distribution model. In addition, when decoding the Bitstream#2, the encoder also needs to first determine the probability distribution model, and then decode the Bitstream#2 based on the probability distribution model.

To obtain the probability distribution model, still referring to FIG. 4A, after obtaining the coefficient hyperparameter feature z_hat, the encoder may perform inverse transformation of coefficient hyperparameter feature on the coefficient hyperparameter feature z_hat to obtain a probability distribution parameter. For example, the coefficient hyperparameter feature z_hat is input into the probability hyperparameter decoding network, and inverse transformation of coefficient hyperparameter feature is performed on the coefficient hyperparameter feature z_hat by the probability hyperparameter decoding network to obtain the probability distribution parameter p. After obtaining the probability distribution parameter, the probability distribution model may be generated based on the probability distribution parameter. The probability hyperparameter decoding network may be a trained neural network, a training process of the probability hyperparameter decoding network is not limited, as long as the inverse transformation of coefficient hyperparameter feature can be performed on the coefficient hyperparameter feature z_hat.

In a possible implementation, the above processing procedure of the encoder may be performed by a deep learning model or a neural network model, to implement an end-to-end picture compression and encoding process, and the encoding process is not limited.

In the methods described in the above embodiments, a processing procedure of the decoder is shown in FIG. 4B, and certainly, FIG. 4B is merely an example of the processing procedure of the decoder, and the processing procedure of the decoder is not limited.

After obtaining the Bitstream#1 corresponding to the current picture block, the decoder may decode the Bitstream#1 to obtain a hyperparameter quantization feature, that is, AD in FIG. 4B represents a decoding process, and then the decoder performs dequantization on the hyperparameter quantization feature to obtain a coefficient hyperparameter feature z_hat, the IQ operation in FIG. 4B is a dequantization process. In an embodiment, after obtaining the Bitstream#1 corresponding to the current picture block, the decoder may decode the Bitstream#1 to obtain the coefficient hyperparameter feature z_hat, without involving the dequantization process.

For the decoding process of the Bitstream#1, a decoding method of a fixed probability density model may be used, which is not limited.

The picture may be divided into one picture block, or may be divided into a plurality of picture blocks. And if the picture is divided into one picture block, the current picture block x may also be the picture, that is, the decoding process of the picture block may also be directly used for the picture.

After obtaining the coefficient hyperparameter feature z_hat, the decoder may input the coefficient hyperparameter feature z_hat into the mean hyperparameter decoding network, and the mean hyperparameter decoding network performs processing based on the coefficient hyperparameter feature z_hat, to obtain an initial mean feature m (the initial mean feature m is an intermediate parameter for the mean feature). The processing procedure of this mean hyperparameter decoding network is not limited.

After obtaining the initial mean feature m, the decoder may use the initial mean feature m as the target mean feature mu (i.e., the predicted value mu). In an embodiment, the decoder may input the initial mean feature m and the decoded reconstructed feature y_hat (that is, the obtained reconstructed feature of the current picture block, and for a process of determining the reconstructed feature y_hat, refer to subsequent embodiments) into a context model, and the context model performs a context-based prediction process, to obtain the target mean feature mu (i.e., the mean value mu) corresponding to the current picture block. For example, for the prediction process of the context model, the input data of the context model includes the initial mean feature m and the decoded reconstructed feature y_hat, and a more accurate target mean feature mu is obtained by jointly inputting the initial mean feature m and the decoded reconstructed feature y_hat. The target mean feature mu is subtracted from the original feature to obtain a residual r_hat, and the target mean feature mu is added to the decoded residual to obtain the reconstructed feature y_hat.

The mean hyperparameter decoding network and the context model are optional neural networks, that is, there may be no mean hyperparameter decoding network and context model, that is, the target mean feature mu does not need to be determined by using the mean hyperparameter decoding network and the context model.

After obtaining the Bitstream#2 corresponding to the current picture block, the decoder may further decode the Bitstream#2 to obtain a picture quantization feature, that is, AD in FIG. 4B represents a decoding process, and then the decoder may perform dequantization on the picture quantization feature to obtain a picture feature s'. The IQ operation in FIG. 4B is a dequantization process. In an embodiment, after obtaining the Bitstream#2 corresponding to the current picture block, the decoder may further decode the Bitstream#2 to obtain the picture feature s', without involving the dequantization process of the picture quantization feature. After obtaining the picture feature s', the decoder may perform feature recovery on the picture feature s', where the feature recovery is not limited, and may be any feature recovery manner, to obtain the residual feature r_hat.

In an embodiment, after obtaining the Bitstream#2 corresponding to the current picture block, the decoder may further decode the Bitstream#2 to obtain the picture quantization feature, and then the decoder may perform dequantization on the picture quantization feature to obtain the residual feature r_hat. In an embodiment, after obtaining the Bitstream#2 corresponding to the current picture block, the decoder may further decode the Bitstream#2 to obtain the residual feature r_hat, without involving the dequantization of the picture quantization feature.

After obtaining the residual feature r_hat, the decoder determines a picture feature y_hat (that is, a reconstructed feature) based on the residual feature r_hat and the target mean feature mu, where the picture feature y _hat is the same as or different from the picture feature y, for example, a sum of the residual feature r_hat and the target mean feature mu may be used as the reconstructed feature y_hat. In this case, the mean hyperparameter decoding network and the context model need to be deployed, and the target mean feature mu is provided by the mean hyperparameter decoding network and the context model. In an embodiment, after obtaining the Bitstream#2 corresponding to the current picture block, and after performing operations such as decoding and dequantization, the decoder may directly obtain the reconstructed feature y_hat, and in this case, the mean hyperparameter decoding network and the context model do not need to be deployed.

After obtaining the reconstructed feature y_hat, the decoder may perform synthesis transformation on the reconstructed feature y_hat to obtain the reconstructed picture block x_hat corresponding to the current picture block x. For example, the reconstructed feature y_hat is input into a synthesis transformation network, and the synthesis transformation is performed by the synthesis transformation network on the reconstructed feature y_hat to obtain the reconstructed picture block x_hat. So far, the picture reconstruction process is completed.

Exemplarily, when decoding the Bitstream#2, the decoder needs to first determine the probability distribution model, and then decode the Bitstream#2 based on the probability distribution model. To obtain the probability distribution model, still referring to FIG. 4B, after obtaining the coefficient hyperparameter feature z_hat, the decoder may perform inverse transformation of coefficient hyperparameter feature on the coefficient hyperparameter feature z_hat to obtain a probability distribution parameter. For example, the coefficient hyperparameter feature z_hat is input into the probability hyperparameter decoding network by the decoder, and inverse transformation of coefficient hyperparameter feature is performed on the coefficient hyperparameter feature z_hat by the probability hyperparameter decoding network to obtain the probability distribution parameter p. After obtaining the probability distribution parameter, the decoder may generate the probability distribution model based on the probability distribution parameter.

The probability hyperparameter decoding network may be a trained neural network, a training process of the probability hyperparameter decoding network is not limited, as long as the inverse transformation of coefficient hyperparameter feature can be performed on the coefficient hyperparameter feature z_hat.

In a possible implementation, the above processing procedure of the decoder may be performed by a deep learning model or a neural network model, to implement an end-to-end picture compression and decoding process, and the decoding process is not limited.

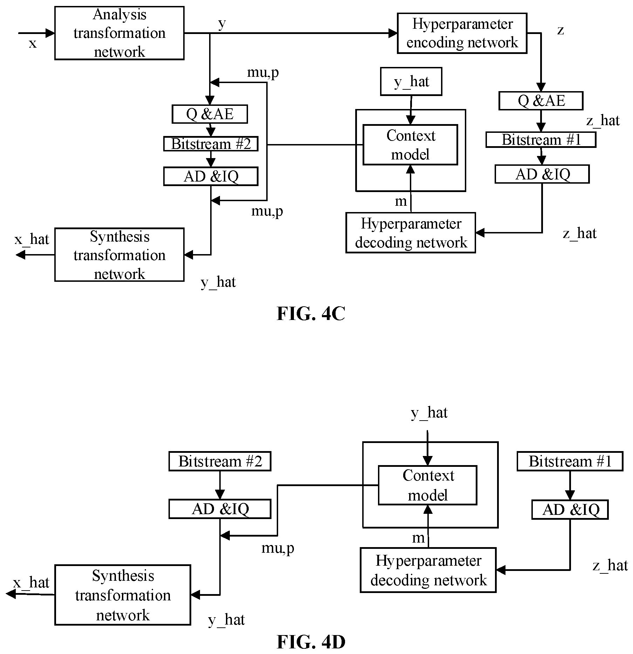

In the methods described in the above embodiments, a processing procedure of the encoder is shown in FIG. 4C, and certainly, FIG. 4C is merely an example of the processing procedure of the encoder, and the processing procedure of the encoder is not limited.

After obtaining the current picture block x, the encoder may perform analysis transformation on the current picture block x by an analysis transformation network, to obtain a picture feature y corresponding to the current picture block x. Performing feature transformation on the current picture block x by the analysis transformation network refers to: transforming the current picture block x to the picture feature y in the latent domain, thereby facilitating all subsequent processes to operate in the latent domain.

Exemplarily, the picture may be divided into one picture block, or may be divided into a plurality of picture blocks. And if the picture is divided into one picture block, the current picture block x may also be the picture, that is, an encoding process and a decoding process of the picture block may also be directly used for the picture.

After obtaining the picture feature y, the encoder performs coefficient hyperparameter feature transformation on the picture feature y to obtain the coefficient hyperparameter feature z. For example, the picture feature y is input into a hyperparameter encoding network, and the coefficient hyperparameter feature transformation is performed by the hyperparameter encoding network on the picture feature y to obtain the coefficient hyperparameter feature z. The hyperparameter encoding network may be a trained neural network, and can perform coefficient hyperparameter feature transformation on the picture feature y. The picture feature y in the latent domain passes through the hyperparameter encoding network to obtain hyper prior latent information z.

After obtaining the coefficient hyperparameter feature z, the encoder may quantize the coefficient hyperparameter feature z to obtain a hyperparameter quantization feature corresponding to the coefficient hyperparameter feature z, and encode the hyperparameter quantization feature to obtain the Bitstream#1 (i.e. the first bitstream) corresponding to the current picture block. In an embodiment, the encoder may also directly encode the coefficient hyperparameter feature z to obtain the Bitstream#1 corresponding to the current picture block. That is, the first bitstream is a bitstream encoded with the coefficient hyperparameter feature z corresponding to the current picture block x.

After obtaining the Bitstream#1 corresponding to the current picture block, the encoder may send the Bitstream#1 corresponding to the current picture block to the decoder. For a processing procedure performed by the decoder on the Bitstream#1 corresponding to the current picture block, refer to subsequent embodiments.

After obtaining the Bitstream#1 corresponding to the current picture block, the encoder may further decode the Bitstream#1 to obtain a hyperparameter quantization feature, and perform dequantization on the hyperparameter quantization feature to obtain a coefficient hyperparameter feature z_hat. In an embodiment, after obtaining the Bitstream#1 corresponding to the current picture block, the encoder may decode the Bitstream#1 to obtain the coefficient hyperparameter feature z_hat.

For the encoding process of the Bitstream#1, an encoding method of a fixed probability density model may be used, and for the decoding process of the Bitstream#1, a decoding method of a fixed probability density model may be used. This encoding and decoding processes are not limited.

After obtaining the coefficient hyperparameter feature z_hat, the encoder may input the coefficient hyperparameter feature z_hat into the hyperparameter decoding network, and the hyperparameter decoding network performs processing based on the coefficient hyperparameter feature z_hat, to obtain a reference feature m (the reference feature m is an intermediate parameter for the mean feature and the probability distribution parameter). The processing procedure of the hyperparameter decoding network is not limited.

After obtaining the reference feature m, the encoder may input the reference feature m and the decoded reconstructed feature y_hat (that is, the obtained reconstructed feature of the current picture block, and for a process of determining the reconstructed feature y_hat, refer to subsequent embodiments) into a context model, and the context model performs a context-based prediction process, to obtain the target mean feature mu (i.e., the predicted value mu, i.e. the mean value mu) and the probability distribution parameter p corresponding to the current picture block. For example, for the prediction process of the context model, the input data of the context model includes the reference feature m and the decoded reconstructed feature y_hat. A more accurate target mean feature mu and a more accurate probability distribution parameter p are obtained by jointly inputting the reference feature m and the decoded reconstructed feature y_hat. The target mean feature mu is subtracted from the original feature to obtain a residual r_hat, and the target mean feature mu is added to the decoded residual to obtain the reconstructed feature y_hat. The probability distribution parameter p is used to encode the Bitstream#2.

After obtaining the picture feature y, the encoder may determine the residual feature r based on the picture feature y and the target mean feature mu, for example, use a difference between the picture feature y and the target mean feature mu as the residual feature r. Then, feature processing is performed on the residual feature r to obtain the picture feature s, which is not limited and may be any feature processing method. In an embodiment, after obtaining the picture feature y, the encoder may perform feature processing on the picture feature y to obtain the picture feature s, which is not limited and may be any feature processing method. After obtaining the picture feature s, the encoder may quantize the picture feature s to obtain a picture quantization feature corresponding to the picture feature s, and encode the picture quantization feature to obtain the Bitstream#2 (i.e. the second bitstream) corresponding to the current picture block. In an embodiment, after obtaining the picture feature s, the encoder may also directly encode the picture feature s to obtain the Bitstream#2 corresponding to the current picture block, without involving the quantization process of the picture feature s.

In an embodiment, after obtaining the residual feature r, the encoder may not perform feature processing on the residual feature r, but directly quantize the residual feature r to obtain a picture quantization feature corresponding to the residual feature r, and the encoder encodes the picture quantization feature to obtain the Bitstream#2 (i.e., the second bitstream) corresponding to the current picture block. In an embodiment, after obtaining the residual feature r, the encoder directly encodes the residual feature r to obtain the Bitstream#2 corresponding to the current picture block, without involving a quantization process. That is, the second bitstream is a bitstream encoded with the residual feature r corresponding to the current picture block x.

Exemplarily, when encoding the feature to obtain the Bitstream#2 corresponding to the current picture block, the encoder may generate a probability distribution model based on the probability distribution parameter p, and then encode the feature based on the probability distribution model.

After obtaining the Bitstream#2 corresponding to the current picture block, the encoder may send the Bitstream#2 corresponding to the current picture block to the decoder. For a processing procedure performed by the decoder on the Bitstream#2 corresponding to the current picture block, refer to subsequent embodiments.

After obtaining the Bitstream#2 corresponding to the current picture block, the encoder may further decode the Bitstream#2 to obtain a picture quantization feature, and perform dequantization on the picture quantization feature to obtain the picture feature s'. In an embodiment, after obtaining the Bitstream#2 corresponding to the current picture block, the encoder may further decode the Bitstream#2 to obtain the picture feature s', without involving the dequantization process of the picture quantization feature. After obtaining the picture feature s', the encoder may perform feature recovery on the picture feature s', where the feature recovery is not limited, and may be any feature recovery manner, to obtain the residual feature r_hat.

In an embodiment, after obtaining the Bitstream#2 corresponding to the current picture block, the encoder may further decode the Bitstream#2 to obtain the picture quantization feature, and then the encoder may perform dequantization on the picture quantization feature to obtain the residual feature r_hat. In an embodiment, after obtaining the Bitstream#2 corresponding to the current picture block, the encoder may further decode the Bitstream#2 to obtain the residual feature r_hat, without involving the dequantization of the picture quantization feature.

Exemplarily, when decoding the Bitstream#2, the encoder may generate the probability distribution model based on the probability distribution parameter, then decode the Bitstream#2 based on the probability distribution model. The decoding process is not limited.

After obtaining the residual feature r_hat, the encoder determines a picture feature y_hat (that is, a reconstructed feature) based on the residual feature r_hat and the target mean feature mu, for example, a sum of the residual feature r_hat and the target mean feature mu is used as the reconstructed feature y_hat.

After obtaining the reconstructed feature y_hat, the encoder may perform synthesis transformation on the reconstructed feature y_hat to obtain the reconstructed picture block x_hat corresponding to the current picture block x. For example, the reconstructed feature y_hat is input into a synthesis transformation network, and the synthesis transformation is performed by the synthesis transformation network on the reconstructed feature y_hat to obtain the reconstructed picture block x_hat. So far, the picture reconstruction process is completed.

In a possible implementation, the above processing procedure of the encoder may be performed by a deep learning model or a neural network model, to implement an end-to-end picture compression and encoding process, and the encoding process is not limited.

In the methods described in the above embodiments, a processing procedure of the decoder is shown in FIG. 4D, and certainly, FIG. 4D is merely an example of the processing procedure of the decoder, and the processing procedure of the decoder is not limited.

After obtaining the Bitstream#1 corresponding to the current picture block, the decoder may further decode the Bitstream#1 to obtain a hyperparameter quantization feature, and perform dequantization on the hyperparameter quantization feature to obtain a coefficient hyperparameter feature z_hat. In an embodiment, after obtaining the Bitstream#1 corresponding to the current picture block, the decoder may decode the Bitstream#1 to obtain the coefficient hyperparameter feature z_hat.

For the decoding process of the Bitstream#1, a decoding method of a fixed probability density model may be used, which is not limited.

The picture may be divided into one picture block, or may be divided into a plurality of picture blocks. And if the picture is divided into one picture block, the current picture block x may also be the picture, that is, the decoding process of the picture block may also be directly used for the picture.

After obtaining the coefficient hyperparameter feature z_hat, the decoder may input the coefficient hyperparameter feature z_hat into the hyperparameter decoding network, and the hyperparameter decoding network performs processing based on the coefficient hyperparameter feature z_hat, to obtain a reference feature m (the reference feature m is an intermediate parameter for the mean feature and the probability distribution parameter). The processing procedure of the hyperparameter decoding network is not limited.

After obtaining the reference feature m, the decoder may input the reference feature m and the decoded reconstructed feature y_hat (that is, the obtained reconstructed feature of the current picture block, and for a process of determining the reconstructed feature y_hat, refer to subsequent embodiments) into a context model, and the context model performs a context-based prediction process, to obtain the target mean feature mu (i.e., the predicted value mu, i.e. the mean value mu) and the probability distribution parameter p corresponding to the current picture block. For example, for the prediction process of the context model, the input data of the context model includes the reference feature m and the decoded reconstructed feature y_hat. A more accurate target mean feature mu and a more accurate probability distribution parameter p are obtained by jointly inputting the reference feature m and the decoded reconstructed feature y_hat. The target mean feature mu is subtracted from the original feature to obtain a residual r_hat, and the target mean feature mu is added to the decoded residual to obtain the reconstructed feature y_hat. The probability distribution parameter p is used to decode the Bitstream#2.

After obtaining the Bitstream#2 corresponding to the current picture block, the decoder may further decode the Bitstream#2 to obtain a picture quantization feature, and perform dequantization on the picture quantization feature to obtain the picture feature s'. In an embodiment, after obtaining the Bitstream#2 corresponding to the current picture block, the decoder may further decode the Bitstream#2 to obtain the picture feature s', without involving the dequantization process of the picture quantization feature. After obtaining the picture feature s', the decoder may perform feature recovery on the picture feature s', where the feature recovery is not limited, and may be any feature recovery manner, to obtain the residual feature r_hat.

In an embodiment, after obtaining the Bitstream#2 corresponding to the current picture block, the decoder may further decode the Bitstream#2 to obtain the picture quantization feature, and then the decoder may perform dequantization on the picture quantization feature to obtain the residual feature r_hat. In an embodiment, after obtaining the Bitstream#2 corresponding to the current picture block, the decoder may further decode the Bitstream#2 to obtain the residual feature r_hat, without involving the dequantization of the picture quantization feature.

Exemplarily, when decoding the Bitstream#2, the decoder may generate the probability distribution model based on the probability distribution parameter, then decode the Bitstream#2 based on the probability distribution model. The decoding process is not limited.

After obtaining the residual feature r_hat, the decoder determines a picture feature y_hat (that is, a reconstructed feature) based on the residual feature r_hat and the target mean feature mu, for example, a sum of the residual feature r_hat and the target mean feature mu is used as the reconstructed feature y_hat.

After obtaining the reconstructed feature y_hat, the decoder may perform synthesis transformation on the reconstructed feature y_hat to obtain the reconstructed picture block x_hat corresponding to the current picture block x. For example, the reconstructed feature y_hat is input into a synthesis transformation network, and the synthesis transformation is performed by the synthesis transformation network on the reconstructed feature y_hat to obtain the reconstructed picture block x_hat. So far, the picture reconstruction process is completed.

In a possible implementation, the above processing procedure of the decoder may be performed by a deep learning model or a neural network model, to implement an end-to-end picture compression and decoding process, and the decoding process is not limited.

In the above embodiment, for the encoder and the decoder, after the first bitstream (Bitstream#1) corresponding to the current picture block is obtained, the first bitstream corresponding to the current picture block may be decoded to obtain the coefficient hyperparameter feature z_hat corresponding to the current picture block. That is, the first bitstream corresponding to the current picture block is a bitstream encoded with the coefficient hyperparameter feature z corresponding to the current picture block x. The probability distribution parameter p may be determined based on the coefficient hyperparameter feature z_hat. For example, the probability distribution parameter p is obtained by inputting the coefficient hyperparameter feature z_hat into the probability hyperparameter decoding network. The second bitstream (Bitstream#2) corresponding to the current picture block may be decoded based on the probability distribution parameter p, to obtain the residual feature r_hat corresponding to the current picture block. That is, the second bitstream corresponding to the current picture block is a bitstream encoded with the residual feature r corresponding to the current picture block x.

The target mean feature mu corresponding to the current picture block may be determined based on the coefficient hyperparameter feature z_hat. For example, the coefficient hyperparameter feature z_hat may be input into a mean hyperparameter decoding network to obtain an initial mean feature m corresponding to the current picture block, and the initial mean feature m is used as the target mean feature mu. In an embodiment, the coefficient hyperparameter feature z_hat may be input into the mean hyperparameter decoding network to obtain the initial mean feature m corresponding to the current picture block. The initial mean feature m and the obtained reconstructed feature y_hat of the current picture block may be input into the context model to obtain the target mean feature mu.

The reconstructed feature y_hat corresponding to the current picture block is determined based on the target mean feature mu and the residual feature r_hat, and the reconstructed picture block x_hat corresponding to the current picture block is determined based on the reconstructed feature y_hat. For example, the reconstructed feature y_hat may be input into the synthesis transformation network to obtain the reconstructed picture block x_hat corresponding to the current picture block.

In the above embodiment, for the encoder and the decoder, after the first bitstream (Bitstream#1) corresponding to the current picture block is obtained, the first bitstream corresponding to the current picture block may be decoded to obtain the coefficient hyperparameter feature z_hat corresponding to the current picture block. That is, the first bitstream corresponding to the current picture block is a bitstream encoded with the coefficient hyperparameter feature z corresponding to the current picture block x. The probability distribution parameter p and the target mean feature mu corresponding to the current picture block may be determined based on the coefficient hyperparameter feature z_hat. For example, the coefficient hyperparameter feature z_hat may be input into the hyperparameter decoding network, to obtain the reference feature m corresponding to the current picture block. Then, the reference feature m and the obtained reconstructed feature y_hat of the current picture block may be input into the context model to obtain the probability distribution parameter p and the target mean feature mu.

The second bitstream (Bitstream#2) corresponding to the current picture block may be decoded based on the probability distribution parameter p, to obtain the residual feature r_hat corresponding to the current picture block. That is, the second bitstream corresponding to the current picture block is a bitstream encoded with the residual feature r corresponding to the current picture block x. The reconstructed feature y_hat corresponding to the current picture block is determined based on the target mean feature mu and the residual feature r_hat, and the reconstructed picture block x_hat corresponding to the current picture block is determined based on the reconstructed feature y_hat. For example, the reconstructed feature y_hat may be input into the synthesis transformation network to obtain the reconstructed picture block x_hat corresponding to the current picture block.

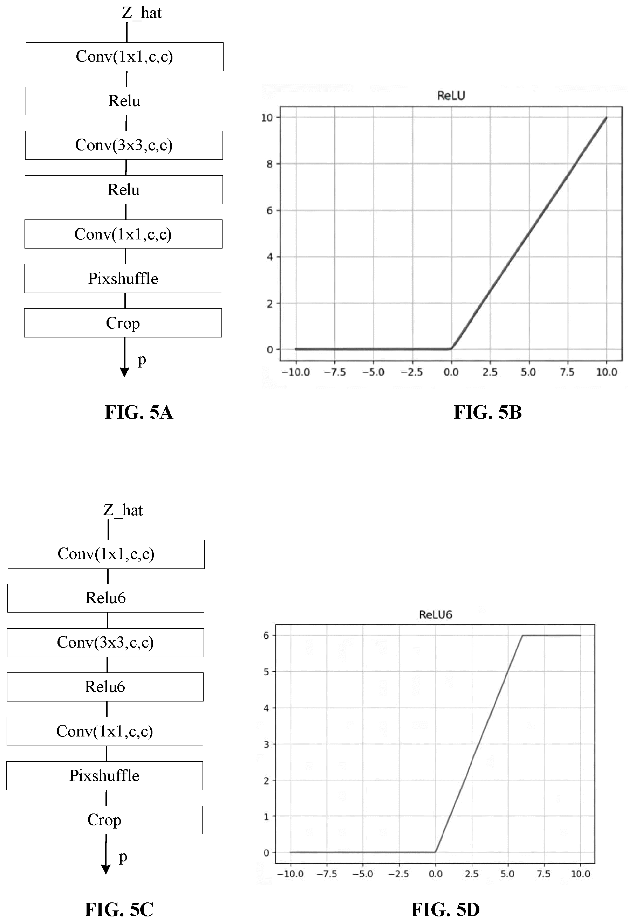

In the above embodiments, for the encoder and the decoder, the coefficient hyperparameter feature z_hat may be input into the probability hyperparameter decoding network, to obtain the probability distribution parameter p. The probability hyperparameter decoding network may be a trained neural network, and is configured to perform inverse transformation of coefficient hyperparameter feature on the coefficient hyperparameter feature z_hat. For example, a structure of the probability hyperparameter decoding network is shown in FIG. 5A. However, FIG. 5A is merely an example of the probability hyperparameter decoding network, and the structure of the probability hyperparameter decoding network is not limited in this disclosure. The probability hyperparameter decoding network in FIG. 5A is used as an example for description subsequently.

Exemplarily, the probability hyperparameter decoding network may sequentially include: a convolution layer (for example, a convolution layer with a size of 1*1, where a quantity of input channels is c, and a quantity of output channels is c), a Relu activation layer, a convolution layer (for example, a convolution layer with a size of 3*3, where a quantity of input channels is c, and a quantity of output channels is c), a Relu activation layer, a convolution layer (for example, a convolution layer with a size of 1*1, where a quantity of input channels is c, and a quantity of output channels is c), a Pixshuffle (upsampling) layer, and a Crop layer. The Crop layer is used to crop and align the upsampled pixel positions. The Crop layer may be located behind the Pixshuffle layer, to ensure that the feature maps are aligned in size.

As shown in FIG. 5A, input data of the probability hyperparameter decoding network is the coefficient hyperparameter feature z_hat. After the coefficient hyperparameter feature z_hat is processed by the probability hyperparameter decoding network, the probability distribution parameter p may be obtained and output.

Referring to FIG. 5A, the probability hyperparameter decoding network may include an activation layer, and the activation layer may use a Relu activation function. For example, the Relu activation function may refer to FIG. 5B, that is, the Relu activation function corresponds to a lower threshold. By limiting the lower limit of the output feature as the input feature decreases, the activation layer does not output an output feature with a small value.

In this embodiment, the activation layer of the probability hyperparameter decoding network may also be optimized, so that the activation layer adopts a target activation function clamped up and down, that is, the activation layer performs non-linear adjustment on the features by using the target activation function clamped up and down. For example, the target activation function may be a Relu6 activation function or other activation functions, as long as upper clamping and lower clamping are implemented at the same time. The Relu6 activation function is used as an example for description subsequently. Referring to FIG. 5C, which is a schematic structural diagram of a probability hyperparameter decoding network, where the Relu activation layer is replaced with a Relu6 activation layer, that is, a Relu6 activation function is used for processing. The activation layer of the probability hyperparameter decoding network may also be optimized, so that the activation layer adopts an activation function, and the activation function corresponds to an upper threshold, that is, an upper limit of the activation layer is limited, and a lower limit of the activation layer is not limited.

The Relu6 activation function (i.e., the target activation function clamped up and down) is shown in FIG. 5D. The Relu6 activation function corresponds to an upper threshold and a lower threshold. The lower limit of the output feature is limited as the input feature decreases, so that the output feature of the activation layer is not less than the lower limit threshold (take 0 as an example in FIG. 5D for description). The upper limit of the output feature is limited as the input feature increases, so that the output feature of the activation layer is not greater than the upper limit threshold (take 6 as an example in FIG. 5D for description). The Relu6 activation function limits the lower limit and the upper limit, so that the output feature is located in a specified interval (between the lower threshold and the upper threshold), and the activation layer does not output an output feature with a large value or a small value.

For example, the upper threshold corresponding to the Relu6 activation function may be a configured fixed upper threshold. That is, a certain fixed upper threshold is used as the upper threshold corresponding to the Relu6 activation function by default, for example, the fixed upper threshold is 6 in FIG. 5D. The lower threshold corresponding to the Relu6 activation function may be a configured fixed lower threshold. That is, a certain fixed lower threshold is used as the lower threshold corresponding to the Relu6 activation function by default, for example, the fixed lower threshold is 0 in 5D. Certainly, both the fixed upper threshold and the fixed lower threshold may be configured according to experience. The fixed upper threshold and the fixed lower threshold are not limited in this embodiment.

Exemplarily, the upper threshold corresponding to the Relu6 activation function may be an adaptive learned upper threshold. That is, the upper threshold corresponding to the Relu6 activation function is determined through a training process, rather than a fixed upper threshold. The learning process of the upper threshold is not limited in this embodiment. The lower threshold corresponding to the Relu6 activation function may be an adaptive learned lower threshold. That is, the lower threshold corresponding to the Relu6 activation function is determined through a training process, rather than a fixed lower threshold.

In an embodiment, the upper threshold corresponding to the Relu6 activation function may be an adaptive learned upper threshold, rather than a fixed upper threshold, and the lower threshold corresponding to the Relu6 activation function may be a fixed lower threshold.

In an embodiment, the lower threshold corresponding to the Relu6 activation function may be an adaptive learned lower threshold, rather than a fixed lower threshold, and the upper threshold corresponding to the Relu6 activation function may be a fixed upper threshold.

Exemplarily, when adaptively learning the upper threshold corresponding to the Relu6 activation function, the same upper threshold may be learned for all channels of the activation layer. That is, only one upper threshold needs to be adaptively learned, and this upper threshold is used as the upper threshold of all channels of the activation layer. In an embodiment, when adaptively learning the upper threshold corresponding to the Relu6 activation function, an upper threshold may be separately learned for each channel of the activation layer. That is, assuming that the activation layer corresponds to K channels (K represents the number of channels of the input feature, and K is a positive integer), K upper thresholds need to be adaptively learned. The K upper thresholds are in one-to-one correspondence with the K channels. Each channel separately corresponds to an upper threshold, and upper thresholds corresponding to different channels may be the same or different.

Exemplarily, when adaptively learning the lower threshold corresponding to the Relu6 activation function, the same lower threshold may be learned for all channels of the activation layer. That is, only one lower threshold needs to be adaptively learned, and this lower threshold is used as the lower threshold of all channels of the activation layer. In an embodiment, when the lower threshold corresponding to the Relu6 activation function is adaptively learned, a lower threshold may be separately learned for each channel of the activation layer. That is, assuming that the activation layer corresponds to K channels (K represents the number of channels of the input feature, and K is a positive integer), K lower thresholds need to be adaptively learned. The K lower thresholds are in one-to-one correspondence with the K channels. Each channel separately corresponds to a lower threshold, and lower thresholds corresponding to different channels may be the same or different.

In the above embodiments, for the encoder and the decoder, the coefficient hyperparameter feature z_hat may be input into the mean hyperparameter decoding network, to obtain the initial mean feature m corresponding to the current picture block. For example, a structure of the mean hyperparameter decoding network may refer to FIG. 6A. However, FIG. 6A is merely an example of the mean hyperparameter decoding network, and the structure of the mean hyperparameter decoding network is not limited in this disclosure. Subsequently, the mean hyperparameter decoding network in FIG. 6A is used as an example.

Exemplarily, the mean hyperparameter decoding network may sequentially include: a convolution layer (for example, a convolution layer with a size of 1*1, where a quantity of input channels is c, and a quantity of output channels is c), a transposed convolution layer TConv (for example, a convolution layer with a size of 4*4, where a quantity of input channels is c, a quantity of output channels is c, and a convolution stride is s2), a Crop layer, a Relu activation layer, a convolution layer (for example, a convolution layer with a size of 3*3, where a quantity of input channels is c, and a quantity of output channels is c), a Relu activation layer, and a convolution layer (for example, a convolution layer with a size of 3*3, where a quantity of input channels is c, and a quantity of output channels is c). As shown in FIG. 6A, input data of the mean hyperparameter decoding network is the coefficient hyperparameter feature z_hat. After the coefficient hyperparameter feature z_hat is processed by the mean hyperparameter decoding network, the initial mean feature m may be obtained and output.

Referring to FIG. 6A, the mean hyperparameter decoding network may include an activation layer. The activation layer may adopt a Relu activation function. For example, the Relu activation function may refer to FIG. 5B. On this basis, the activation layer of the mean hyperparameter decoding network may also be optimized, so that the activation layer adopts a target activation function clamped up and down. That is, non-linear adjustment is performed on the features by adopting the target activation function clamped up and down. For example, the target activation function may be a Relu6 activation function or other activation functions, as long as upper clamping and lower clamping are implemented at the same time. Referring to FIG. 6B, which is a schematic structural diagram of a mean hyperparameter decoding network, where the Relu activation layer is replaced with a Relu6 activation layer, that is, the Relu6 activation function is used for processing. Certainly, the activation layer of the mean hyperparameter decoding network may also be optimized, so that the activation layer adopts an activation function, and the activation function corresponds to an upper threshold, that is, an upper limit of the activation layer is limited, and a lower limit of the activation layer is not limited.

The Relu6 activation function may refer to FIG. 5D. The Relu6 activation function corresponds to an upper threshold and a lower threshold. The upper threshold corresponding to the Relu6 activation function may be a configured fixed upper threshold. The lower threshold corresponding to the Relu6 activation function may be a configured fixed lower threshold. In an embodiment, the upper threshold corresponding to the Relu6 activation function may be an adaptive learned upper threshold, and/or the lower threshold corresponding to the Relu6 activation function may be an adaptive learned lower threshold.

Exemplarily, when adaptively learning the upper threshold corresponding to the Relu6 activation function, the same upper threshold may be learned for all channels of the activation layer. In an embodiment, an upper threshold may be separately learned for each channel of the activation layer.

Exemplarily, when adaptively learning the lower threshold corresponding to the Relu6 activation function, the same lower threshold may be learned for all channels of the activation layer. In an embodiment, a lower threshold may be separately learned for each channel of the activation layer.

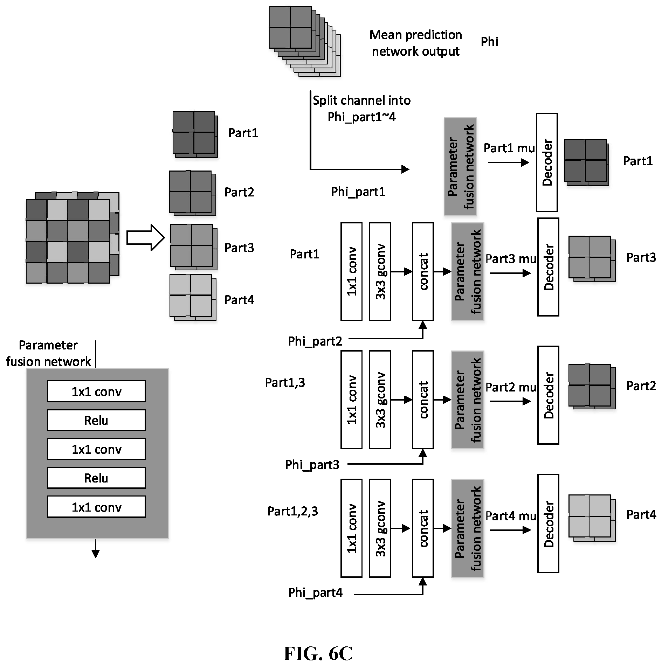

In above embodiment, for the encoder and the decoder, the initial mean feature m and the obtained reconstructed feature y_hat of the current picture block into the context model to obtain the target mean feature mu. For example, a structure of the context model may refer to FIG. 6C. However, FIG. 6C is merely an example of the context model, and a structure of the context model is not limited in this disclosure. The context model in FIG. 6C is used as an example for description subsequently.

Exemplarily, the context model may include a plurality of parameter fusion networks. For each parameter fusion network, the parameter fusion network may sequentially include: a convolution layer (for example, a convolution layer with a size of 1*1), a Relu activation layer, a convolution layer (for example, a convolution layer with a size of 1*1), a Relu activation layer, and a convolution layer (for example, a convolution layer with a size of 1*1). Referring to FIG. 6C, the input data of the context model is the initial mean feature m and the reconstructed feature y_hat. After the input data is processed by the context model, the target mean feature mu may be obtained and output. The processing procedure of the context model is not limited.

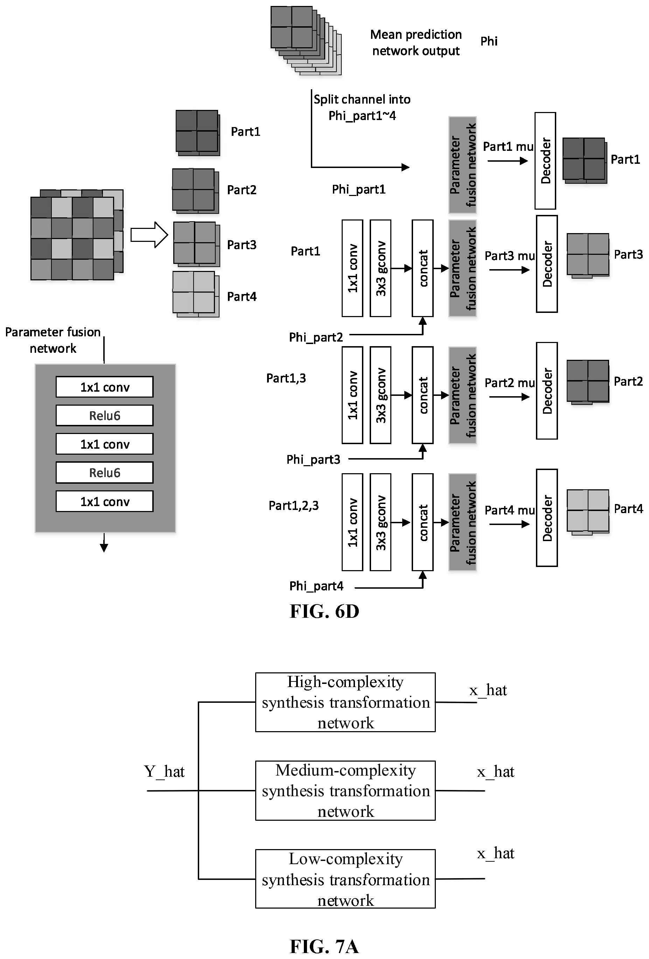

Referring to FIG. 6C, the parameter fusion network of the context model may include an activation layer. The activation layer may adopt a Relu activation function. The Relu activation function may refer to FIG. 5B. On this basis, the activation layer of the parameter fusion network may be optimized, so that the activation layer adopts a target activation function clamped up and down. That is, non-linear adjustment is performed on the features by adopting the target activation function clamped up and down. For example, the target activation function may be a Relu6 activation function or other activation functions, as long as upper clamping and lower clamping are implemented at the same time. The structure of the parameter fusion network of the context model is shown in FIG. 6D. As shown in FIG. 6D, the Relu activation layer of the parameter fusion network is replaced with the Relu6 activation layer. Certainly, the activation layer of the context model may also be optimized, so that the activation layer adopts an activation function, and the activation function corresponds to an upper threshold, that is, an upper limit of the activation layer is limited, and a lower limit of the activation layer is not limited.

The Relu6 activation function may refer to FIG. 5D. The Relu6 activation function corresponds to an upper threshold and a lower threshold. The upper threshold corresponding to the Relu6 activation function may be a configured fixed upper threshold. The lower threshold corresponding to the Relu6 activation function may be a configured fixed lower threshold. In an embodiment, the upper threshold corresponding to the Relu6 activation function may be an adaptive learned upper threshold, and/or the lower threshold corresponding to the Relu6 activation function may be an adaptive learned lower threshold.

Exemplarily, when adaptively learning the upper threshold corresponding to the Relu6 activation function, the same upper threshold may be learned for all channels of the activation layer. In an embodiment, an upper threshold may be separately learned for each channel of the activation layer.

Exemplarily, when adaptively learning the lower threshold corresponding to the Relu6 activation function, the same lower threshold may be learned for all channels of the activation layer. In an embodiment, a lower threshold may be separately learned for each channel of the activation layer.

In the above embodiment, the Relu activation functions in the probability hyperparameter decoding network, the mean hyperparameter decoding network, and the context model may be replaced with the Relu6 activation function. If the probability hyperparameter decoding network has an activation layer adopting the LeakyRelu activation function, the LeakyRelu activation function may also be replaced with the Relu6 activation function, which is not limited. And/or if the mean hyperparameter decoding network has an activation layer adopting the LeakyRelu activation function, the LeakyRelu activation function may also be replaced with the Relu6 activation function, which is not limited. And/or if the context model has an activation layer adopting the LeakyRelu activation function, the LeakyRelu activation function may also be replaced with the Relu6 activation function, which is not limited.

In above embodiment, for the encoder and the decoder, the coefficient hyperparameter feature z_hat may be input into the hyperparameter decoding network to obtain the reference feature m. The reference feature m and the obtained reconstructed feature y_hat of the current picture block may be input into the context model to obtain the probability distribution parameter p and the target mean feature mu.

The structure of the context model may refer to FIG. 6C. The context model may include a plurality of parameter fusion networks. And the parameter fusion networks may sequentially include a convolution layer, a Relu activation layer, a convolution layer, a Relu activation layer, and a convolution layer. The structure of the hyperparameter decoding network is not limited in this embodiment, and the hyperparameter decoding network may include at least one Relu activation layer.

For the context model and the hyperparameter decoding network, the activation layer may adopt a Relu activation function. The Relu activation function may refer to FIG. 5B. On this basis, the activation layer of the context model and/or the hyperparameter decoding network may be optimized, so that the activation layer adopts a target activation function clamped up and down. That is, non-linear adjustment is performed on the features by adopting the target activation function clamped up and down. For example, the target activation function may be a Relu6 activation function. That is, the Relu activation function is replaced with the Relu6 activation layer. The activation layer of the context model and/or the hyperparameter decoding network may also be optimized, so that the activation layer adopts an activation function, and the activation function corresponds to an upper threshold, that is, an upper limit of the activation layer is limited, and a lower limit of the activation layer is not limited.

The Relu6 activation function may refer to FIG. 5D. The Relu6 activation function corresponds to an upper threshold and a lower threshold. The upper threshold corresponding to the Relu6 activation function may be a configured fixed upper threshold. The lower threshold corresponding to the Relu6 activation function may be a configured fixed lower threshold. In an embodiment, the upper threshold corresponding to the Relu6 activation function may be an adaptive learned upper threshold, and/or the lower threshold corresponding to the Relu6 activation function may be an adaptive learned lower threshold.

Exemplarily, when adaptively learning the upper threshold corresponding to the Relu6 activation function, the same upper threshold may be learned for all channels of the activation layer. In an embodiment, an upper threshold may be separately learned for each channel of the activation layer.

Exemplarily, when adaptively learning the lower threshold corresponding to the Relu6 activation function, the same lower threshold may be learned for all channels of the activation layer. In an embodiment, a lower threshold may be separately learned for each channel of the activation layer.

In the above embodiments, for the encoder and the decoder, the reconstructed feature y_hat may be input into the synthesis transformation network to obtain a reconstructed picture block x_hat corresponding to the current picture block. The synthesis transformation network may be a trained neural network for performing synthesis transformation on the reconstructed feature y_hat. For example, the synthesis transformation network may correspond to three branches. The three branches are respectively a high-complexity synthesis transformation network, a medium-complexity synthesis transformation network, and a low-complexity synthesis transformation network. The quality of the picture output by the three branches is different. At least one of the high-complexity synthesis transformation network, the medium-complexity synthesis transformation network, and the low-complexity synthesis transformation network may be deployed based on computing power. For example, for a decoder with high computing power, the high-complexity synthesis transformation network, the medium-complexity synthesis transformation network, and the low-complexity synthesis transformation network may be deployed at the same time. If a reconstructed picture block x_hat with high picture quality needs to be output, the reconstructed feature y_hat may be input into the high-complexity synthesis transformation network. If a reconstructed picture block x_hat with low picture quality needs to be output, the reconstructed feature y_hat may be input into the low-complexity synthesis transformation network. And if a reconstructed picture block x_hat with moderate picture quality needs to be output, the reconstructed feature y_hat may be input into the medium-complexity synthesis transformation network. For another example, for a decoder with low computing power, only the low-complexity synthesis transformation network may be deployed. The reconstructed feature y_hat is input into the low-complexity synthesis transformation network. Taking the deployment of three branches as an example, referring to FIG. 7A, which is a schematic structural diagram of a synthesis transformation network. Three branches of the synthesis transformation network are shown in FIG. 7A.

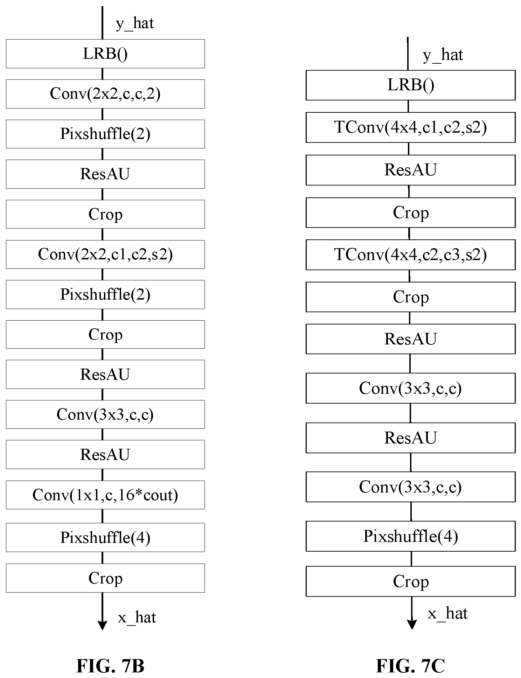

For example, a structure of the low-complexity synthesis transformation network may refer to FIG. 7B. However, FIG. 7B is merely an example of the low-complexity synthesis transformation network, which is not limited in this disclosure, and FIG. 7B is used as an example subsequently. The low-complexity synthesis transformation network may sequentially include: an LRB layer, a convolution layer (Conv, for example, a convolution layer with a size of 2*2, where a quantity of input channels is c, a quantity of output channels is c, and a convolution stride is 2), a Pixshuffle layer (for example, a 2 × upsampling layer), a ResAU layer, a Crop layer, a convolution layer (Conv, for example, a convolution layer with a size of 2*2, where a quantity of input channels is c1, a quantity of output channels is c2, and a convolution stride is s2), a Pixshuffle layer (for example, a 2 × upsampling layer), a Crop layer, a ResAU layer, a convolution layer (for example, a convolution layer with a size of 3*3, where a quantity of input channels is c, and a quantity of output channels is c), a ResAU layer, a convolution layer (for example, a convolution layer with a size of 1*1, where a quantity of input channels is c, and a quantity of output channels is 16*out), a Pixshuffle layer (for example, a 4 × upsampling layer), and a Crop layer. The Crop layer is used to crop and align the upsampled pixel positions. The Crop layer may be located behind the Pixshuffle layer, to ensure that the feature maps are aligned in size.

Referring to FIG. 7B, input data of the low-complexity synthesis transformation network is the reconstructed feature y_hat. After the reconstructed feature y_hat is processed by the low-complexity synthesis transformation network, a reconstructed picture block x_hat may be obtained and output.

For example, a structure of the medium-complexity synthesis transformation network may refer to FIG. 7C. However, FIG. 7C is merely an example of the medium-complexity synthesis transformation network, which is not limited in this disclosure, and FIG. 7C is used as an example subsequently. The medium-complexity synthesis transformation network may sequentially include: an LRB layer, a transposed convolution layer (TConv, for example, a convolution layer with a size of 4*4, where a quantity of input channels is c1, a quantity of output channels is c2, and a convolution stride is S2), a ResAU layer, a Crop layer, a transposed convolution layer (TConv, for example, a convolution layer with a size of 4*4, where a quantity of input channels is c2, a quantity of output channels is c3, and a convolution stride is S2), a Crop layer, a ResAU layer, a convolution layer (Conv, for example, a convolution layer with a size of 3*3, where a quantity of input channels is c, and a quantity of output channels is c), a ResAU layer, a convolution layer (Conv, for example, a convolution layer with a size of 3*3, where a quantity of input channels is c, and a quantity of output channels is c), a Pixshuffle layer (for example, a 4 × upsampling layer), and a Crop layer. The input data of the medium-complexity synthesis transformation network is the reconstructed feature y_hat. After the reconstructed feature y_hat is processed by the medium-complexity synthesis transformation network, the reconstructed picture block x_hat may be obtained and output.

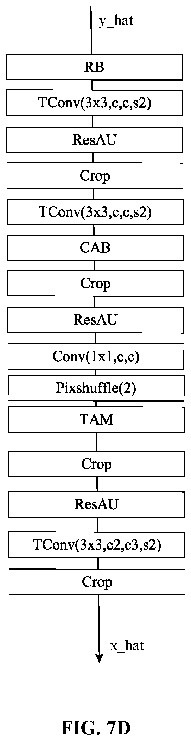

For example, a structure of the high-complexity synthesis transformation network may refer to FIG. 7D. However, FIG. 7D is merely an example of the high-complexity synthesis transformation network, which is not limited in this disclosure, and FIG. 7D is used as an example subsequently. The high-complexity synthesis transformation network may sequentially include: an RB layer, a transposed convolution layer (TConv, for example, a convolution layer with a size of 3*3, where a quantity of input channels is c, a quantity of output channels is c, and a convolution stride is S2), a ResAU layer, a Crop layer, a transposed convolution layer (TConv, for example, a convolution layer with a size of 3*3, where a quantity of input channels is c, a quantity of output channels is c, and a convolution stride is S2), a CAB layer, a Crop layer, a ResAU layer, a convolution layer (Conv, for example, a convolution layer with a size of 1*1, where a quantity of input channels is c, and a quantity of output channels is c), a Pixshuffle layer (for example, 2 × upsampling layer), a TAM layer, a Crop layer, a ResAU layer, a transposed convolution layer (TConv, for example, a convolution layer with a size of 3*3, where a quantity of input channels is c2, a quantity of output channels is c3, and a convolution stride is S2), and a Crop layer.

Referring to FIG. 7D, input data of the high-complexity synthesis transformation network is the reconstructed feature y_hat. After the reconstructed feature y_hat is processed by the high-complexity synthesis transformation network, a reconstructed picture block x_hat may be obtained and output.

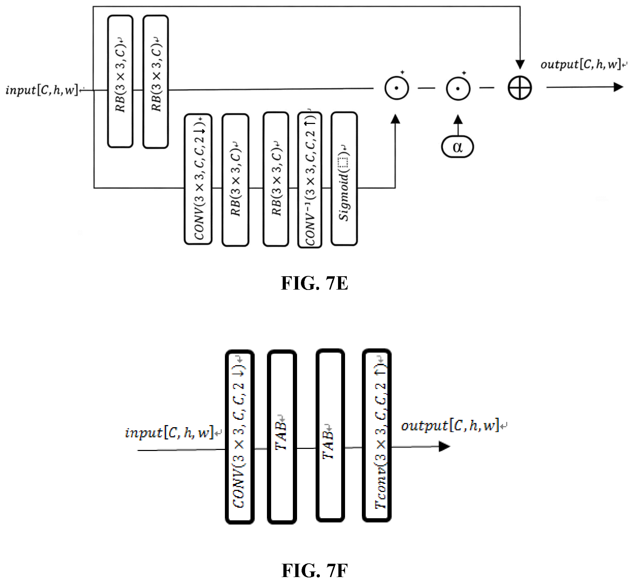

In FIG. 7D, the CAB layer is a convolution-base attention block, and a structure of the CAB layer may be shown in FIG. 7E. However, FIG. 7E is merely an example, which is not limited in this disclosure.

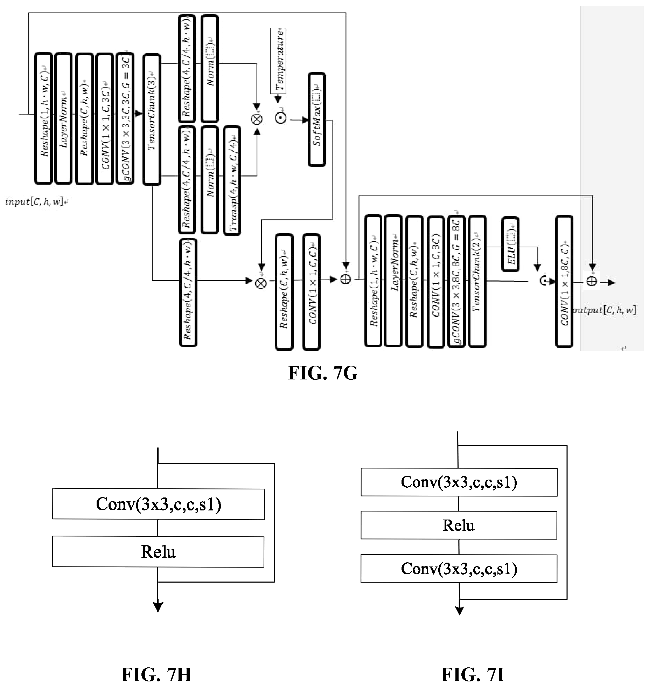

In FIG. 7D, the TAM layer is a Transformer-based attention block, and a structure of the TAM layer may be shown in FIG. 7F. However, FIG. 7F is merely an example, which is not limited in this disclosure. In an embodiment, a structure of the TAM layer may refer to FIG. 7G. And FIG. 7G is merely an example, which is not limited in this disclosure.

In FIG. 7B and FIG. 7C, the LRB layer is a Lightweight Residual Block. A structure of the LRB layer may be shown in FIG. 7H. However, FIG. 7H is merely an example, which is not limited in this disclosure. In FIG. 7D, the RB layer is Residual Block. The structure of the RB layer may be shown in FIG. 7I. However, FIG. 7I is merely an example, which is not limited in this disclosure.

In the above synthesis transformation network, an activation layer (such as the Relu activation functions in the LRB layer and the RB layer) adopting a Relu activation function may be involved. On this basis, the Relu activation function in the synthesis transformation network may be optimized. The Relu activation function is replaced with the target activation function (for example, the Relu6 activation function) clamped up and down. That is, non-linear adjustment is performed on the features by adopting the target activation function clamped up and down. The Relu6 activation function corresponds to an upper threshold and a lower threshold. The activation layer of the synthesis transformation network may also be optimized, so that the activation layer adopts an activation function, and the activation function corresponds to an upper threshold, that is, an upper limit of the activation layer is limited, and a lower limit of the activation layer is not limited.

The upper threshold corresponding to the Relu6 activation function may be a configured fixed upper threshold. The lower threshold corresponding to the Relu6 activation function may be a configured fixed lower threshold. In an embodiment, the upper threshold corresponding to the Relu6 activation function may be an adaptive learned upper threshold, and/or the lower threshold corresponding to the Relu6 activation function may be an adaptive learned lower threshold.

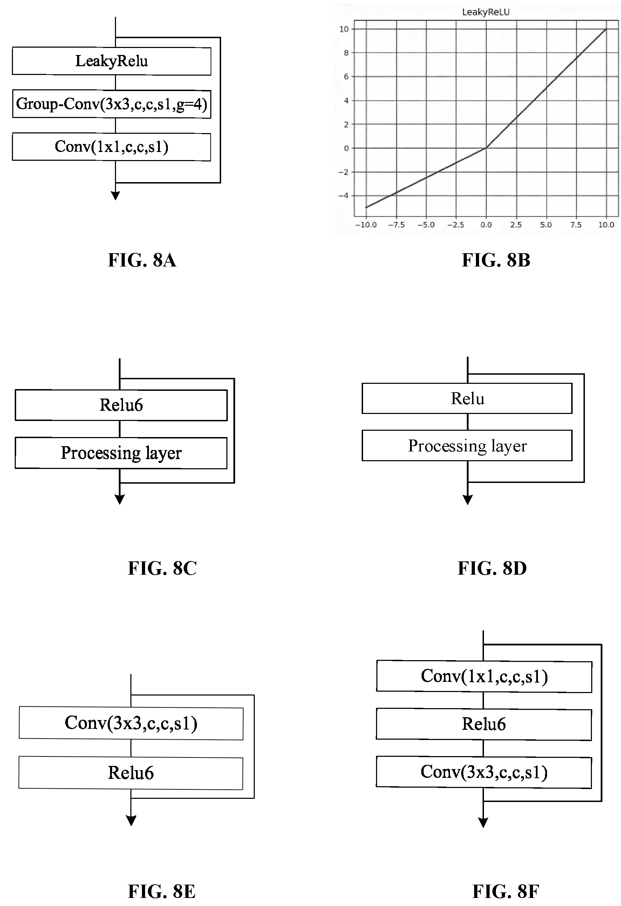

In the above embodiment, the high-complexity synthesis transformation network, the medium-complexity synthesis transformation network, and the low-complexity synthesis transformation network may all include a ResAU layer. A structure of the ResAU layer may be shown in FIG. 8A. The ResAU layer may sequentially include: a LeakyRelu activation layer (that is, an activation layer using a LeakyRelu activation function), a group convolution layer (Group-Conv, for example, a convolution layer with a size of 3*3, where a quantity of input channels is c, a quantity of output channels is c, a convolution stride is s1, and a quantity of groups g is 4), and a convolution layer (Conv, for example, a convolution layer with a size of 1*1, where a quantity of input channels is c, a quantity of output channels is c, and a convolution stride is s1). In addition, the ResAU layer may further include a skip connection structure. That is, an input feature of the ResAU layer is connected to an output feature of the convolution layer. Operations such as feature addition, feature multiplication, and feature splicing may be performed. For example, assuming that the input feature of the ResAU layer is a feature X1, the LeakyRelu activation layer processes the feature X1 to obtain a feature X2, the group convolution layer Group-Conv processes the feature X2 to obtain a feature X3, and the convolution layer Conv processes the feature X3 to obtain a feature X4. Through the skip connection structure, the feature X1 and the feature X4 may be added to obtain the output feature of the ResAU layer.

It can be seen from FIG. 8A that the input of the ResAU layer has a residual connection (i.e., a skip connection structure). The input feature of the ResAU layer sequentially passes through a LeakyRelu function (LeakyRelu activation layer), a group convolution (Group-Conv), and a 1×1 conventional convolution (convolution layer Conv), then is added to the residual connection to obtain the output feature of the ResAU layer.

The LeakyRelu activation layer of the ResAU layer adopts the LeakyRelu activation function, and the LeakyRelu activation function may refer to FIG. 8B. The LeakyRelu activation function does not correspond to a lower threshold or an upper threshold. Obviously, the upper limit of the output feature is not limited as the input feature increases, resulting in the activation layer possibly outputting an output feature with a large value. The lower limit of the output feature is not limited, as the input feature decreases, resulting in the activation layer possibly outputting an output feature with a small value. The LeakyRelu activation function has relatively high requirements on hardware complexity, resulting in relatively high complexity of the decoder.

On this basis, in an implementation of this disclosure, the activation layer of the ResAU layer may be optimized, so that the activation layer adopts the target activation function clamped up and down. That is, the activation layer performs non-linear adjustment on the features by using the target activation function clamped up and down. For example, the target activation function may be a Relu6 activation function or other activation functions, as long as upper clamping and lower clamping are implemented at the same time. The Relu6 activation function is used as an example for description subsequently. Referring to FIG. 8C, which is a schematic structural diagram of the ResAU layer. The LeakyRelu activation layer is replaced with the Relu6 activation layer. That is, the Relu6 activation function is used for processing.

The Relu6 activation function (i.e., the target activation function clamped up and down) is shown in FIG. 5D. The Relu6 activation function corresponds to an upper threshold and a lower threshold. The lower limit of the output feature is limited as the input feature decreases, so that the output feature of the activation layer is not less than the lower limit threshold. The upper limit of the output feature is limited as the input feature increases, so that the output feature of the activation layer is not greater than the upper limit threshold. The Relu6 activation function limits the lower limit and the upper limit, so that the output feature is located between the lower threshold and the upper threshold, and the activation layer does not output an output feature with a large value or a small value.

The upper threshold corresponding to the Relu6 activation function may be a configured fixed upper threshold. That is, a certain fixed upper threshold is used as the upper threshold corresponding to the Relu6 activation function by default. The lower threshold corresponding to the Relu6 activation function may be a configured fixed lower threshold. That is, a certain fixed lower threshold is used as the lower threshold corresponding to the Relu6 activation function by default.

The upper threshold corresponding to the Relu6 activation function may be an adaptive learned upper threshold. That is, the upper threshold corresponding to the Relu6 activation function is determined through a training process, rather than a fixed lower threshold. The lower threshold corresponding to the Relu6 activation function may be an adaptive learned lower threshold. That is, the lower threshold corresponding to the Relu6 activation function is determined through a training process, rather than a fixed lower threshold. In an embodiment, the upper threshold corresponding to the Relu6 activation function may be an adaptive learned upper threshold, the lower threshold corresponding to the Relu6 activation function may be a fixed lower threshold. In an embodiment, the lower threshold corresponding to the Relu6 activation function may be an adaptive learned lower threshold, the upper threshold corresponding to the Relu6 activation function may be a fixed upper threshold.

When adaptively learning the upper threshold corresponding to the Relu6 activation function, the same upper threshold may be learned for all channels of the activation layer. That is, only one upper threshold needs to be adaptively learned, and this upper threshold is used as the upper threshold of all channels of the activation layer. In an embodiment, when adaptively learning the upper threshold corresponding to the Relu6 activation function, an upper threshold may be separately learned for each channel of the activation layer. Assuming that the activation layer corresponds to K channels, K upper thresholds need to be adaptively learned. The K upper thresholds are in one-to-one correspondence with the K channels. Each channel separately corresponds to an upper threshold, and upper thresholds corresponding to different channels may be the same or different.

When adaptively learning the lower threshold corresponding to the Relu6 activation function, the same lower threshold may be learned for all channels of the activation layer. Only one lower threshold needs to be adaptively learned, and this lower threshold is used as the lower threshold of all channels of the activation layer. In an embodiment, when adaptively learning the lower threshold corresponding to the Relu6 activation function, a lower threshold may be separately learned for each channel of the activation layer. Assuming that the activation layer corresponds to K channels, K lower thresholds need to be adaptively learned. The K lower thresholds are in one-to-one correspondence with the K channels. Each channel separately corresponds to a lower threshold, and lower thresholds corresponding to different channels may be the same or different.

When the upper threshold and the lower threshold corresponding to the Relu6 activation function are adaptively learned, the Relu6 activation function may also be referred to as a ClipRelu6 activation function. When the ClipRelu6 activation function is extended to the channel level, i.e., the upper threshold and the lower threshold are separately learned for each channel, the Relu6 activation function may also be referred to as a chs-wise ClipRelu6 activation function.

In another implementation of this embodiment, the activation layer of the ResAU layer is optimized, so that the activation layer adopts the Relu activation function. That is, the activation layer performs non-linear adjustment on the features by adopting the Relu activation function. Referring to FIG. 8D, which is a schematic structural diagram of the ResAU layer. The LeakyRelu activation layer is replaced with the Relu activation layer. That is, the Relu activation function is used for processing.

The Relu activation function may refer to FIG. 5B. The Relu activation function corresponds to a lower threshold. The lower limit of the output feature is limited as the input feature decreases, so that the output feature of the activation layer is not less than the lower limit threshold. The Relu activation function limits the lower limit, so that the activation layer does not output an output feature with a small value.

The lower threshold corresponding to the Relu activation function may be a configured fixed lower threshold. That is, a certain fixed lower threshold is used as the lower threshold corresponding to the Relu activation function by default. In an embodiment, the lower threshold corresponding to the Relu activation function may be an adaptive learned lower threshold. That is, the lower threshold corresponding to the Relu activation function is determined through a training process, rather than a fixed lower threshold.

When adaptively learning the lower threshold corresponding to the Relu activation function, the same lower threshold may be learned for all channels of the activation layer. Only one lower threshold needs to be adaptively learned, and this lower threshold is used as the lower threshold of all channels of the activation layer. In an embodiment, when adaptively learning the lower threshold corresponding to the Relu activation function, a lower threshold may be separately learned for each channel of the activation layer. Assuming that the activation layer corresponds to K channels, K lower thresholds need to be adaptively learned. The K lower thresholds are in one-to-one correspondence with the K channels. Each channel separately corresponds to a lower threshold, and lower thresholds corresponding to different channels may be the same or different.

In another implementation of this embodiment, the activation layer of the ResAU layer is optimized, so that the activation layer adopts the activation function as shown in FIG. 5E. That is, the activation layer performs non-linear adjustment on the features by adopting the activation function. The activation function may correspond to an upper threshold. The upper limit of the output feature is limited as the input feature increases, so that the output feature of the activation layer is not greater than the upper limit threshold. The upper threshold corresponding to the activation function may be a configured fixed upper threshold. That is, a certain fixed upper threshold is used as the upper threshold corresponding to the activation function by default. In an embodiment, the upper threshold corresponding to the activation function may be an adaptive learned upper threshold. That is, the upper threshold corresponding to the activation function is determined through a training process.

When adaptively learning the upper threshold corresponding to the activation function, the same upper threshold may be learned for all channels of the activation layer. That is, only one upper threshold needs to be adaptively learned, and this upper threshold is used as the upper threshold of all channels of the activation layer. In an embodiment, when adaptively learning the upper threshold corresponding to the activation function, an upper threshold may be separately learned for each channel of the activation layer. Assuming that the activation layer corresponds to K channels, K upper thresholds need to be adaptively learned. The K upper thresholds are in one-to-one correspondence with the K channels. Each channel separately corresponds to an upper threshold, and upper thresholds corresponding to different channels may be the same or different.

Referring to FIG. 8C and FIG. 8D, the ResAU layer (i.e., the ResAU network layer) may include an activation layer (using a Relu6 activation function or a Relu activation function), a processing layer, and a skip connection structure. The skip connection structure (i.e., the residual connection) is used to connect the input feature of the ResAU layer with the output feature of the processing layer. Operations such as feature addition, feature multiplication, and feature splicing may be performed. The skip connection structure may also be located at other positions. For example, the skip connection structure is configured to connect the output feature of the activation layer to the output feature of the processing layer. The position of the skip connection structure is not limited. The skip connection structure may be a skip connection structure at any position.

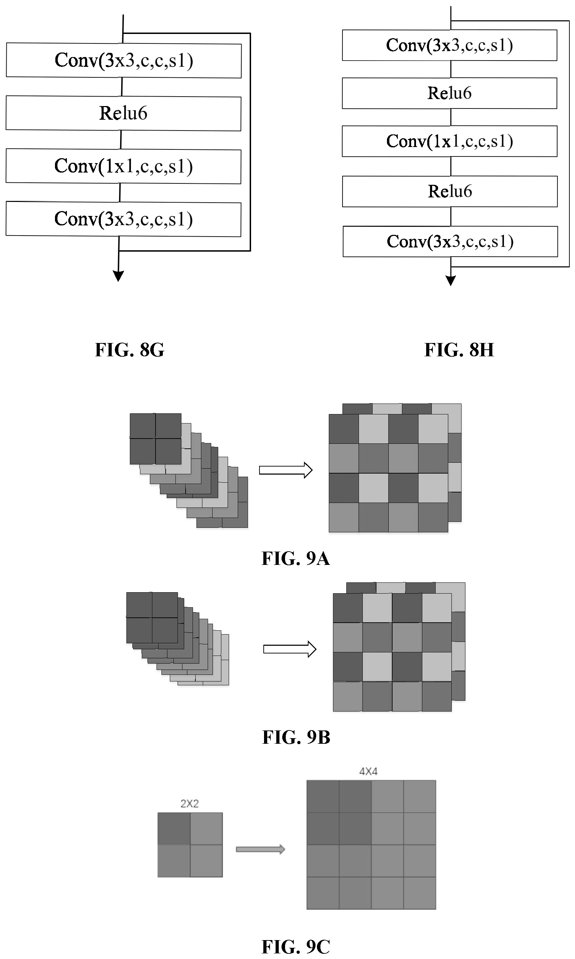

Exemplarily, the ResAU layer includes at least an activation layer and a skip connection structure. And in addition to the activation layer and the skip connection structure, the ResAU layer may or may not include a processing layer. When the ResAU layer includes the processing layer, the ResAU layer may sequentially include the activation layer, the processing layer, and the skip connection structure. In FIG. 8C and FIG. 8D, an example in which the ResAU layer includes a processing layer is used. In addition to the network structures in FIG. 8C and FIG. 8D, the network structure of the ResAU layer may further refer to FIG. 8E, FIG. 8F, FIG. 8G, and FIG. 8H.

In FIG. 8E, the ResAU layer may include a convolution layer (for example, a convolution layer with a size of 3*3, where a quantity of input channels is c, a quantity of output channels is c, and a convolution stride is s1), an activation layer (using a Relu6 activation function or a Relu activation function), and a skip connection structure. In FIG. 8F, the ResAU layer may include a convolution layer (for example, a convolution layer with a size of 1*1, where a quantity of input channels is c, a quantity of output channels is c, and a convolution stride is s1), an activation layer (using a Relu6 activation function or a Relu activation function), a convolution layer (for example, a convolution layer with a size of 3*3, where a quantity of input channels is c, a quantity of output channels is c, and a convolution stride is s1) and a skip connection structure. In FIG. 8G, the ResAU layer may include a convolution layer (for example, a convolution layer with a size of 3*3, where a quantity of input channels is c, a quantity of output channels is c, and a convolution stride is s1), an activation layer (using a Relu6 activation function or a Relu activation function), a convolution layer (for example, a convolution layer with a size of 1*1, where a quantity of input channels is c, a quantity of output channels is c, and a convolution stride is s1), a convolution layer (for example, a convolution layer with a size of 3*3, where a quantity of input channels is c, a quantity of output channels is c, and a convolution stride is s1) and a skip connection structure. In FIG. 8H, the ResAU layer may include a convolution layer (for example, a convolution layer with a size of 3*3, where a quantity of input channels is c, a quantity of output channels is c, and a convolution stride is s1), an activation layer (using a Relu6 activation function or a Relu activation function), a convolution layer (for example, a convolution layer with a size of 1*1, where a quantity of input channels is c, a quantity of output channels is c, and a convolution stride is s1), an activation layer (using a Relu6 activation function or a Relu activation function), a convolution layer (for example, a convolution layer with a size of 3*3, where a quantity of input channels is c, a quantity of output channels is c, and a convolution stride is s1) and a skip connection structure. The above descriptions are just a few examples, which are not limited.

In a possible implementation, the processing layer (also referred to as a processing unit) of the ResAU layer may include, but is not limited to, at least one of: one or more common convolution layers, one or more transposed convolution layers, one or more deformable convolution layers, one or more depthwise separable convolution layers, one or more group convolution layers, one or more dilated convolution layers, and one or more transformer layers. For each of the convolution layers (such as the common convolution layer, the transposed convolution layer, the deformable convolution layer, the depthwise separable convolution layer, the group convolution layer, the dilated convolution layer and the transformer layer) in the processing layers, a form of quantization convolution may also be used. That is, a parameter in the convolution layer is quantized. And an input feature is quantized. Then a convolution operation is performed. That is, each convolution layer in the processing layers is a quantized convolution layer (or an integer convolution layer, and an integer bit width may be 2, 4, 8, 16), that is, a parameter in the convolution layer is an integer parameter.

For each convolution layer in the processing layers, these convolution layers may be repeatedly stacked. The stacking form of these convolution layers is not limited. For example, two common convolution layers are stacked first, then two grouped convolution layers are stacked, then one dilated convolution layer is deployed, and then one common convolution layer is deployed. This is merely an example, and a structure of this processing layer is not limited.

In a possible implementation, for the encoding framework and the decoding framework shown in FIG. 4A and FIG. 4B, a Relu6 activation function, or a ClipRelu6 activation function, or a chs-wise ClipRelu6 activation function may be accessed after any layer of the probability hyperparameter decoding network. The Relu6 activation function, or the ClipRelu6 activation function, or the chs-wise ClipRelu6 activation function may be accessed after any layer of the mean hyperparameter decoding network. The Relu6 activation function, or the ClipRelu6 activation function, or the chs-wise ClipRelu6 activation function may be accessed after any layer of the context model. The Relu6 activation function, or the ClipRelu6 activation function, or the chs-wise ClipRelu6 activation function may be accessed after any layer of the synthesis transformation network (e.g., high-complexity synthesis transformation network, medium-complexity synthesis transformation network, low-complexity synthesis transformation network). For the encoding framework and the decoding framework shown in FIG. 4C and FIG. 4D, the Relu6 activation function, the ClipRelu6 activation function, or the chs-wise ClipRelu6 activation function may be accessed after any layer of the hyperparameter decoding network. The Relu6 activation function, or the ClipRelu6 activation function, or the chs-wise ClipRelu6 activation function may be accessed after any layer of the context model. The Relu6 activation function, or the ClipRelu6 activation function, or the chs-wise ClipRelu6 activation function may be accessed after any layer of the synthesis transformation network (e.g., high-complexity synthesis transformation network, medium-complexity synthesis transformation network, low-complexity synthesis transformation network).

In a possible implementation, for the above embodiments, complexity of the model can be reduced by using the Relu6 activation function, the ClipRelu6 activation function, or the chs-wise ClipRelu6 activation function.

In the above embodiment, for the encoder and the decoder, the coefficient hyperparameter feature z_hat may be input into the mean hyperparameter decoding network to obtain the initial mean feature m corresponding to the current picture block. That is, the input of the mean hyperparameter decoding network is the decoded information (for example, the coefficient hyperparameter feature z_hat) of the first bitstream, and the output of the mean hyperparameter decoding network is the mean value mu (that is, the initial mean feature m is used as the target mean feature mu), or the output of the mean hyperparameter decoding network is the latent feature m of the mean value (that is, the initial mean feature m needs to be input into the context model, and the context model outputs the target mean feature mu).

In a possible implementation, the mean hyperparameter decoding network may first perform upsampling and then perform convolution processing. The complexity of the mean hyperparameter decoding network in this form is relatively high, resulting in relatively high complexity of the decoder. For the above findings, in this embodiment, the mean hyperparameter decoding network may be simplified (optimized). The mean hyperparameter decoding network may sequentially include: a processing layer, an upsampling layer, and a Crop layer, where the upsampling layer is located behind the processing layer, and the upsampling layer is located in front of the Crop layer. Because the upsampling layer is deployed behind the processing layer, the mean hyperparameter decoding network may first perform processing (for example, convolution processing) and then perform upsampling. The complexity of the mean hyperparameter decoding network in this form is relatively low, so that the complexity of the decoder is relatively low.

Based on the mean hyperparameter decoding network, the coefficient hyperparameter feature z_hat may be input into the processing layer of the mean hyperparameter decoding network. The coefficient hyperparameter feature z_hat is processed (for example, convolution processing and/or activation processing) by the processing layer, to obtain a processed feature, and the processed feature is input into the upsampling layer of the mean hyperparameter decoding network. The upsampling processing is performed on the processed feature by the upsampling layer to obtain an upsampled feature. And the upsampled feature is input the Crop layer of the mean hyperparameter decoding network. Cropping and alignment processing are performed on the upsampled feature by the Crop layer, to obtain an initial mean feature m, where the initial mean feature m is used as an output feature of the mean hyperparameter decoding network. Exemplarily, the Crop layer is used for clipping and aligning the upsampled pixel positions, and may be located behind the upsampling layer to ensure that the feature maps are aligned in size. The processing procedure of the Crop layer is not limited.

Exemplarily, the upsampling layer (which may also be referred to as a sampling layer or a Pixshuffle layer) may be located behind the processing layer (all network layers other than the upsampling layer and the Crop layer are divided into the processing layer). That is, the upsampling layer is located at the end of the mean hyperparameter decoding network. A form of the upsampling layer may include but is not limited to pixel rearrangement, pixshuffle, upshuffle, transposed convolution, and nearest neighbor interpolation. The implementation of the upsampling layer is not limited, provided that the input feature can be upsampled.

For example, upsampling processing may be performed on the processed feature (that is, the output feature of the processing layer) in a pixel rearrangement manner, to obtain the upsampled feature. The pixel rearrangement is used to rearrange the information in channel domain to spatial domain, to achieve an upsampling effect.

For example, upsampling processing may be performed on the processed feature (that is, the output feature of the processing layer) in a pixshuffle manner, to obtain the upsampled feature. The pixshuffle is a manner of a spatial operation. The three-dimensional representation [4C, H, W] is rearranged by rearranging the feature points to obtain [C, 2H, 2W], so as to enlarge the spatial resolution. Referring to FIG. 9A, which is a schematic diagram of performing upsampling processing on a processed feature in a manner of pixshuffle to obtain an upsampled feature.

For example, upsampling processing may be performed on the processed feature (that is, the output feature of the processing layer) in an upshuffle manner, to obtain the upsampled feature. The upshuffle rearranges the three-dimensional representation [4C, H, W] by rearranging the feature points, so as to enlarge the spatial resolution. The arrangement criterion of the upshuffle is different from that of the pixshaffle. Referring to FIG. 9B, which is a schematic diagram of performing upsampling processing on a processed feature in a manner of upshuffle.

For example, upsampling processing may be performed on the processed feature in a transposed convolution manner to obtain the upsampled feature.

For example, upsampling processing may be performed on the processed feature in a nearest neighbor interpolation (the nearest neighbor interpolation may also be referred to as nearest neighbor upsampling) manner to obtain the upsampled feature. The nearest neighbor interpolation plays a role of enlarging the spatial resolution of the feature. The nearest neighbor interpolation rearranges the three-dimensional representation [C, H, W] to obtain [C, 2H, 2W]. The additional pixels are current interpolation points, which are obtained by copying the nearest point in the spatial domain. As shown in FIG. 9C, which is a schematic diagram of a manner of using nearest neighbor interpolation.

The above descriptions are merely examples of processing manners of the upsampling layer, which are not limited.

In a possible implementation, the processing layer (also referred to as a processing unit or a processing link) of the mean hyperparameter decoding network includes but is not limited to at least one of: one or more common convolution layers, one or more transposed convolution layers, one or more deformable convolution layers, one or more depthwise separable convolution layers, one or more group convolution layers, one or more dilated convolution layers, one or more transformer layers, one or more activation layers using a Relu activation function, one or more activation layers using a target activation function clamped up and down, and one or more activation layers using a LeakyRelu activation function.

Exemplarily, for each of the convolution layers (such as the common convolution layer, the transposed convolution layer, the deformable convolution layer, the depthwise separable convolution layer, the group convolution layer, the dilated convolution layer and the transformer layer) in the processing layers, a form of quantization convolution may also be used. That is, a parameter in the convolution layer is quantized. And an input feature is quantized. Then a convolution operation is performed. When the parameter in the convolution layer is quantized, the bit width may be 2, 4, 8, 16 or the like, which is not limited. For example, each convolution layer in the processing layer is a quantized convolution layer (or an integer convolution layer, where an integer bit width may be 2, 4, 8, 16), that is, a parameter in the convolution layer is an integer parameter. For example, a parameter in the common convolution layer is a quantized parameter, a parameter in the transposed convolution layer is a quantized parameter, a parameter in a group convolution layer is a quantized parameter, and so on.

For each convolution layer in the processing layers, these convolution layers may be repeatedly stacked. The stacking form of these convolution layers is not limited. For example, two common convolution layers are stacked first, then two grouped convolution layers are stacked, then one dilated convolution layer is deployed, and then one common convolution layer is deployed. This is merely an example, and a structure of this processing layer is not limited.

For each layer in the processing layer, there is any skip connection (that is, the skip connection structure, which may also be referred to as a residual connection) between layers in the processing layers. The skip connection structure is used to connect an input feature of a network layer (for example, any network layer) to an output feature of another network layer (for example, any network layer). Operations such as feature addition, feature multiplication, and feature splicing may be performed.

If the processing layer includes a convolution layer and an activation layer, the convolution layer and the activation layer may be interleaved, the convolution layer or the activation layer may be repeatedly stacked. Any input node and output node (that is, any network layer) from the front to the back may be added through the residual connection (that is, there is any skip connection between layers of the processing layer, and the any input node and output node may be added through the skip connection). For example, the input feature of the first network layer is added to the output feature of the fifth network layer. The input feature of the second network layer is added to the output feature of the fifth network layer. The input feature of the third network layer is added to the output feature of the sixth network layer, and so on.

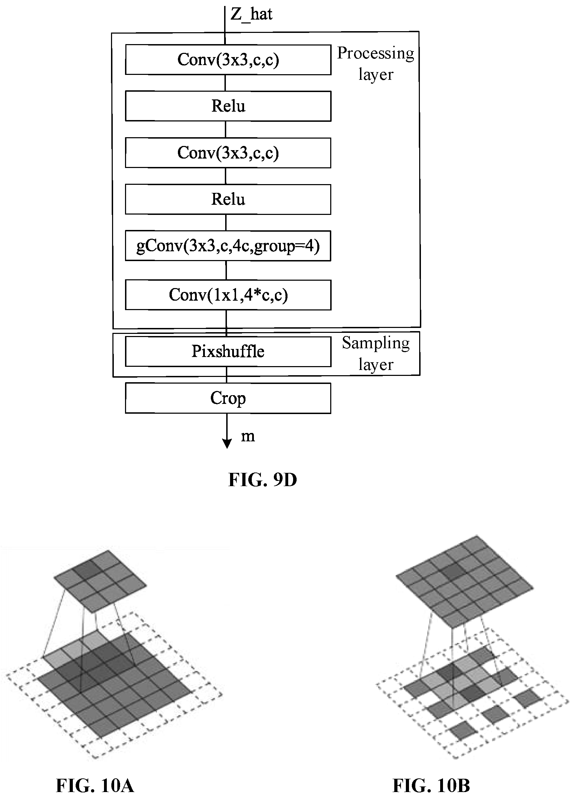

In a possible implementation, the structure of the mean hyperparameter decoding network (that is, the optimized mean hyperparameter decoding network) may refer to FIG. 9D. However, FIG. 9D is merely an example of the mean hyperparameter decoding network, and the structure of the mean hyperparameter decoding network is not limited in this disclosure. Subsequently, the mean hyperparameter decoding network in FIG. 9D is used as an example. The mean hyperparameter decoding network may sequentially include: a processing layer, an upsampling layer and a Crop layer. The processing layer may sequentially include: a convolution layer (Conv, for example, a convolution layer with a size of 3*3, where a quantity of input channels is c, and a quantity of output channels is c), a Relu activation layer (using the Relu activation layer), a convolution layer (Conv, for example, a convolution layer with a size of 3*3, where a quantity of input channels is c, and a quantity of output channels is c), a Relu activation layer (using the Relu activation layer), a group convolution layer (gConv, for example, a convolution layer with a size of 3*3, where a quantity of input channels is c, a quantity of output channels is 4c, and a quantity of groups is 4), and a convolution layer (for example, a convolution layer with a size of 1*1, where a quantity of input channels is 4c, and a quantity of output channels is c).

The Relu activation layer in FIG. 9D may also be replaced with a Relu6 activation layer (using a Relu6 activation function), a ClipRelu6 activation layer (using a ClipRelu6 activation function), and a chs-wise ClipRelu6 activation layer (using a chs-wise ClipRelu6 activation function). For example, any Relu activation layer is replaced with a Relu6 activation layer, or both Relu activation layers are replaced with the Relu6 activation layer.

In the above embodiments, the common convolution layer, the transposed convolution layer, the deformable convolution layer, the depthwise separable convolution layer, the group convolution layer, the dilated convolution layer, the transformer layer, and the like may be involved.

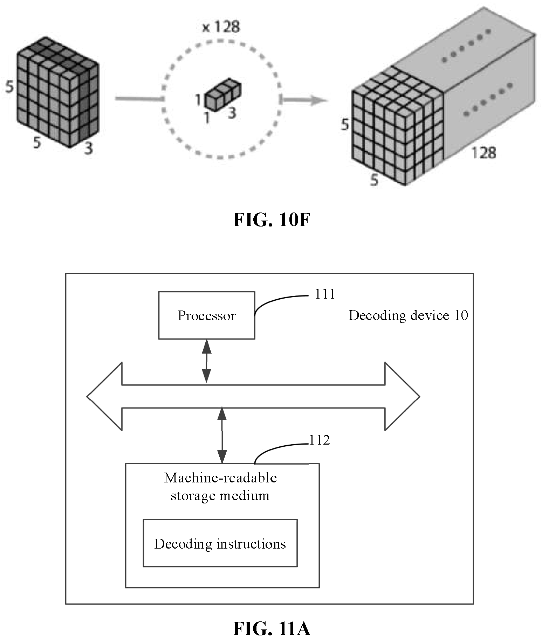

For the common convolution layer, the common convolution layer may also be referred to as a conventional convolution layer-Convolution (Conv). The common convolution layer first starts from a small weight matrix, i.e., a convolution kernel, to gradually "scan" two-dimensional input data. While the convolution kernel "slides", the product of the weight matrix and the scanned data matrix is calculated, and then the result is summarized into one output pixel. FIG. 10A is a schematic diagram of a common convolution layer. FIG. 10A shows a convolution kernel matrix, input data, and output data. The dashed white part is padding values of the input data. For the common convolution layer, the convolution kernel may be operated in the form of a sliding window from left to right and from top to bottom. The stride parameter determines the sliding stride of each time.

For the transposed convolution layer-Transposed Convolution (Tconv), the data needs to be upsampled for some tasks. The conventional convolution operation can only keep the resolution of the output feature map and the resolution of the input feature map equal or similar, and cannot achieve the purpose of upsampling. Therefore, transposed convolution may be used. Different from the conventional convolution, the stride parameter in the transposed convolution does not represent the sliding stride, but represents the number of 0 padding in the input data. For example, when stride = 1, the transposed convolution is consistent with the conventional convolution. And when stride = 2, referring to FIG. 10B, which is a schematic diagram of the transposed convolution layer, the input feature map may be inserted, and (stride-1) 0 may be inserted between each feature point in the spatial domain. Then the input resolution in spatial domain is expanded and the expanded resolution is operated with the convolution weight.

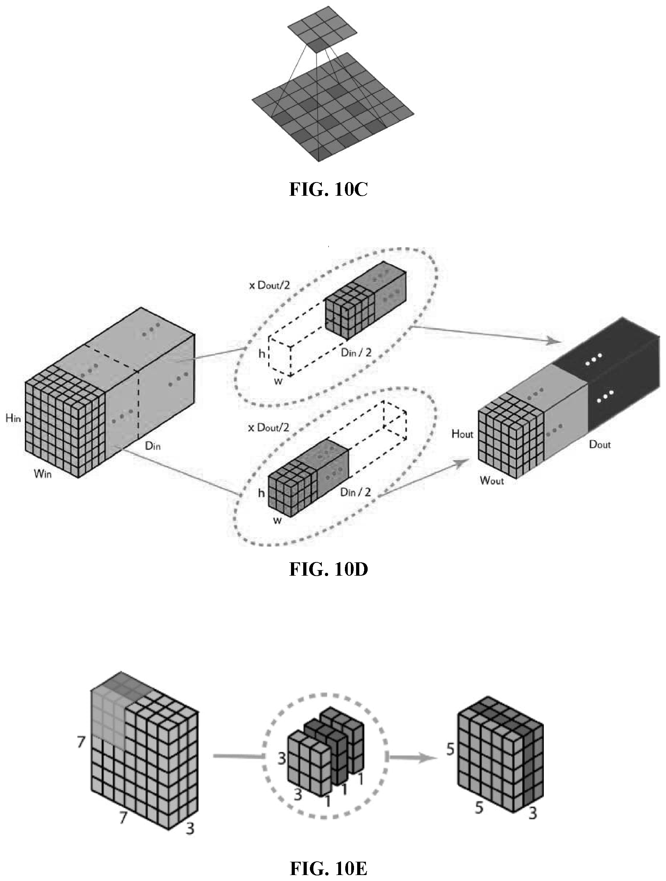

For the dilated convolution layer (Dconv), the dilated convolution layer may also be referred to as an atrous convolution layer or an expansion convolution layer. Relative to normal discrete convolution, the dilated convolution layer refers to inserting holes between points of a normal convolution kernel. For example, for a normal convolution with a stride of 2 and padding of 1, referring to FIG. 10C, which is a schematic diagram of a dilated convolution layer, the convolution is dilated and inserted.

For the group convolution layer-Group-Convolution (gconv), the size of the input x is [C, H, W]. The group convolution operation splits the input x into 'group' number of groups along the channel dimension. Each group is convolved separately to obtain the output of each group, and then the outputs of each group are channel spliced respectively. For example, referring to FIG. 10D, which is a schematic diagram of the group convolution layer.

For the depthwise separable convolution layer, the depthwise separable convolution layer may be divided into two stages. The first stage is spatial separable, and the second stage is depthwise separable. The spatial separable refers to that the input [C, H, W] is divided into C groups, the data of each group is [1, H, W], and each group is convolved separately to obtain an output, and then the outputs are spliced. For example, referring to FIG. 10E, which shows a schematic diagram of spatial separable of a depthwise separable convolution layer. The second stage is the depthwise separable stage, and is used to perform an operation on an output of the first stage by using a convolution kernel with a kernel size of 1×1. For example, as shown in FIG. 10E, which shows a schematic diagram of a depthwise separable convolution layer.

For the transformer layer, the transformer layer is a Transformer-based attention block, and may also be referred to as a TAM layer. The structure of the transformer layer may refer to FIG. 7F or FIG. 7G. Details are not described herein again.

For each of the convolution layers (such as the common convolution layer, the transposed convolution layer, the deformable convolution layer, the depthwise separable convolution layer, the group convolution layer, the dilated convolution layer and the transformer layer) in the processing layer, a form of quantization convolution (quantization convolution may also be referred to as integer convolution) may also be used. That is, a parameter in the convolution layer is quantized. This process may also be referred to as quantization convolution. All the above operation forms can be quantized, and the quantization convolution is not a specific convolution form, which means that the quantized weight inside the convolution reaches a certain bit width. For example, the weight data of the original convolution kernel is represented by float, and the weight data is scaled, offset, and integer, to ensure that 4 bits, 8 bits, or 16 bits can represent the float type.

Exemplarily, each of the above embodiments may be implemented separately, or may be implemented in combination. For example, each of the above embodiments may be implemented separately, or at least two of the above embodiments may be implemented in combination.

Exemplarily, in the foregoing embodiments, content of the encoder may also be applied to the decoder, that is, the decoder may perform processing in a same manner, and content of the decoder may also be applied to the encoder, that is, the encoder may perform processing in a same manner.

Based on a same concept as the foregoing method, an embodiment of this disclosure further provides a decoding apparatus, where the apparatus is applied to a decoder, and the apparatus includes: a memory configured to store video data; and a decoder configured to implement the decoding method in the foregoing embodiments, that is, a processing procedure of the decoder.

Based on a same concept as the foregoing method, an embodiment of this disclosure further provides an encoding apparatus, where the apparatus is applied to an encoder, and the apparatus includes: a memory configured to store video data; and an encoder configured to implement the encoding method in the foregoing embodiments, that is, a processing procedure of the encoder.

Based on a same concept as the foregoing method, a schematic diagram of a hardware architecture of a decoding device (which may also be referred to as a video decoder) provided in this embodiment of this disclosure from a hardware level, may refer to FIG. 11A. As shown in FIG. 11A, the decoding device 10 includes one or more processors 111 and a machine-readable storage medium 112, where the machine-readable storage medium 112 stores machine-executable instructions executable by the one or more processors 111; and the one or more processors 111 are configured to execute the machine-executable instructions to implement the decoding methods in the foregoing embodiments of this disclosure.

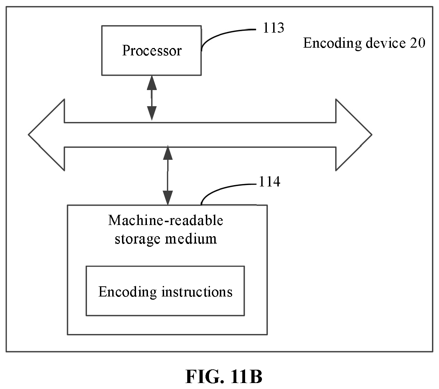

Based on a same concept as the foregoing method, a schematic diagram of a hardware architecture of an encoding device (which may also be referred to as a video encoder) provided in this embodiment of this disclosure from a hardware level, may refer to FIG. 11B. As shown in FIG. 11B, the encoding device 20 includes one or more processors 113 and a machine-readable storage medium 114, where the machine-readable storage medium 114 stores machine-executable instructions executable by the one or more processors 113; and the one or more processors 113 are configured to execute the machine-executable instructions to implement the encoding methods in the foregoing embodiments of this disclosure.

Based on a same concept as the foregoing method, an embodiment of this disclosure provides an electronic device. The electronic device includes one or more processors and a machine-readable storage medium, where the machine-readable storage medium stores machine-executable instructions executable by the one or more processors; and the one or more processors are configured to execute the machine-executable instructions to implement the decoding methods or the encoding method in the foregoing embodiments of this disclosure.

The above machine-readable storage medium, such as the machine-readable storage medium 112 in the decoding device 10, the machine-readable storage medium 114 in the encoding device 20, and the machine-readable storage medium in the electronic device, may be any electronic, magnetic, optical, or other physical storage apparatus, and may include or store information, such as executable instructions, data, and the like. For example, the machine-readable storage medium may be a Random Access Memory (RAM), a volatile memory, a non-volatile memory, a flash memory, a storage drive (such as a hard disk drive), a solid-state drive, any type of storage disk (such as an optical disk, dvd, etc.), or a similar storage medium, or a combination thereof.

Based on the same concept as the foregoing method, a machine-readable storage medium is further provided by an embodiment of this disclosure, where the machine-readable storage medium stores a plurality of computer instructions, and when the computer instructions are executed by one or more processors, the method disclosed in the foregoing examples of this disclosure can be implemented, for example, the decoding method or the encoding method in the foregoing embodiments.

Based on the same concept as the foregoing method, a computer program is further provided by an embodiment of this disclosure, and when the computer program is executed by one or more processors, the decoding method or the encoding method disclosed in the foregoing examples of this disclosure can be implemented.

Based on a same concept as the foregoing method, a decoding apparatus is further provided by an embodiment of this disclosure, where the decoding apparatus may be applied to a decoder (also referred to as a video decoder), and the decoding apparatus includes: a decoding module, configured to decode a first bitstream corresponding to a current picture block, to obtain a coefficient hyperparameter feature corresponding to the current picture block; determine a probability distribution parameter based on the coefficient hyperparameter feature, and decode a second bitstream corresponding to the current picture block based on the probability distribution parameter, to obtain a residual feature corresponding to the current picture block; a determining module, configured to determine a target mean feature corresponding to the current picture block based on the coefficient hyperparameter feature; determine a reconstructed feature corresponding to the current picture block based on the target mean feature and the residual feature; and an obtaining module, configured to input the reconstructed feature into a synthesis transformation network to obtain a reconstructed picture block corresponding to the current picture block, where the synthesis transformation network includes a non-linear residual network layer, the non-linear residual network layer includes at least an activation layer and a skip connection structure, and an output feature of the activation layer is less than or equal to an upper threshold, and/or the output feature of the activation layer is greater than or equal to a lower threshold.

Exemplarily, the activation layer performs non-linear adjustment on features by using a target activation function clamped up and down, the target activation function corresponds to the upper threshold and the lower threshold, and the output feature of the activation layer is less than or equal to the upper threshold and greater than or equal to the lower threshold; or the activation layer performs the non-linear adjustment on the features by using a Relu activation function, where the Relu activation function corresponds to the lower threshold, and the output feature of the activation layer is greater than or equal to the lower threshold.

Exemplarily, the non-linear residual network layer sequentially includes the activation layer, a processing layer, and the skip connection structure, and the processing layer includes at least one of: one or more common convolution layers, one or more transposed convolution layers, one or more deformable convolution layers, one or more depthwise separable convolution layers, one or more group convolution layers, one or more dilated convolution layers, and one or more global processing unit layers.

Exemplarily, when determining the probability distribution parameter based on the coefficient hyperparameter feature, the decoding module is specifically configured to: input the coefficient hyperparameter feature into a probability hyperparameter decoding network to obtain the probability distribution parameter; where the probability hyperparameter decoding network includes an activation layer, and the activation layer performs non-linear adjustment on features by using a target activation function clamped up and down; where the target activation function corresponds to an upper threshold and a lower threshold, and an output feature of the activation layer is less than or equal to the upper threshold and the output feature of the activation layer is greater than or equal to the lower threshold.

Exemplarily, when determining a target mean feature corresponding to the current picture block based on the coefficient hyperparameter feature, the determining module is specifically configured to: input the coefficient hyperparameter feature into a mean hyperparameter decoding network to obtain an initial mean feature corresponding to the current picture block, and determining the target mean feature based on the initial mean feature; where the mean hyperparameter decoding network includes an activation layer, and the activation layer performs non-linear adjustment on features by using a target activation function clamped up and down; where the target activation function corresponds to an upper threshold and a lower threshold, and an output feature of the activation layer is less than or equal to the upper threshold and greater than or equal to the lower threshold.

Exemplarily, when determining the target mean feature based on the initial mean feature, the determining module is specifically configured to: use the initial mean feature as the target mean feature; or input the initial mean feature and an obtained reconstructed feature of the current picture block into a context model to obtain the target mean feature; where the context model includes an activation layer, and the activation layer performs non-linear adjustment on features by using a target activation function clamped down, where the target activation function corresponds to a lower threshold, and an output feature of the activation layer is greater than or equal to the lower threshold.

Exemplarily, when determining the probability distribution parameter based on the coefficient hyperparameter feature, and determining the target mean feature corresponding to the current picture block based on the coefficient hyperparameter feature the determining module is specifically configured to: input the coefficient hyperparameter feature into a hyperparameter decoding network to obtain a reference feature corresponding to the current picture block; and input the reference feature and an obtained reconstructed feature of the current picture block into a context model, to obtain the probability distribution parameter and the target mean feature corresponding to the current picture block; where the hyperparameter decoding network includes an activation layer, and the activation layer performs non-linear adjustment on features by using a target activation function clamped up and down, where the target activation function corresponds to an upper threshold and a lower threshold, and an output feature of the activation layer is less than or equal to the upper threshold and greater than or equal to the lower threshold; and/or the context model includes an activation layer, and the activation layer performs non-linear adjustment on features by using a target activation function clamped up and down, where the target activation function corresponds to an upper threshold and a lower threshold, and an output feature of the activation layer is less than or equal to the upper threshold and greater than or equal to the lower threshold.

Exemplarily, the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold.

Exemplarily, in response to the upper threshold being learned adaptively, a same upper threshold is learned for all channels of the activation layer, or an upper threshold is separately learned for each channel of the activation layer, where different channels correspond to the same upper threshold or different upper thresholds; and in response to the lower threshold being learned adaptively, a same lower threshold is learned for all channels of the activation layer, or a lower threshold is separately learned for each channel of the activation layer, where different channels correspond to the same lower threshold or different lower thresholds.

Based on the same concept as the above methods, an embodiment of this disclosure further provides a decoding apparatus, which may be applied to a decoder (also referred to as a video decoder). The decoding apparatus includes: a decoding module, configured to decode a first bitstream corresponding to a current picture block, to obtain a coefficient hyperparameter feature corresponding to the current picture block; input the coefficient hyperparameter feature into a probability hyperparameter decoding network to obtain a probability distribution parameter, and decode a second bitstream corresponding to the current picture block based on the probability distribution parameter, to obtain a residual feature corresponding to the current picture block; a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and the residual feature; and an obtaining module, configured to determine a reconstructed picture block corresponding to the current picture block based on the reconstructed feature; where the probability hyperparameter decoding network includes an activation layer, and an output feature of the activation layer is less than or equal to an upper threshold, and/or the output feature of the activation layer is greater than or equal to a lower threshold; and/or the mean hyperparameter decoding network includes an activation layer, and an output feature of the activation layer is less than or equal to an upper threshold, and/or the output feature of the activation layer is greater than or equal to a lower threshold.

Exemplarily, the activation layer of the probability hyperparameter decoding network and/or the activation layer of the mean hyperparameter decoding network perform non-linear adjustment on features by using a target activation function clamped up and down; the target activation function corresponds to an upper threshold and a lower threshold, the output feature of the activation layer is less than or equal to the upper threshold and greater than or equal to the lower threshold; where the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold; where in response to the upper threshold being learned adaptively, a same upper threshold is learned for all channels of the activation layer, or an upper threshold is separately learned for each channel of the activation layer, where different channels correspond to the same upper threshold or different upper thresholds; and in response to the lower threshold being learned adaptively, a same lower threshold is learned for all channels of the activation layer, or a lower threshold is separately learned for each channel of the activation layer, where different channels correspond to the same lower threshold or different lower thresholds.

Based on the same concept as the above methods, an embodiment of this disclosure further provides a decoding apparatus, which may be applied to a decoder (also referred to as a video decoder). The decoding apparatus includes: a decoding module, configured to decode a first bitstream corresponding to a current picture block, to obtain a coefficient hyperparameter feature corresponding to the current picture block; and a determining module, configured to input the coefficient hyperparameter feature into a hyperparameter decoding network to obtain a reference feature corresponding to the current picture block; and input the reference feature and the obtained reconstructed feature of the current picture block into a context model to obtain a probability distribution parameter and a target mean feature corresponding to the current picture block; where the decoding module is further configured to decode a second bitstream corresponding to the current picture block based on the probability distribution parameter, to obtain a residual feature corresponding to the current picture block; the determining module is further configured to determine the reconstructed feature based on the target mean feature and the residual feature; The apparatus further includes an obtaining module, configured to determine a reconstructed picture block corresponding to the current picture block based on the reconstructed feature; where the hyperparameter decoding network includes an activation layer; an output feature of the activation layer is less than or equal to an upper threshold, and/or the output feature of the activation layer is greater than or equal to a lower threshold; and/or the context model includes an activation layer, an output feature of the activation layer is less than or equal to an upper threshold, and/or the output feature of the activation layer is greater than or equal to a lower threshold.

Exemplarily, the activation layer perform non-linear adjustment on features by using a target activation function clamped up and down; the target activation function corresponds to an upper threshold and a lower threshold, the output feature of the activation layer is less than or equal to the upper threshold, and the output feature of the activation layer is greater than or equal to the lower threshold; where the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold; where in response to the upper threshold being learned adaptively, a same upper threshold is learned for all channels of the activation layer, or an upper threshold is separately learned for each channel of the activation layer, where different channels correspond to the same upper threshold or different upper thresholds; and in response to the lower threshold being learned adaptively, a same lower threshold is learned for all channels of the activation layer, or a lower threshold is separately learned for each channel of the activation layer, where different channels correspond to the same lower threshold or different lower thresholds.

Based on a same concept as the foregoing method, a decoding apparatus is further provided by an embodiment of this disclosure, where the decoding apparatus may be applied to a decoder (also referred to as a video decoder), and the decoding apparatus includes: a decoding module, configured to decode a first bitstream corresponding to a current picture block, to obtain a coefficient hyperparameter feature corresponding to the current picture block; determine a probability distribution parameter based on the coefficient hyperparameter feature, and decode a second bitstream corresponding to the current picture block based on the probability distribution parameter, to obtain a residual feature corresponding to the current picture block; a determining module, configured to input the coefficient hyperparameter feature into a mean hyperparameter decoding network, to obtain an initial mean feature corresponding to the current picture block, and determine a target mean feature corresponding to the current picture block based on the initial mean feature, where the mean hyperparameter decoding network sequentially includes: a first processing layer, an upsampling layer configured to perform an upsampling operation, a clipping layer, and a second processing layer, where an output feature of the second processing layer is used as the initial mean feature; and determine a reconstructed feature corresponding to the current picture block based on the target mean feature and the residual feature; and an obtaining module, configured to determine a reconstructed picture block corresponding to the current picture block based on the reconstructed feature.

Exemplarily, the first processing layer does not include an upsampling layer configured to perform an upsampling operation, and the first processing layer includes at least one of: one or more common convolution layers, one or more transposed convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, and one or more activation layers using a LeakyRelu activation function; where any skip connections exist between layers of the first processing layer.

A person skilled in the art should understand that the embodiments of this disclosure may be provided as a method, a system, or a computer program product. The present disclosure may take the form of an entirely hardware embodiment, an entirely software embodiment, or an embodiment combining software and hardware aspects. The embodiments of this disclosure may be in a form of a computer program product implemented on one or more computer-usable storage media (including but not limited to a disk memory, a CD-ROM, an optical memory, and the like) that include computer-usable program codes. The foregoing descriptions are merely embodiments of this disclosure, and are not intended to limit this disclosure.

For a person skilled in the art, this disclosure may have various modifications and changes. Any modification, equivalent replacement, improvement, etc. made within the spirit and principle of the present disclosure should be included in the scope of the claims of the present disclosure.

## Claims

1. A picture decoding method, performed by a decoder, the method comprising:
decoding a first bitstream corresponding to a current picture block, to obtain a coefficient hyperparameter feature corresponding to the current picture block;
determining a probability distribution parameter and a target mean feature corresponding to the current picture block based on the coefficient hyperparameter feature; and
decoding a second bitstream corresponding to the current picture block based on the probability distribution parameter, to obtain a residual feature corresponding to the current picture block;
determining a reconstructed feature corresponding to the current picture block based on the target mean feature and the residual feature; and
inputting the reconstructed feature into a synthesis transformation network to obtain a reconstructed picture block corresponding to the current picture block, wherein the synthesis transformation network comprises a non-linear residual network layer, the non-linear residual network layer comprises at least an activation layer and a skip connection structure, and an output feature of the activation layer is less than or equal to an upper threshold, and/or the output feature of the activation layer is greater than or equal to a lower threshold.

2. The method according to claim 1, wherein the activation layer performs non-linear adjustment on features by using a target activation function clamped up and down, the target activation function corresponds to the upper threshold and the lower threshold, and the output feature of the activation layer is less than or equal to the upper threshold and greater than or equal to the lower threshold; or
the activation layer performs the non-linear adjustment on the features by using a Relu activation function, wherein the Relu activation function corresponds to the lower threshold, and the output feature of the activation layer is greater than or equal to the lower threshold.

3. The method according to claim 1, wherein the non-linear residual network layer sequentially comprises the activation layer, a processing layer, and the skip connection structure, and the processing layer comprises at least one of: one or more common convolution layers, one or more transposed convolution layers, one or more deformable convolution layers, one or more depthwise separable convolution layers, one or more group convolution layers, one or more dilated convolution layers, and one or more global processing unit layers.

4. The method according to claim 1, wherein the determining the target mean feature corresponding to the current picture block based on the coefficient hyperparameter feature comprises: inputting the coefficient hyperparameter feature into a mean hyperparameter decoding network to obtain an initial mean feature corresponding to the current picture block, and determining the target mean feature based on the initial mean feature;
wherein the mean hyperparameter decoding network comprises an activation layer, and the activation layer performs non-linear adjustment on features by using a target activation function clamped up and down; wherein the target activation function corresponds to an upper threshold and a lower threshold, and an output feature of the activation layer is less than or equal to the upper threshold and greater than or equal to the lower threshold.

5. The method according to claim 4, wherein the determining the target mean feature based on the initial mean feature comprises: using the initial mean feature as the target mean feature; or inputting the initial mean feature and an obtained reconstructed feature of the current picture block into a context model to obtain the target mean feature;
wherein the context model comprises an activation layer, and the activation layer performs non-linear adjustment on features by using a target activation function clamped down, wherein the target activation function corresponds to a lower threshold, and an output feature of the activation layer is greater than or equal to the lower threshold.

6. The method according to claim 1, wherein the determining the probability distribution parameter and the target mean feature corresponding to the current picture block based on the coefficient hyperparameter feature comprises:
inputting the coefficient hyperparameter feature into a hyperparameter decoding network to obtain a reference feature corresponding to the current picture block; and
inputting the reference feature and an obtained reconstructed feature of the current picture block into a context model, to obtain the probability distribution parameter and the target mean feature corresponding to the current picture block;
wherein the hyperparameter decoding network comprises an activation layer, and the activation layer performs non-linear adjustment on features by using a target activation function clamped up and down, wherein the target activation function corresponds to an upper threshold and a lower threshold, and an output feature of the activation layer is less than or equal to the upper threshold and greater than or equal to the lower threshold; and/or the context model comprises an activation layer, and the activation layer performs non-linear adjustment on features by using a target activation function clamped up and down, wherein the target activation function corresponds to an upper threshold and a lower threshold, and an output feature of the activation layer is less than or equal to the upper threshold and greater than or equal to the lower threshold.

7. The method according to any one of claims 2 or 4-6, wherein
the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold.

8. The method according to claim 7, wherein
in response to the upper threshold being learned adaptively, a same upper threshold is learned for all channels of the activation layer, or an upper threshold is separately learned for each channel of the activation layer, wherein different channels correspond to the same upper threshold or different upper thresholds; and
in response to the lower threshold being learned adaptively, a same lower threshold is learned for all channels of the activation layer, or a lower threshold is separately learned for each channel of the activation layer, wherein different channels correspond to the same lower threshold or different lower thresholds.

9. A picture decoding method, performed by a decoder, the method comprising:
decoding a first bitstream corresponding to a current picture block, to obtain a coefficient hyperparameter feature corresponding to the current picture block;
inputting the coefficient hyperparameter feature into a probability hyperparameter decoding network to obtain a probability distribution parameter, and decoding a second bitstream corresponding to the current picture block based on the probability distribution parameter, to obtain a residual feature corresponding to the current picture block;
inputting the coefficient hyperparameter feature into a mean hyperparameter decoding network to obtain an initial mean feature corresponding to the current picture block, and determining a target mean feature corresponding to the current picture block based on the initial mean feature;
determining a reconstructed feature corresponding to the current picture block based on the target mean feature and the residual feature; and
determining a reconstructed picture block corresponding to the current picture block based on the reconstructed feature;
wherein the probability hyperparameter decoding network comprises an activation layer, and an output feature of the activation layer is less than or equal to an upper threshold, and/or the output feature of the activation layer is greater than or equal to a lower threshold;
and/or the mean hyperparameter decoding network comprises an activation layer, and an output feature of the activation layer is less than or equal to an upper threshold, and/or the output feature of the activation layer is greater than or equal to a lower threshold.

10. The method according to claim 9, wherein the activation layer of the probability hyperparameter decoding network and/or the activation layer of the mean hyperparameter decoding network perform non-linear adjustment on features by using a target activation function clamped up and down; the target activation function corresponds to an upper threshold and a lower threshold, the output feature of the activation layer is less than or equal to the upper threshold and greater than or equal to the lower threshold;
wherein the upper threshold corresponding to the target activation function is a configured fixed upper threshold, and the lower threshold corresponding to the target activation function is a configured fixed lower threshold; or the upper threshold corresponding to the target activation function is an adaptive learned upper threshold, and the lower threshold corresponding to the target activation function is an adaptive learned lower threshold;
wherein in response to the upper threshold being learned adaptively, a same upper threshold is learned for all channels of the activation layer, or an upper threshold is separately learned for each channel of the activation layer, wherein different channels correspond to the same upper threshold or different upper thresholds; and
in response to the lower threshold being learned adaptively, a same lower threshold is learned for all channels of the activation layer, or a lower threshold is separately learned for each channel of the activation layer, wherein different channels correspond to the same lower threshold or different lower thresholds.

11. A picture decoding method, performed by a decoder, the method comprising:
decoding a first bitstream corresponding to a current picture block, to obtain a coefficient hyperparameter feature corresponding to the current picture block;
determining a probability distribution parameter based on the coefficient hyperparameter feature, and decoding a second bitstream corresponding to the current picture block based on the probability distribution parameter, to obtain a residual feature corresponding to the current picture block;
inputting the coefficient hyperparameter feature into a mean hyperparameter decoding network, to obtain an initial mean feature corresponding to the current picture block, and determining a target mean feature corresponding to the current picture block based on the initial mean feature, wherein the mean hyperparameter decoding network sequentially comprises: a first processing layer, an upsampling layer configured to perform an upsampling operation, a clipping layer, and a second processing layer, wherein an output feature of the second processing layer is used as the initial mean feature;
determining a reconstructed feature corresponding to the current picture block based on the target mean feature and the residual feature; and
determining a reconstructed picture block corresponding to the current picture block based on the reconstructed feature.

12. The method according to claim 11, wherein the first processing layer does not comprise an upsampling layer configured to perform an upsampling operation, and the first processing layer comprises at least one of:
one or more common convolution layers, one or more transposed convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, and one or more activation layers using a LeakyRelu activation function;
wherein any skip connections exist between layers of the first processing layer.

13. The method according to claim 11, wherein the second processing layer comprises at least one of: one or more common convolution layers, one or more deformable convolution layers, one or more depthwise separable convolution layers, one or more group convolution layers, one or more dilated convolution layers, one or more global processing unit layers, one or more activation layers using a Relu activation function, one or more activation layers using a target activation function clamped up and down, and one or more activation layers using a LeakyRelu activation function;
wherein any skip connections exist between layers of the second processing layer.

14. A picture decoding method, comprising:
obtaining a coefficient hyperparameter feature corresponding to a current picture block;
determining a target mean feature corresponding to the current picture block based on the coefficient hyperparameter feature;
determining a reconstructed feature corresponding to the current picture block based on the target mean feature and the residual feature corresponding to the current picture block; and
inputting the reconstructed feature into a synthesis transformation network, to obtain a reconstructed picture block corresponding to the current picture block;
wherein an activation layer comprised in the synthesis transformation network performs non-linear adjustment on features by using a target activation function clamped up and down, wherein the target activation function corresponds to a fixed upper threshold and a fixed lower threshold, and an output feature of the activation layer is less than or equal to the fixed upper threshold, and the output feature of the activation layer is greater than or equal to the fixed lower threshold.

15. The method according to claim 14, wherein the synthesis transformation network comprises a non-linear residual network layer, and the non-linear residual network layer comprises at least an activation layer and a skip connection structure.

16. The method according to claim 15, wherein
the non-linear residual network layer sequentially comprises the activation layer, a processing layer and the skip connection structure; wherein in response to one activation layer existing and the processing layer comprising a plurality of network layers, all the network layers are located behind the activation layer.

17. The method according to claim 14, wherein
the fixed upper threshold is 6, and the fixed lower threshold is 0.

18. The method according to claim 15 or 16, wherein
the synthesis transformation network comprises a residual ResAU layer, and the ResAU layer is used as the non-linear residual network layer;
wherein the ResAU layer sequentially comprises: an activation layer, a group convolution layer, and a convolution layer;
wherein an input feature of the ResAU layer is connected to an output feature of the convolution layer;
wherein the input feature of the ResAU layer sequentially passes through the activation layer, the group convolution layer, and the convolution layer, to obtain a convolved feature; and a feature multiplication operation and a feature addition operation are sequentially performed on the input feature of the ResAU layer and the convolved feature, to obtain an output feature of the ResAU layer.

19. The method according to claim 18, wherein
in response to the synthesis transformation network comprising a low-complexity synthesis transformation network, the low-complexity synthesis transformation network sequentially comprises: a Lightweight Residual Block (LRB) layer, a convolution layer, an upsampling Pixshuffle layer, a ResAU layer, a clipping Crop layer, a convolution layer, a Pixshuffle layer, a Crop layer, a ResAU layer, a convolution layer, a ResAU layer, a convolution layer, a Pixshuffle layer, and a Crop layer;
in response to the synthesis transformation network comprising a medium-complexity synthesis transformation network, the medium-complexity synthesis transformation network sequentially comprises: an LRB layer, a transposed convolution layer, an ResAU layer, a Crop layer, a transposed convolution layer, a Crop layer, an ResAU layer, a convolution layer, an ResAU layer, a convolution layer, a Pixshuffle layer, and a Crop layer;
in response to the synthesis transformation network comprising a high-complexity synthesis transformation network, the high-complexity synthesis transformation network sequentially comprises: a Residual Block (RB) layer, a transposed convolution layer, a ResAU layer, a Crop layer, a transposed convolution layer, a Convolution-base Attention Block (CAB) layer, a Crop layer, a ResAU layer, a convolution layer, a Pixshuffle layer, a Transformer-based attention block (TAM) layer, a Crop layer, a ResAU layer, a transposed convolution layer, and a Crop layer.

20. A picture decoding method, comprising:
obtaining a coefficient hyperparameter feature corresponding to a current picture block;
inputting the coefficient hyperparameter feature into a mean hyperparameter decoding network to obtain an initial mean feature corresponding to the current picture block, and determining a target mean feature corresponding to the current picture block based on the initial mean feature;
determining a reconstructed feature corresponding to the current picture block based on the target mean feature and a residual feature corresponding to the current picture block; and
determining a reconstructed picture block corresponding to the current picture block based on the reconstructed feature;
wherein an activation layer comprised in the mean hyperparameter decoding network performs non-linear adjustment on features by using a target activation function clamped up and down, wherein the target activation function corresponds to a fixed upper threshold and a fixed lower threshold, and an output feature of the activation layer is less than or equal to the fixed upper threshold, and the output feature of the activation layer is greater than or equal to the fixed lower threshold.

21. The method according to claim 20, wherein
the obtaining the coefficient hyperparameter feature corresponding to the current picture block comprises: decoding a first bitstream corresponding to the current picture block, to obtain a coefficient hyperparameter feature corresponding to the current picture block;
before the determining the reconstructed feature corresponding to the current picture block based on the target mean feature and the residual feature corresponding to the current picture block, the method further comprises:
determining a probability distribution parameter based on the coefficient hyperparameter feature, and decoding a second bitstream corresponding to the current picture block based on the probability distribution parameter, to obtain the residual feature corresponding to the current picture block.

22. The method according to claim 20, wherein
the fixed upper threshold is 6, and the fixed lower threshold is 0.

23. The method according to any one of claims 20 to 22, wherein the mean hyperparameter decoding network comprises: at least one convolution layer, at least one activation layer, a transposed convolution layer, and a clipping Crop layer.

24. The method according to claim 23, wherein the mean hyperparameter decoding network sequentially comprises: a convolution layer, a transposed convolution layer, a Crop layer, an activation layer, a convolution layer, an activation layer, and a convolution layer.

25. The method according to any one of claims 20 to 24, wherein the target activation function is a Relu6 activation function.

26. A picture decoding method, comprising:
obtaining a coefficient hyperparameter feature corresponding to a current picture block;
inputting the coefficient hyperparameter feature into a mean hyperparameter decoding network to obtain an initial mean feature corresponding to the current picture block, and determining a target mean feature corresponding to the current picture block based on the initial mean feature;
determining a reconstructed feature corresponding to the current picture block based on the target mean feature and a residual feature corresponding to the current picture block; and
inputting the reconstructed feature into a synthesis transformation network, to obtain a reconstructed picture block corresponding to the current picture block;
wherein an activation layer comprised in the mean hyperparameter decoding network and an activation layer comprised in the synthesis transformation network perform non-linear adjustment on features by using a target activation function clamped up and down, wherein the target activation function corresponds to a fixed upper threshold and a fixed lower threshold, and an output feature of the activation layer is less than or equal to the fixed upper threshold, and the output feature of the activation layer is greater than or equal to the fixed lower threshold.

27. The method according to claim 26, wherein the synthesis transformation network comprises a non-linear residual network layer, and the non-linear residual network layer sequentially comprises an activation layer, a processing layer and a skip connection structure; wherein in response to one activation layer existing and the processing layer comprising a plurality of network layers, all the network layers are located behind the activation layer.

28. The method according to claim 27, wherein
the synthesis transformation network comprises a residual ResAU layer, and the ResAU layer is used as the non-linear residual network layer;
wherein the ResAU layer sequentially comprises: an activation layer, a group convolution layer, and a convolution layer;
wherein an input feature of the ResAU layer is connected to an output feature of the convolution layer;
wherein the input feature of the ResAU layer sequentially passes through the activation layer, the group convolution layer, and the convolution layer, to obtain a convolved feature; and a feature multiplication operation and a feature addition operation are sequentially performed on the input feature of the ResAU layer and the convolved feature, to obtain an output feature of the ResAU layer.

29. The method according to claim 28, wherein
in response to the synthesis transformation network comprising a low-complexity synthesis transformation network, the low-complexity synthesis transformation network sequentially comprises: a Lightweight Residual Block (LRB) layer, a convolution layer, an upsampling Pixshuffle layer, a ResAU layer, a clipping Crop layer, a convolution layer, a Pixshuffle layer, a Crop layer, a ResAU layer, a convolution layer, a ResAU layer, a convolution layer, a Pixshuffle layer, and a Crop layer;
in response to the synthesis transformation network comprising a medium-complexity synthesis transformation network, the medium-complexity synthesis transformation network sequentially comprises: an LRB layer, a transposed convolution layer, an ResAU layer, a Crop layer, a transposed convolution layer, a Crop layer, an ResAU layer, a convolution layer, an ResAU layer, a convolution layer, a Pixshuffle layer, and a Crop layer;
in response to the synthesis transformation network comprising a high-complexity synthesis transformation network, the high-complexity synthesis transformation network sequentially comprises: a Residual Block (RB) layer, a transposed convolution layer, a ResAU layer, a Crop layer, a transposed convolution layer, a Convolution-base Attention Block (CAB) layer, a Crop layer, a ResAU layer, a convolution layer, a Pixshuffle layer, a Transformer-based attention block (TAM) layer, a Crop layer, a ResAU layer, a transposed convolution layer, and a Crop layer.

30. The method according to claim 26, wherein the mean hyperparameter decoding network comprises: at least one convolution layer, at least one activation layer, a transposed convolution layer, and a clipping Crop layer.

31. The method according to claim 30, wherein the mean hyperparameter decoding network sequentially comprises: a convolution layer, a transposed convolution layer, a Crop layer, an activation layer, a convolution layer, an activation layer, and a convolution layer.

32. A decoding apparatus, applied to a decoder, the apparatus comprising:
a decoding module, configured to decode a first bitstream corresponding to a current picture block, to obtain a coefficient hyperparameter feature corresponding to the current picture block; determine a probability distribution parameter based on the coefficient hyperparameter feature, and decode a second bitstream corresponding to the current picture block based on the probability distribution parameter, to obtain a residual feature corresponding to the current picture block;
a determining module, configured to determine a target mean feature corresponding to the current picture block based on the coefficient hyperparameter feature; determine a reconstructed feature corresponding to the current picture block based on the target mean feature and the residual feature; and
an obtaining module, configured to input the reconstructed feature into a synthesis transformation network to obtain a reconstructed picture block corresponding to the current picture block, wherein the synthesis transformation network comprises a non-linear residual network layer, the non-linear residual network layer comprises at least an activation layer and a skip connection structure, and an output feature of the activation layer is less than or equal to an upper threshold, and/or the output feature of the activation layer is greater than or equal to a lower threshold.

33. A decoding apparatus, applied to a decoder, the apparatus comprising:
a decoding module, configured to decode a first bitstream corresponding to a current picture block, to obtain a coefficient hyperparameter feature corresponding to the current picture block; input the coefficient hyperparameter feature into a probability hyperparameter decoding network to obtain a probability distribution parameter, and decode a second bitstream corresponding to the current picture block based on the probability distribution parameter, to obtain a residual feature corresponding to the current picture block;
a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and the residual feature; and
an obtaining module, configured to determine a reconstructed picture block corresponding to the current picture block based on the reconstructed feature;
wherein the probability hyperparameter decoding network comprises an activation layer, and an output feature of the activation layer is less than or equal to an upper threshold, and/or the output feature of the activation layer is greater than or equal to a lower threshold;
and/or the mean hyperparameter decoding network comprises an activation layer, and an output feature of the activation layer is less than or equal to an upper threshold, and/or the output feature of the activation layer is greater than or equal to a lower threshold.

34. A picture decoding apparatus, applied to a decoder, the apparatus comprising:
a decoding module, configured to decode a first bitstream corresponding to a current picture block, to obtain a coefficient hyperparameter feature corresponding to the current picture block; determine a probability distribution parameter based on the coefficient hyperparameter feature, and decode a second bitstream corresponding to the current picture block based on the probability distribution parameter, to obtain a residual feature corresponding to the current picture block;
a determining module, configured to input the coefficient hyperparameter feature into a mean hyperparameter decoding network, to obtain an initial mean feature corresponding to the current picture block, and determine a target mean feature corresponding to the current picture block based on the initial mean feature, wherein the mean hyperparameter decoding network sequentially comprises: a first processing layer, an upsampling layer configured to perform an upsampling operation, a clipping layer, and a second processing layer, wherein an output feature of the second processing layer is used as the initial mean feature; and determine a reconstructed feature corresponding to the current picture block based on the target mean feature and the residual feature; and
an obtaining module, configured to determine a reconstructed picture block corresponding to the current picture block based on the reconstructed feature.

35. A picture decoding apparatus, comprising:
a decoding module, configured to obtain a coefficient hyperparameter feature corresponding to a current picture block;
a determining module, configured to determine a target mean feature corresponding to the current picture block based on the coefficient hyperparameter feature; and determine a reconstructed feature corresponding to the current picture block based on the target mean feature and a residual feature corresponding to the current picture block; and
an obtaining module, configured to input the reconstructed feature into a synthesis transformation network, to obtain a reconstructed picture block corresponding to the current picture block; wherein an activation layer comprised in the synthesis transformation network performs non-linear adjustment on features by using a target activation function clamped up and down, wherein the target activation function corresponds to a fixed upper threshold and a fixed lower threshold, and an output feature of the activation layer is less than or equal to the fixed upper threshold, and the output feature of the activation layer is greater than or equal to the fixed lower threshold.

36. A picture decoding apparatus, comprising:
a decoding module, configured to obtain a coefficient hyperparameter feature corresponding to a current picture block;
a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and a residual feature corresponding to the current picture block; and
an obtaining module, configured to determine a reconstructed picture block corresponding to the current picture block based on the reconstructed feature;
wherein an activation layer comprised in the mean hyperparameter decoding network performs non-linear adjustment on features by using a target activation function clamped up and down, wherein the target activation function corresponds to a fixed upper threshold and a fixed lower threshold, and an output feature of the activation layer is less than or equal to the fixed upper threshold, and the output feature of the activation layer is greater than or equal to the fixed lower threshold.

37. A picture decoding apparatus, comprising:
a decoding module, configured to obtain a coefficient hyperparameter feature corresponding to a current picture block;
a determining module, configured to input the coefficient hyperparameter feature into a mean hyperparameter decoding network to obtain an initial mean feature corresponding to the current picture block, and determine a target mean feature corresponding to the current picture block based on the initial mean feature; and determine a reconstructed feature corresponding to the current picture block based on the target mean feature and a residual feature corresponding to the current picture block; and
an obtaining module, configured to input the reconstructed feature into a synthesis transformation network, to obtain a reconstructed picture block corresponding to the current picture block;
wherein an activation layer comprised in the mean hyperparameter decoding network and an activation layer comprised in the synthesis transformation network perform non-linear adjustment on features by using a target activation function clamped up and down, wherein the target activation function corresponds to a fixed upper threshold and a fixed lower threshold, and an output feature of the activation layer is less than or equal to the fixed upper threshold, and the output feature of the activation layer is greater than or equal to the fixed lower threshold.

38. A decoding device, comprising one or more processors and a machine-readable storage medium, wherein the machine-readable storage medium stores machine-executable instructions executable by the one or more processors;
the one or more processors are configured to execute the machine-executable instructions to implement the method according to any one of claims 1 to 31.

39. A machine-readable storage medium, storing a plurality of computer instructions, and when the computer instructions are executed by one or more processors, the method according to any one of claims 1 to 31 is implemented.

40. A computer program, wherein the computer program, when executed by one or more processors, implements the method according to any one of claims 1 to 31.
